(19) Europäisches Patentamt
European Patent Office
Office européen des brevets

(11) **EP 3 563 475 B1**

(12) # EUROPÄISCHE PATENTSCHRIFT

(45) Veröffentlichungstag und Bekanntmachung des Hinweises auf die Patenterteilung:
**19.01.2022 Patentblatt 2022/03**

(21) Anmeldenummer: **17818583.1**

(22) Anmeldetag: **21.12.2017**

(51) Internationale Patentklassifikation (IPC):
**H02M 3/155** (2006.01) **H02M 1/42** (2007.01)
**H02M 3/158** (2006.01) **H02M 1/00** (2006.01)

(52) Gemeinsame Patentklassifikation (CPC):
**H02M 3/155; H02M 1/4225; H02M 1/4233; H02M 3/1582;** H02M 1/0048; Y02B 70/10

(86) Internationale Anmeldenummer:
**PCT/EP2017/084191**

(87) Internationale Veröffentlichungsnummer:
**WO 2018/122116 (05.07.2018 Gazette 2018/27)**

(54) **STROMRICHTERSCHALTUNG UND VERFAHREN ZUR STEUERUNG DERSELBEN**

POWER CONVERTER CIRCUIT AND METHOD FOR CONTROLLING SAME

CIRCUIT CONVERTISSEUR ET PROCÉDÉ PERMETTANT DE LE COMMANDER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.12.2016 DE 102016125796**

(43) Veröffentlichungstag der Anmeldung:
**06.11.2019 Patentblatt 2019/45**

(73) Patentinhaber: **Fraunhofer-Gesellschaft zur Förderung der angewandten Forschung e.V.
80686 München (DE)**

(72) Erfinder:
• **YU, Zhe
  24558 Henstedt-Ulzburg (DE)**
• **KAPELS, Holger
  23843 Bad Oldesloe (DE)**
• **HOFFMANN, Klaus F.
  22523 Hamburg (DE)**

(74) Vertreter: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) Entgegenhaltungen:
EP-A1- 1 381 135       CN-A- 103 326 576
JP-A- 2011 130 571    US-A1- 2005 110 471
US-A1- 2012 326 691   US-A1- 2013 234 613
US-A1- 2015 070 952

• YU ZHE ET AL: "A novel control concept for high-efficiency power conversion with the bidirectional non-inverting buck-boost converter", 2016 18TH EUROPEAN CONFERENCE ON POWER ELECTRONICS AND APPLICATIONS (EPE'16 ECCE EUROPE), JOINTLY OWNED BY IEEE-PELS AND EPE ASSOCIATION, 5. September 2016 (2016-09-05), Seiten 1-10, XP032985026, DOI: 10.1109/EPE.2016.7695309 [gefunden am 2016-10-25]
• Zhe Yu ET AL: "High Efficiency Bidirectional DC-DC Converter with Wide Input and Output Voltage Ranges for Battery Systems", , 21. Mai 2015 (2015-05-21), XP055335994, Gefunden im Internet: URL:http://ieeexplore.ieee.org/ielx7/71488 16/7148817/07149059.pdf?tp=&arnumber=71490 59&isnumber=7148817 [gefunden am 2017-01-17]

- **Zhe Yu ET AL: "Extreme High Efficiency Non-Inverting Buck-Boost Converter for Energy Storage Systems", , 12. Mai 2016 (2016-05-12), XP055336042, Gefunden im Internet: URL:http://ieeexplore.ieee.org/ielx7/74993 35/7499336/07499359.pdf?tp=&arnumber=74993 59&isnumber=7499336 [gefunden am 2017-01-17]**

**Beschreibung**

Ausführungsbeispiele der vorliegenden Erfindung beziehen sich auf eine Stromrichterschaltung sowie auf ein Verfahren zur Steuerung derselben. Bevorzugte Ausführungsbeispiele betreffen eine leistungselektronische Stromrichtertopologie sowie zusätzliche drei Hauptvarianten. Weitere bevorzugte Ausführungsbeispiele betreffen ein hocheffizientes Steuerungskonzept dafür.

Die herkömmlichen Wechselrichtertopologien - Vollbrücke oder Halbbrücke - sind weit verbreitete Topologien für Anwendungen in der Industrie (z.B. Solarwechselrichter, Wechselrichter für USV-Anlagen, Wechselrichter für Motorsteuerung). Dennoch besitzen diese Topologien drei Nachteile:

Heutzutage können die Vollbrücken- oder Halbbrücken-Wechselrichtertopologien bei einigen Arbeitspunkten einen guten Wirkungsgrad erreichen. Allerdings besitzen sie eine schlechte Effizienz über den gesamten Arbeitsbereich. Der Grund dafür liegt hauptsächlich darin, dass bei den konventionellen Wechselrichtern die Leistungshalbleiter innerhalb einer Schaltperiode (Pulsweitenmodulation (PWM)-Periode) mindestens einmal hart geschaltet werden. Davon wird der Wirkungsgrad des Wechselrichters stark begrenzt.

Bei den konventionellen Wechselrichtertopologien springt die Lastspannung immer zwischen zwei oder drei Spannungsstufen hin und her. Die großen Spannungswechsel sind z.B. für die Isolation der Motorwicklungen sehr schlecht und können zu frühzeitigen Ausfällen führen. Bei Solarstromanlagen darf der erzeugte Wechselstrom aufgrund Oberschwingungen nicht direkt ins Stromnetz gespeist werden. Ein Ausgangsfilter ist zum Beheben der von den Spannungswechseln verursachten Oberschwingungen erforderlich. Dementsprechend erhöht sich der Aufwand des Systems.

An dieser Stelle sei auf einige Wechselrichtertopologien verwiesen, die in der Literatur veröffentlicht sind. Die Patentanmeldungen US 2015/070952 A1, US 2012/326691 A1, EP 1381135 A1, US 2013/024613 A1, US 2005/110471 A1 und CN 103326576 A zeigen alle unterschiedliche Wechselrichtertopologien. Darüber hinaus sei noch auf die Veröffentlichungen von Zhe Yu mit dem Titel "A Novel Control Concept for High-Efficiency Power Conversion with the Bidirectional Non-inverting Buck-Boost Converter" und "High-Efficiency Bidirectional DC-DC Converter with Wide Input and Output Voltage Ranges for Battery Systems" sowie "Extreme High Efficiency Non-Inverting Buck-Boost Converter for Energy Storage Systems" verwiesen. Ein zusätzlicher Stand der Technik schafft auch die JP 2011 13057 A.

Bei den konventionellen einphasigen Wechselrichtern dürfen die Eingangsmasse (Zwischenkreisspannungsseite) und die Ausgangsmasse (Lastseite) nicht gleichzeitig geerdet werden. Eine davon muss schwebend bleiben. Leider sind die Erdung und die schwebende Masse (engl. Floating Ground) in der Tat immer über kleine parasitäre Kapazitäten - z.B. Solarmodule - gekoppelt. Dies kann bei hochfrequenten Spannungswechseln zu einem unerwünschten Verschiebungsstrom führen. Um diesen Störstrom zu beseitigen ist wiederum ein aufwendiges Filter notwendig.

Im Bereich der DC/DC-Wandler werden je nach Anwendungsgebiet unidirektionale Hoch- oder Tiefsetzsteller-Topologien bzw. bidirektionale Brückenschaltungen eingesetzt. Diese finden Anwendung in PFC (power factor correction)-Stufen wie auch in bidirektionalen Spannungswandlern im Bereich der Automobilindustrie und Batterie-Ladegeräten. Aufgrund der Rückspeisefähigkeit nimmt der Anteil der bidirektionalen Brückenschaltungen stetig zu. Die bidirektionalen Brückenschaltungen, typischerweise als H-Brücke ausgeführt, besitzen jedoch den folgenden, gleichen Nachteil wie Wechselrichter-Topologien, nämlich einen schlechten Gesamtwirkungsgrad. Heutzutage können Vollbrücken-DC/DC-Wandlertopologien bei einigen wenigen Arbeitspunkten einen guten Wirkungsgrad erreichen. Dieser kann jedoch nicht über den gesamten Arbeitsbereich erzielt werden, da bei den konventionellen DC/DC-Wandlertopologien die Leistungshalbleiter innerhalb einer Schaltperiode (Pulsweitenmodulation (PWM)-Periode) mindestens einmal hart geschaltet werden. Dieses begrenzt den Wirkungsgrad des DC/DC-Wandlers erheblich, so dass sie über den gesamten Arbeitsbereich nur eine schlechte Effizienz erreichen.

Folglich besteht ein Bedarf an Wechselrichtertopologien und Steuerungskonzepten für diese, um die Funktionen, Einsetzbarkeit und den Wirkungsgrad von DC/DC- Topologien (Gleichspannungs-Gleichspannungs-Wandler) und DC/AC-Topologien (Gleichspannungs-Wechselspannungs-Richtung) zu verbessern. Aufgabe der vorliegenden Erfindung ist es, somit eine Stromrichterschaltung zu schaffen, die einen verbesserten Kompromiss aus Gesamtwirkungsgrad, Spannungswechsel, hohe Oberschwingungen und Massenankopplung schafft.

Die Aufgabe wird durch die unabhängigen Patentansprüche gelöst. Alle technischen Merkmale des unabhängigen Anspruchs sind erforderlich und nicht optional, unabhängig von dem widersprechenden Aussagen in den folgenden Textpassagen. Bevorzugte Ausführungsformen werden in den abhängigen Ansprüchen beschrieben.

Die vorliegende Erfindung schafft eine Stromrichterschaltung mit einem Spannungseingang, einem Spannungsausgang und einer Schaltung umfassend eine Speicherdrossel und mindestens vier Leistungsschaltern. Der Spannungseingang weist einen ersten und einen zweiten Potentialabgriff auf, wobei zwischen diesen ein Eingangskondensator angeordnet ist. Der Spannungsausgang weist ebenfalls einen ersten und einen zweiten Potenzialabgriff auf, wobei ein Ausgangskondensator zwischen denselben angeordnet ist. Die ersten Potenzialabgriffe sind direkt miteinander verbunden, wobei auf dieselben beispielsweise ein Bezugspotenzial von z. B. 0 V anliegt. Zwischen den zweiten Potenzialabgriffen ist in schaltbarer Weise die Speicherdrossel angeordnet, wobei hier aufseiten des Spannungseingangs ein erster der vier Leistungsschalter vorgesehen ist und ein aufseiten des Spannungsausgangs ein vierter der vier Leistungsschalter vorgesehen ist, so dass die Speicherdrossel in schaltbarer Weise mit den ersten Potenzialabgriffen des Eingangs und des Ausgangs koppelbar ist. Der dritte der vier Leistungsschalter verbindet eine erste Seite der Speicherdrossel (das kann entweder die aufseiten des Spannungseingangs oder die aufseiten des Spannungsausgangs sein) in schaltbarer Weise mit einem zweiten Potenzialabgriff entweder des Spannungsausgangs oder des Spannungseingangs, in der Regel mit dem gegenüberliegenden zweiten Potenzialabgriff, so dass die Speicherdrossel "gebypasst" wird. Der zweite der vier Leistungsschalter koppelt die zweite Seite (d. h. die andere Seite) der Speicherdrossel in schaltbarer Weise mit den ersten Potenzialabgriffen.

Der vorliegenden Erfindung liegt die Erkenntnis zugrunde, dass auch durch die Basistopologie, wie sie oben erläutert ist, ein Konverter geschaffen werden kann. Dieser Konverter umfasst zumindest vier Leistungsschalter, wie z. B. Leistungshalbleiter, und eine Speicherdrossel (sowie Ein- und Ausgang mit entsprechenden Kondensatoren). Die Speicherdrossel ist durch zwei Leistungsschalter in schaltbarere Weise mit dem Ein- und Ausgang verbindbar und kann durch einen weiteren Leistungsschalter gebypasst werden kann. Der vorliegende Konverter hat sowohl eingangs- als auch ausgangsseitig ein Bezugspotential, d.h. also keine schwebende Masse, so dass es vorteilhafterweise nicht zu unerwünschten Verschiebungsströmen kommen kann. Des Weiteren ist der vorliegende Konverter durch die Modulation der Phasenverschiebung und der Schaltfrequenz derart geschickt ansteuerbar, dass ein guter Gesamtwirkungsgrad ohne große Spannungswechsel und ohne hohe Oberschwingungen erreicht werden kann. Dadurch ist der ZVS-entlastete Betrieb der vier Leistungsschalter zu gewährleisten. Zugleich können die weiteren Verluste, inklusive der Durchlassverluste in den Schaltern, die Verluste in der Speicherdrossel sowie die Verluste in den Ein- und Ausgangskondensatoren minimiert werden.

Die Stromrichterschaltung weist eine Steuerung auf, die ausgebildet ist, den ersten und den vierten Leistungsschalter gegenüber dem zweiten und dritten Leistungsschalter komplementär anzusteuern. Hierdurch kann ein Tastverhältnis demoduliert werden, das sich an folgender Formel orientiert: $\frac{U_A}{U_E} = \frac{2D-1}{D}$.

$U_A$ stellt die Spannung zwischen den zwei Potenzialabgriffen des Spannungsausgangs dar, während $U_E$ die Spannung zwischen den zwei Potenzialabgriffen des Spannungseingangs darstellt. Entsprechend weiterer Ausführungsbeispielen wird der erste Leistungshalbleiter komplementär gegenüber dem zweiten angesteuert und der vierte komplementär gegenüber dem dritten. Hierbei kann entsprechend wiederum weiteren Ausführungsbeispielen der Schaltpunkt zur Schaltung vom vierten auf den dritten bzw. vom dritten auf den vierten phasenverschoben um eine Phasenverschiebung $\alpha$ gegenüber dem Schaltpunkt zwischen dem ersten und zweiten bzw. zweiten und ersten Leistungsschalter sein. Bevorzugt ist entsprechend weiteren Ausführungsbeispielen die Aktivierungsdauer für die ersten und vierten Leistungsschalter gleich, wobei die Aktivierungsdauer der zweiten und dritten Leistungsschalter gleich ist.

Die Stromrichterschaltung weist auch eine Steuerung auf, die ausgebildet ist, um die vier Leistungsschalter so anzusteuern, dass diese entsprechend einer vorgegebenen Reihenfolge aktiviert werden. Hierbei wird dann der zweite Leistungsschalter vor dem vierten Leistungsschalter, der vierte Leistungsschalter vor dem ersten Leistungsschalter und der erste Leistungsschalter vor dem dritten Leistungsschalter aktiviert. Bei dieser Variante kann entsprechend weiteren Ausführungsbeispielen auch die Ansteuerung derart erfolgen, dass folgende Bedingungen erfüllt sind:

$$min_x \, l_{L,eff}{}^2(x), x = \{x_1 = \alpha, x_2 = f\}$$

mit Nebenbedingungen

- $$max(-D, -(1-D)) < x_1 \leq 0$$

- $$max(i_L(t_0), i_L(t_1)) \leq -l_{ent,min}$$

- $$min(i_L(t_2), i_L(t_3)) \geq -l_{ent,min}.$$

Die Steuerung ist weiterhin ausgebildet, um die vier Leistungsschalter in einer anderen Reihenfolge, nämlich wie folgt zu aktivieren: der erste wird vor dem vierten, der vierte vor dem zweiten und der zweite vor dem dritten Leistungsschalter aktiviert. Hierbei kann dann die Optimierungsbedingung wie folgt lauten:

$$min_x \, l_{L,eff}{}^2(x), x = \{x_1 = \alpha, x_2 = f\}$$

mit Nebenbedingungen

$$0 \leq x_1 < \min(D, 1 - D)$$

$$\max(i_L(t_0), i_L(t_1)) \leq -l_{ent,min}$$

$$i_L(t_2) \geq l_{ent,min}.$$

Bei diesem Beispiel ist es entsprechend weiteren Ausführungsbeispielen auch sinnvoll, dass die Aktivierungsdauer der ersten und dritten Leistungsschalter gleich ist, während die Aktivierungsdauer der zweiten und vierten Leistungsschalter gleich ist.

Die Stromrichterschaltung kann auf die Ansteuerung entsprechend folgender Reihenfolge vornehmen: der erste wird vor dem vierten Leistungsschalter aktiviert, der vierte vor dem dritten Leistungsschalter und der dritte vor dem zweiten Leistungsschalter. Hierbei kann die Optimierung ausgehend von folgenden Bedingungen vorgenommen werden:

$$\min_x l_{L,eff}{}^2(x), x = \{x_1 = \alpha, x_2 = f, x_3 = D_1, x_4 = D_2\}$$

mit Nebenbedingungen

$$\frac{U_A}{U_E} = \frac{x_3 + x_4 - 1}{x_4}$$

$$0 \leq x_1 \leq D_1 - D_2$$

$$i_L(t_1) \leq -l_{ent,min}$$

$$i_L(t_2) \geq l_{ent,min}$$

Weiterhin kann die Steuerung die Leistungsschalter entsprechend nachfolgender Reihenfolge ansteuern: Der vierte wird vor dem ersten Leistungsschalter aktiviert, der erste vor dem zweiten und der zweite vor dem dritten. Hierbei wäre die Optimierung ausgehend von folgender Bedingung möglich:

$$\min_x l_{L,eff}{}^2(x), x = \{x_1 = \alpha, x_2 = f, x_3 = D_1, x_4 = D_2\}$$

mit Nebenbedingungen

$$\frac{U_A}{U_E} = \frac{x_3 + x_4 - 1}{x_4}$$

$$D_1 - D_2 \leq x_1 \leq 0$$

$$\max(i_L(t_0), i_L(t_1)) \leq -l_{ent,min}$$

$$\min(i_L(t_2), i_L(t_3)) \geq l_{ent,min}$$

Ausführungsbeispiele schaffen eine Stromrichterschaltung mit einer Steuerung, die ausgebildet ist, das Tastverhältnis zu modulieren, wobei durch die Modulation des Tastverhältnisses zwischen zwei Modi hin und her geschaltet werden kann. Der erste Modus ermöglicht eine DC/DC-Wandlung (Gleichspannung sowohl am Spannungseingang als auch am Ausgang), währen der zweite Modus eine DC/AC-Wandlung (Gleichspannung am Spannungseingang und Wechselspannung am Spannungsausgang) ermöglicht. Die oben erläuterte Stromrichtertopologie kann auch entsprechend weiteren Ausführungsbeispielen erweitert sein. So wäre es entsprechend einem Ausführungsbeispiel möglich, dass ein weiterer Leistungsschalter zwischen der ersten Seite der Speicherdrossel und den ersten Potenzialabgriffen vorgesehen ist.

Entsprechend weiteren Ausführungsbeispielen kann die Stromrichterschaltung auch um einen fünften und sechsten Leistungsschalter, z. B. am Spannungseingang oder am Spannungsausgang erweitert sein. Im Fall des fünften und sechsten Leistungsschalters am Spannungsausgang ist der fünfte und sechste Leistungsschalter derart mit dem vierten Leistungsschalter gekoppelt, dass der vierte Leistungsschalter in schaltbarer Weise über den fünften Leistungsschalter mit dem zweiten Potenzialabgriff des Spannungsausgangs gekoppelt ist und über den sechsten Leistungsschalter in schaltbarer Weise mit dem ersten Potenzialabgriff des Spannungsausgangs gekoppelt ist. Hierbei könnte entsprechend Ausführungsbeispielen die Steuerung derart ausgelegt sein, dass der erste und vierte Leistungsschalter komplementär zum zweiten und dritten Leistungsschalter angesteuert werden, während der fünfte Leistungsschalter geschlossen und der sechste Leistungsschalter offen ist, um so ein Übersetzungsverhältnis von minus unendlich bis 1 zu ermöglichen. Alternativ wäre es auch denkbar, dass der erste und sechste Leistungsschalter komplementär zum zweiten und fünften geschaltet wird, während der vierte geschlossen und der dritte offen ist. Hierbei wird dann ein Übersetzungsverhältnis von 0 bis +∞ ermöglicht.

In dem Fall, bei dem der fünfte und sechste Leistungsschalter auf Eingangsseite angeordnet ist, ist das so zu realisieren, dass der erste Leistungsschalter über den fünften Leistungsschalter mit dem zweiten Potenzialabgriff koppelbar ist, während der erste Leistungsschalter über den sechsten Leistungsschalter mit dem ersten Potenzialabgriff koppelbar ist. Hierbei kann dann die Ansteuerung so sein, dass der vierte und erste Leistungsschalter komplementär zu dem dritten und zweiten geschaltet wird, während der fünfte Leistungsschalter geschlossen und der sechste Leistungsschalter offen ist, um so eine Übersetzungsverhältnis von minus unendlich bis 1 zu ermöglichen.

Entsprechend weiteren Ausführungsbeispielen kann die Stromrichterschaltung auch zu einer dreiphasigen Strömung der Schaltung erweitert sein, wobei eine derartige dreiphasige Stromrichterschaltung dann drei parallel geschaltete Stromrichterschaltungen, wie sie oben beschrieben sind, umfasst. Hierbei werden alle ersten Potenzialabgriffe der Spannungseingänge und Spannungsausgänge zusammengeschaltet, die dann die Nullleiter bilden, während die jeweils zweiten Potenzialabgriffe der Spannungsausgänge die jeweiligen Phasen bilden. Die zweiten Potenzialabgriffe der Spannungseingänge sind zusammengeschaltet.

Entsprechend einer weiteren Variante kann auch eine dreiphasige Stromrichterschaltung dadurch erreicht werden, dass eine der oben beschriebenen Stromrichterschaltungen um zwei weitere Pfade erweitert sind.

Ein Verfahren zur Steuerung einer Stromrichterschaltung wird gemäß einem der Ansprüche 1-13 geschaffen. An dieser Stelle sei angemerkt, dass die oben erläuterten Varianten der Ansteuerung, z. B. bezüglich der Reihenfolge oder bezüglich der Aktivierungsdauer durch ein weiteres Verfahren ermöglicht sein kann. Das Verfahren kann entsprechend wiederum weiteren Ausführungsbeispielen auch durch ein Computerprogramm realisiert sein.

Weiterbildungen sind in den Unteransprüchen definiert. Ausführungsbeispiele der vorliegenden Erfindung werden nachfolgend anhand der beiliegenden Zeichnungen erläutert. Es zeigen:

Fig. 1a        ein schematisches Blockschaltbild eines Konverters gemäß einem Basisausführungsbeispiel;

Fig. 1b        ein schematisches Diagramm zur Illustration der Ansteuerung des Konverters aus Fig. 1a gemäß einem Ausführungsbeispiel;

Fig. 1c        ein schematisches Diagramm eines Spannungsübersetzungsverhältnisses ausgehend von der exemplarischen Ansteuerung aus Fig. 1b;

Fig. 1d, 1e    Simulationsergebnisse für den Konverter;

Fig. 1f-h      schematische Blockschaltbilder von erweiterten Konvertern gemäß weiteren Ausführungsbeispielen;

Fig. 2a-2d     Diagramme zur Illustration eines Ansteuerungskonzepts (Alpha 1) für vorliegende Konverter gemäß Ausführungsbeispielen;

Fig. 2e-2f     Diagramme zur Illustration eines weiteren Ansteuerungskonzepts (Alpha 2) für vorliegende Konverter gemäß Ausführungsbeispielen;

Fig. 2g-2h    Diagramme zur Illustration eines weiteren Ansteuerungskonzepts (Alpha 3) für vorliegende Konverter gemäß Ausführungsbeispielen;

Fig. 2i-2j    Diagramme zur Illustration eines weiteren Ansteuerungskonzepts (Alpha 4) für vorliegende Konverter gemäß Ausführungsbeispielen;

Fig. 2k-2l    Diagramme zur Illustration eines weiteren Ansteuerungskonzepts (Alpha 5) für vorliegende Konverter gemäß Ausführungsbeispielen;

Fig. 3a-3d    Simulationsergebnisse zur Illustration des Wirkungsgrads von vorliegenden Konvertern;

Fig. 3e    ein Diagramm zur Illustration des Ansteuerkonzepts "hartschaltende Variante $\alpha 1$" ohne Berücksichtigung der Totzeiten zusammen mit den resultierenden Vorteilen;

Fig. 4a, 4b    schematische Blockschaltbilder von erweiterten Konvertern für den dreiphasigen Betrieb;

Fig. 5a, 5b    ein schematisches Blockschaltbild einer Variante des vorliegenden Konverters gemäß einem Ausführungsbeispiel zusammen mit einem schematischen Diagramm zur Illustration des Übersetzungsverhältnisses dieser Variante;

Fig. 6a-c    eine schematisches Blockschaltbild einer zweiten Variante des vorliegenden Konverters gemäß einem weiteren Ausführungsbeispiel zusammen mit zwei Diagrammen zur Illustration des Übersetzungsverhältnisses gemäß dieser Variante 2;

Fig. 7a-c    ein schematisches Blockschaltbild einer dritten Variante des vorliegenden Konverters gemäß einem Ausführungsbeispiel zusammen mit zwei Diagrammen zur Illustration des Übersetzungsverhältnisses gemäß dieser dritten Variante;

Fig. 8a-c    ein schematisches Blockschaltbild einer vierten Variante des vorliegenden Konverters gemäß einem weiteren Ausführungsbeispiel zusammen mit zwei Diagrammen zur Illustration des Übersetzungsverhältnisses der vierten Variante;

Fig. 9a-c    ein schematisches Blockschaltbild einer fünften Variante des vorliegenden Konverters gemäß einem Ausführungsbeispiel zusammen mit zwei Diagrammen zur Illustration des Übersetzungsverhältnisses bei eben dieser fünften Variante; und

Fig. 10a-10c    Diagramme zur Illustration des DC/AC-Betriebes des vorliegenden Konverter gemäß Ausführungsbeispielen.

In der folgenden Beschreibung kann der Ausdruck "Ausführungsform", bzw. "Ausführungsbeispiel" für Gegenstände benutzt worden sein, die nicht in den Schutzumfang der Ansprüche fallen. Nur Beispiele, die alle Merkmale des unabhängigen Anspruchs enthalten, sind Teil der Erfindung und damit "Ausführungsformen", bzw. "Ausführungsbeispiele". Teile der Beschreibung die nicht in den Schutzumfang der Ansprüche fallen stellen den Stand der Technik dar und/oder dienen dem Verständnis der Erfindung.

Bevor nachfolgend Ausführungsbeispiele der vorliegenden Erfindung anhand der Fig. im Detail erläutert werden, sei darauf hingewiesen, dass gleichwirkende Elemente und Strukturen mit gleichen Bezugszeichen versehen sind, so dass die Beschreibung derer austauschbar bzw. aufeinander anwendbar ist.

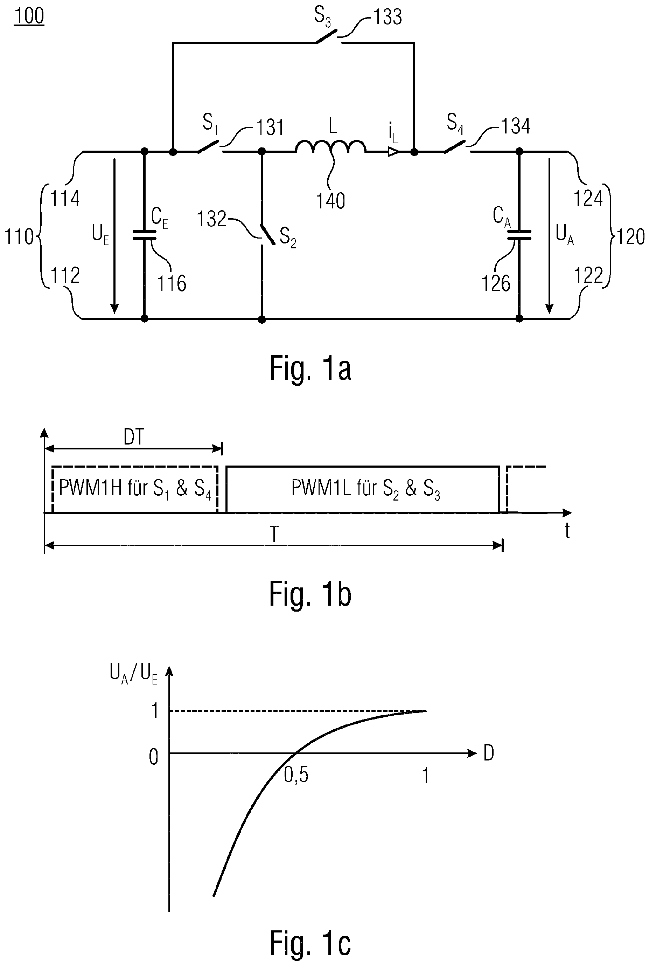

Fig. 1a zeigt eine Stromrichterschaltung 100 mit einem Spannungseingang 110 und einem Spannungsausgang 120. Zwischen dem Eingang und dem Ausgang 110 und 120 sind vier Leistungsschalter bzw. Halbleiter, wie z. B. MOSFETS, IGTBs/Dioden, RC-IGTBs) 131 bis 134 sowie eine Speicherdrossel 140 angeordnet.

Der Spannungseingang 110 weist einen ersten Potenzialabgriff 112 und einen zweiten Potenzialabgriff 114 auf. Zusätzlich weist der Spannungseingang 110 einen Eingangskondensator 116 zwischen dem ersten und dem zweiten Potenzialabgriff 112 und 114 auf.

Der Spannungsausgang 120 weist ebenfalls einen ersten Potenzialabgriff 122 und einen zweiten Potenzialabgriff 124 auf. Zusätzlich hat der Ausgang ebenfalls einen Kondensator, nämlich den Ausgangskondensator 126. Die zwei ersten Potenzialanschlüsse 112 und 122 sind direkt miteinander verbunden, so dass sie auf demselben Potenzial, z.B. dem Bezugspotenzial, wie z. B. 0 Volt liegen.

Die zwei zweiten Potenzialanschlüsse 114 und 124 sind miteinander in schaltbarer Weise über zwei der vier Leistungshalbleiter, nämlich die Leistungshalbleiter 1 und 4 (Bezugzeichen 131 und 134) sowie die Speicherdrossel 140 verbindbar. Um genau zu sein, ist der Leistungsschalter 131 zwischen der Drossel 140 und dem Potenzialabgriff 114 angeordnet, während der Schalter 134 zwischen der anderen Seite der Drossel und dem zweiten Potenzialabgriff 124 vorgesehen ist. In diesem Ausführungsbeispiel ist die Seite des Leistungsschalters 134 die sogenannte "zweite Seite", mittels welcher die Speicherdrossel 140 über den dritten Leistungsschalter 133 mit dem ersten Spannungsabgriff 114 des Spannungseingangs 110 verbunden ist. Das heißt also, dass der Leistungsschalter 133 es ermöglicht, einen Bypass von dem Potenzialabgriff 114 über die Drossel 140 zu bilden.

Die erste Seite der Speicherdrossel 140 (aufseiten des Leistungsschalters 131) ist in schaltbarer Weise über den Leistungsschalter 132 (zweiter Schalter) mit dem ersten Potenzialabgriff 112 bzw. 122 des Eingangs 110 bzw. Ausgangs 120 verbunden. An dieser Stelle sei angemerkt, dass die erste und zweite Seite der Speicherdrossel 140 auch vertauscht sein können, so dass der Bypass nicht von dem Abgriff 114 über die Drossel 140 erfolgt, sondern von dem Abgriff 124 über die Drossel 140. Hier wäre dann auch der Knoten, über welchem der Leistungsschalter 132 mit der Drossel 140 verbunden ist, ebenfalls der andere. In einem derartigen Fall wären nicht nur die zwei Schalter geändert, sondern auch die Ansteuerung derselben.

Die Topologie des vorliegenden Konverters 100 hat den Vorteil, dass Eingang 110 und Ausgang 120 bzw. um genau zu sein, die ersten Potenzialabgriffe 112 und 122 galvanisch miteinander verbunden sind. Folglich dürfte die Eingangs- und Ausgangsmasse gleichzeitig geerdet werden. Dies vermeidet eine schwebende Masse. Dementsprechend wird der Aufwand des Systems stark reduziert.

Nachfolgend wird die Funktionsweise des oben strukturell erläuterten Konverters 100 erläutert. Ausgehend von einer an dem Spannungseingang 110 anliegenden Spannung $U_E$, insbesondere einer Gleichspannung, wird an dem Spannungsausgang 120 eine Ausgangsspannung $U_A$ bereitgestellt. Vorausgesetzt hierfür ist eine entsprechende Ansteuerung der Leistungsschalter $S_1$ bis $S_4$, wie sie beispielsweise in Fig. 1b dargestellt ist.

Fig. 1b zeigt für ein Zeitintervall T die Ansteuerung der Schalter $S_1$ bis $S_4$ (entsprechend den Schaltern 131 bis 134). Hierbei werden die Schalter $S_1$ und $S_4$ (131 und 134) komplementär zu den Schaltern $S_2$ und $S_3$ (132 und 133) geschaltet. Das Umschalten erfolgt nach der Zeit DT, wie anhand des Blocks PWM1H für $S_1$ und $S_4$ deutlich wird. Danach werden die Schalter $S_2$ und $S_3$ in dem Block PWM1L aktiviert. Die Zeitdauer DT bzw. allgemein das Tastverhältnis D (Verhältnis zwischen PWM1H und PWM1L) hat Einfluss auf das Spannungsübersetzungsverhältnis, wie Fig. 1c zeigen wird.

Fig. 1c zeigt das Spannungsübersetzungsverhältnis abhängig von dem Tastgrad D. Wie zu erkennen ist, variiert die Ausgangsspannung $U_A$ in Abhängigkeit von dem Tastverhältnis D kontinuierlich von minus unendlich bis maximal $U_E$. Dies kann auch mittels folgender Formel ausgedrückt werden:

$$\frac{U_A}{U_E} = \frac{2D-1}{D}$$

Aus einer anderen Sicht betrachtet heißt das, dass der vorliegende Konverter 100 durch Modulation des Tastverhältnisses D sowohl als DC/DC-Wandler als auch DC/AC-Wechselrichter betrieben werden kann und daher sehr universell einsetzbar ist.

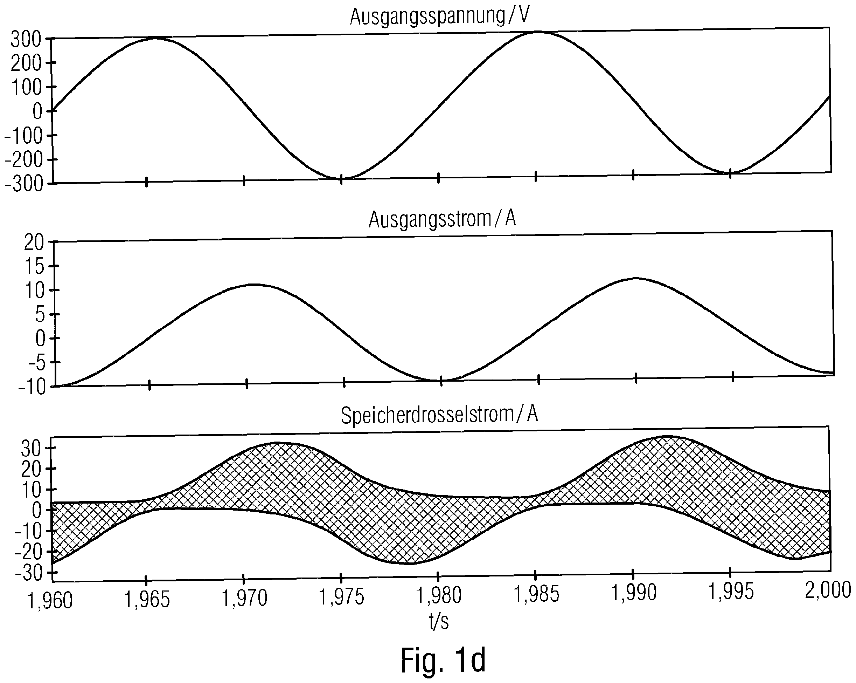

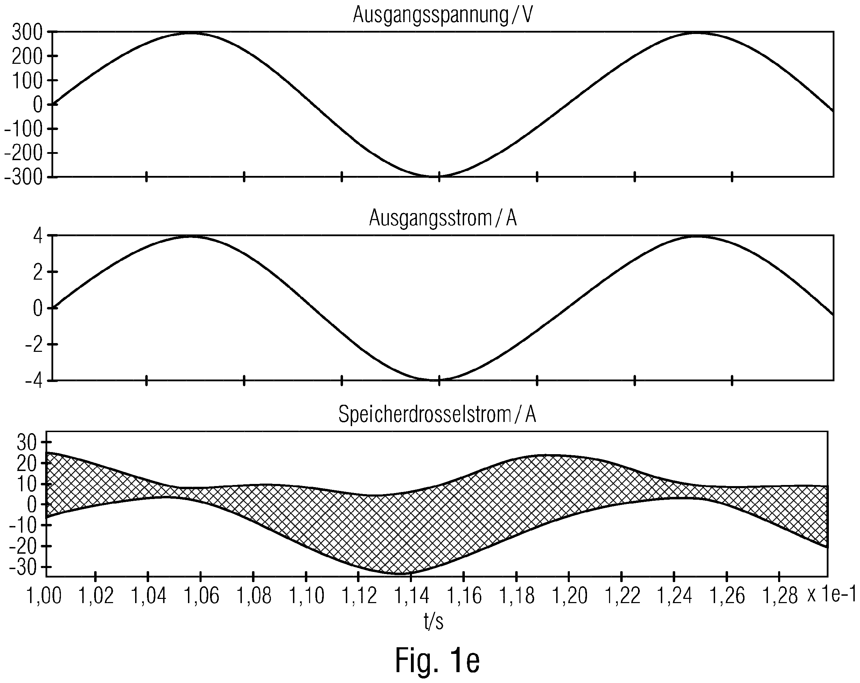

Bezug nehmend auf Fig. 1d und 1e werden zwei Simulationsergebnisse, einmal mit induktiver Last (vgl. Fig. 1d) und einmal mit Ohmscher Last (vgl. Fig. 1e) erläutert. Hierbei wird von einer Eingangsspannung $U_E$ von 360 Volt, bei einer Schaltfrequenz von f = 50 kHz und einer Speicherdrosseldimensionierung von L = 100 uH ausgegangen. Bei einer induktiven Last variiert die Ausgangsspannung zwischen 300 und -300 V, während der Strom zwischen -10 und +10 A variiert, wobei die Ausgangsspannung dem Strom nacheilt. Hierdurch ergibt sich dann der Speicherdrosselstrom, wie er in dem untersten Diagramm dargestellt ist. Die Frequenz des Speicherstroms ist mit beispielsweise 50kHz ist viel höher als die Frequenz der Ausgangsspannung (50Hz). Für diesen ergibt sich bei induktiver Last ein anderer Verlauf im Vergleich zur Ohmschen Last, welche in Fig. 1e dargestellt ist.

Fig. 1e zeigt wiederum die Ausgangsspannung und den Ausgangsstrom, wobei sich diese im Wesentlichen synchron zueinander verhalten. Ausgehend von dem Ausgangsstrom und der Ausgangsspannung ergibt sich wiederum der Speicherdrosselstrom, der allerdings im Vergleich zur induktiven Last einen etwas veränderten Verlauf hat.

Mit Verwendung der unten vorgestellten Steuerungskonzepte kann der vorliegende Konverter im gesamten Leistungsbereich eine sehr hohe Effizienz erreichen. Die Kernidee der Konzepte ist die Modulation der Phasenverschiebung und der Schallfrequenz. Dadurch ist einerseits der ZVS-entlastete Betrieb der Leistungshalbleiter $S_1$ bis $S_4$ zu gewährleisten. Zugleich können die weiteren Verluste, inklusive der Durchlassverluste in den Schaltern, die Verluste in der Speicherdrossel sowie die Verluste in den Ein- und Ausgangskondensatoren minimiert werden.

Wie bereits Bezug nehmend auf Fig. 1c erläutert, kann die Ausgangsspannung $U_A$ des vorliegenden Konverters 100 in Abhängigkeit vom Tastverhältnis D minus unendlich bis max. $U_E$ variieren. Das heißt man kann mit dem vorliegenden Konverter jeden gewünschten sinusförmigen Spannungs- und Stromverlauf generieren, wie auch in den Fig.

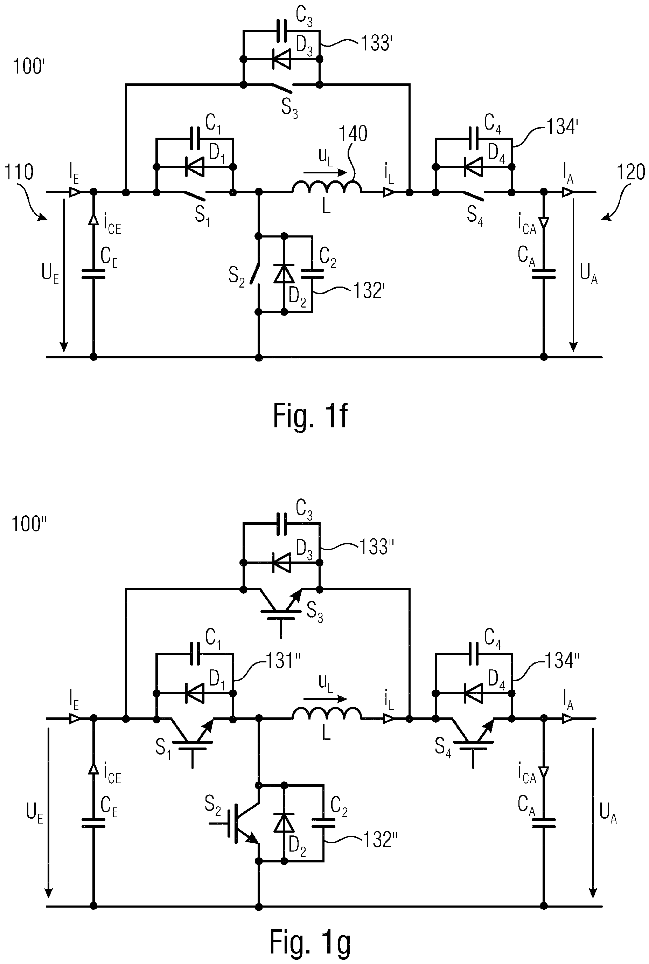

1d und 1e gezeigt wurde. Große Spannungswechsel werden auf diese Weise vermieden, wobei auch die Oberschwingungen sehr gering ausfallen. Bezug nehmend auf Fig. 1f ist noch einmal ein vorliegenden Konverter 100' illustriert, der im Vergleich zu dem vorliegenden Konverter 100 zwar dieselbe Schaltungstopologie aufweist, wobei jedoch hier die Leistungsschalter 131' bis 134' durch MOSFETS oder IGBTs realisiert sind. Diese Leistungsschalter / Leistungshalbleiter 131' bis 134' können jeweils die folgenden Bauteile umfassen:

- D1 bis D4 : entweder parasitäre Dioden der Leistungshalbleiter oder in Leistungshalbleitern integrierte Dioden oder zusätzlich zu Leistungshalbleitern parallel geschaltete diskrete Dioden oder Kombinationen der drei verschiedenen Arten von Dioden;
- C1 bis C4 : entweder parasitäre Kapazitäten der Leistungshalbleiter oder zusätzlich zu Leistungshalbleitern parallel geschaltete diskrete Kapazitäten oder Kombination der zwei Arten von Kapazitäten.

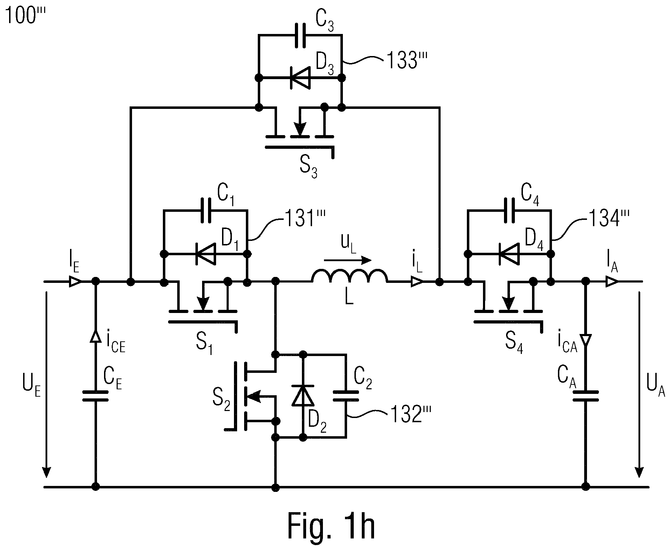

Die Variante mit IGBTs ist in Fig. 1g (Konverter 100" mit Leistungshalbleiter 131" bis 134"), die Variante mit MOSFETs (Konverter 100‴ mit Leistungshalbleiter 131‴ bis 134‴) in Fig. 1h gezeigt.

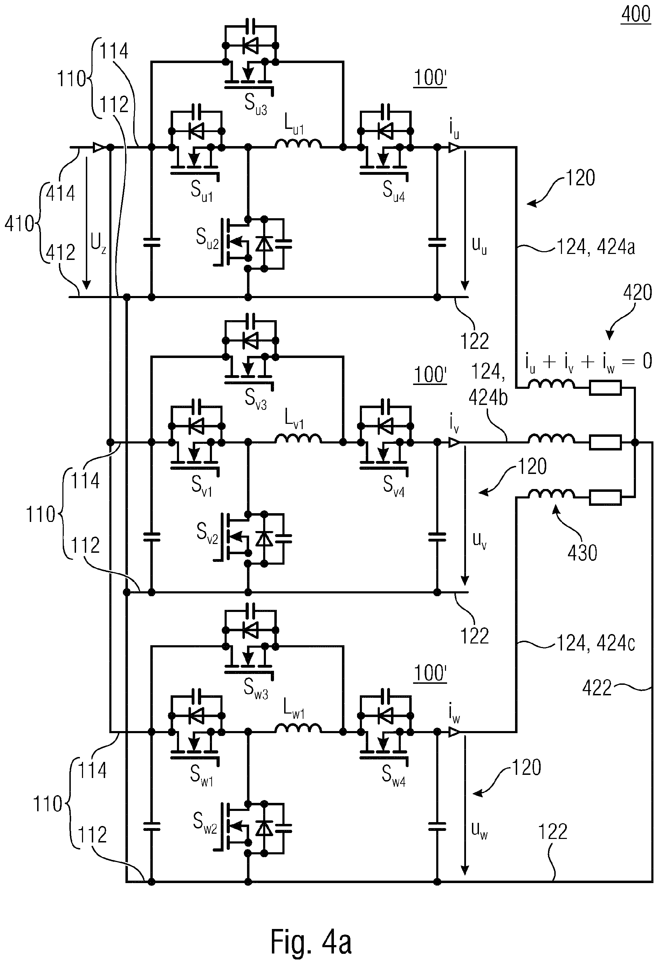

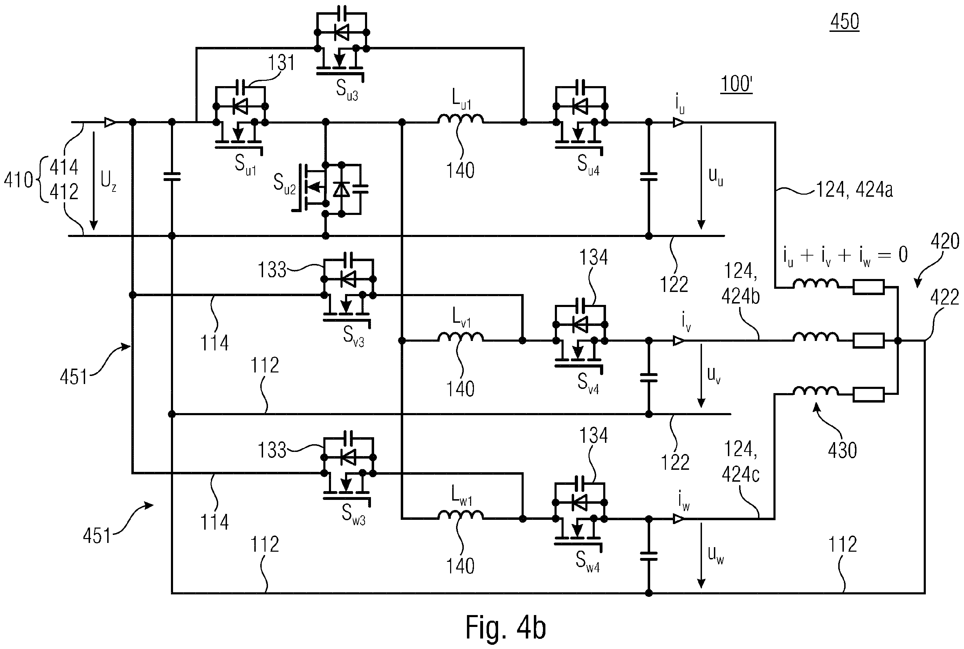

In der Darstellung von Fig. 4 sind Größen wie $U_E$ Eingangsspannung, $I_e$ Eingangsstrom, $U_A$ Ausgangsspannung, $I_A$ Ausgangsstrom, $i_L$ Strom durch die Speicherdrossel, $I_{CE}$ Strom durch den Eingangskondensator und $i_{CA}$ Strom durch den Ausgangskondensator illustriert. Bei nachfolgender Erläuterung der Wirkweise der vorliegende Topologie wird auf diese Größen Bezug genommen.

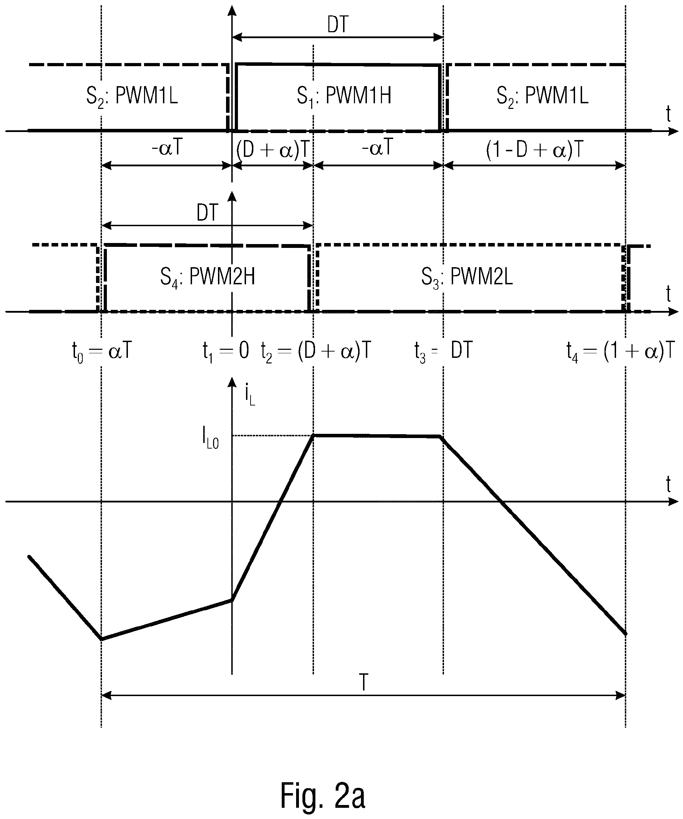

Bezug nehmend auf Fig. 2a bis 2j werden vier Varianten für die Ansteuerung des vorliegenden Konverters 100' erläutert, wobei hier Bezug genommen wird auf folgende Größen:

- $U_E$: Eingangsspannung;
- $I_E$: Eingangsstrom, positive Stromrichtung wird durch den Pfeil kennzeichnet (wenn $I_E$ positiv ist, fließt $I_E$ von links nach rechts; wenn aber $I_E$ negativ ist, fließt $I_E$ von rechts nach links);
- $U_A$: Ausgangsspannung;
- $I_A$: Ausgangsstrom, positive Stromrichtung wird durch den Pfeil kennzeichnet (wenn $I_A$ positiv ist, fließt $I_A$ von links nach rechts; wenn aber $I_A$ negativ

ist, fließt $I_A$ von rechts nach links);

- $u_L$: Spannung der Speicherdrossel;
- $i_L$: Strom durch die Speicherdrossel, positive Stromrichtung wird durch den Pfeil kennzeichnet (wenn $i_L$ positiv ist, fließt $i_L$ von links nach rechts; wenn aber $i_L$ negativ ist, fließt $i_L$ von rechts nach links);
- $i_{CE}$: Strom durch den Eingangskondensator, positive Stromrichtung wird durch den Pfeil kennzeichnet;
- $i_{CA}$: Strom durch den Ausgangskondensator, positive Stromrichtung wird durch den Pfeil kennzeichnet.

Fig. 2a zeigt ein hocheffizientes Ansteuerungsbeispiel Alpha 1. Wie in dem oberen Diagramm zur Illustration des Ansteuerablaufs gezeigt, werden die Schalter $S_1$ und $S_2$ durch die komplementären Signale PWM1H und LWM1L (PWM1) angesteuert, während die Schalter $S_4$ bis $S_3$ durch PWM2H und PWM2L (PWM2) angesteuert werden. Die Frequenz und die Tastverhältnisse sind beim PWM1 und PWM2 sind beispielsweise identisch und durch die folgende Gleichung definiert:

$$f_1 = f_2 = f = 1/T$$

$D_1 = D_2 = D$

Wie anhand des oberen Diagramms zu erkennen ist, besteht zwischen der Ansteuerung PWM1 und PWM2 eine Phasenverschiebung um $\alpha$, so dass also $S_3$ nach $S_1$ angesteuert wird und $S_2$ wiederum nach $S_3$. Ausgehend hiervon ergibt sich für das dargestellte Ansteuersignal der in dem unteren Diagramm illustrierte Strom durch die Speicherdrossel $I_L$. Wie zu erkennen ist, ist der Strom maximal, wenn $S_1$ und $S_3$ gleichzeitig aktiviert ist und nimmt dann ab der Aktivierung von $S_2$ wieder ab.

An dieser Stelle sei darauf hingewiesen, dass diese Plateaubildung und der sanfte Anstieg vor dem maximalen Drosselstrom der Phasenverschiebung $\alpha$ zwischen PWM1 und PWM2 geschuldet ist, die bei unkonventionellen Ansteuerverfahren nicht zum Einsatz kommt.

In dem stationären Zustand gilt für dieses Ansteuerungssignal 1:

EP 3 563 475 B1

$$\frac{U_A}{U_E} = \frac{2D-1}{D}$$

Aus dieser Formel ist zu entnehmen, dass das Übersetzungsverhältnis des vorliegenden Konverters unabhängig von der Phasenverschiebung zwischen PWM1 und PWM2 ist. Dies ist die Voraussetzung für die Modulation der Phasenverschiebung. Um den hocheffizienten Betrieb des vorliegenden Konverters weiter zu verbessern, kann neben der Minimierung der Schaltverluste auch noch eine Modulation der Phasenverschiebung erfolgen.

Die weiteren Verluste, inklusive der Durchlassverluste in den Schaltern, der Verluste in der Speicherdrossel, sowie der Verluste in den Ein- und Ausgangskondensatoren, spielen bei den gesamten Verlusten ebenfalls eine große Rolle. Um die gesamten Verluste zu minimieren kann man eine mathematische Funktion der Verluste in Abhängigkeit der Phasenverschiebung zwischen PWM I und PWM2 und der Schaltfrequenz bilden. Anschließend kann diese Funktion mittels Software minimiert werden.

Alternativ kann man sich auf die Minimierung des Effektivwertes des Speicherdrosselstroms konzentrieren, da der Effektivwert des Speicherdrosselstroms direkt oder indirekt die Durchlassverluste in den Schaltern, die Verluste in der Speicherdrossel sowie die Verluste in den Ein- und Ausgangskondensatoren bestimmt. Hierbei müssen natürlich die Bedingungen für den ZVS-entlasteten Betrieb der Leistungshalbleiter erfüllt werden.

Zusammenfassend lässt sich das Verlustminimum bei einem stationären Arbeitspunkt ($U_E$, $U_A$, D, $I_E$ und $I_A$ konstant) in Abhängigkeit von den Ansteuerungssignalen durch folgenden Optimierungsansatz beschreiben:

$$min_x \, l_{L,eff}^2(x), x = \{x_1 = \alpha, x_2 = f\}$$

mit Nebenbedingungen

- 

- 

- 

$$max(-D, -(1-D)) < x_1 \leq 0$$

$$max(i_L(t_0), i_L(t_1)) \leq -l_{ent,min}$$

$$min(i_L(t_2), i_L(t_3)) \geq -l_{ent,min}$$

Hierbei ist $I_{L,eff}$ der Effektivwert des Speicherdrosselstroms. $I_{ent,min}$ ist der minimal erforderliche Betrag des Speicherdrosselstroms, durch den die parasitären Kapazitäten der Leistungshalbleiter innerhalb der Totzeit des Schaltvorgangs umgeladen werden müssen.

Durch $\alpha$ wird nicht direkt die Phasenverschiebung zwischen PWM 1 und PWM2, sondern der Einschaltzeitpunkt von $S_4$ definiert.

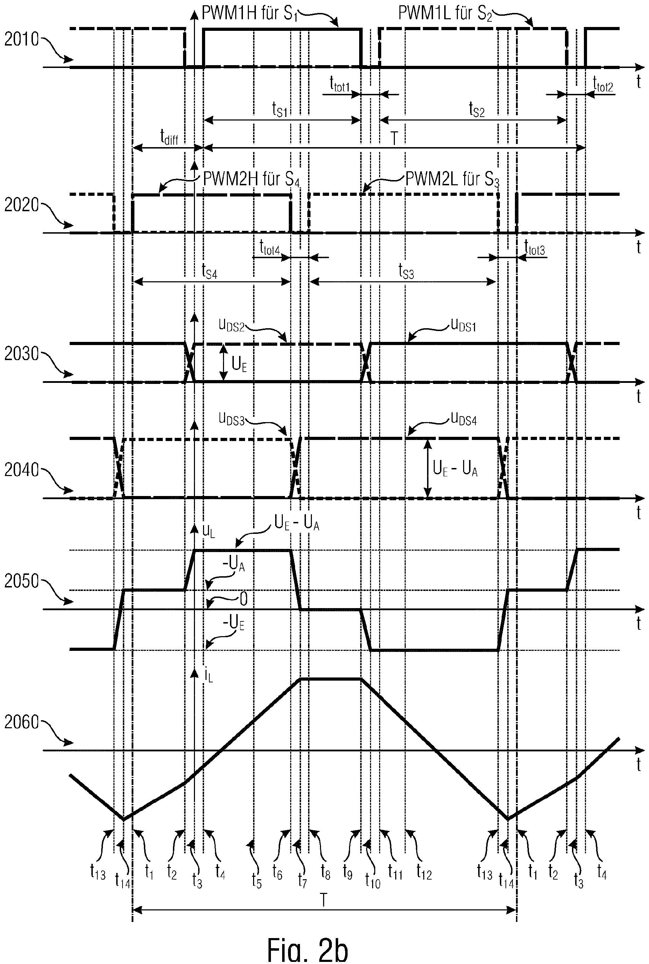

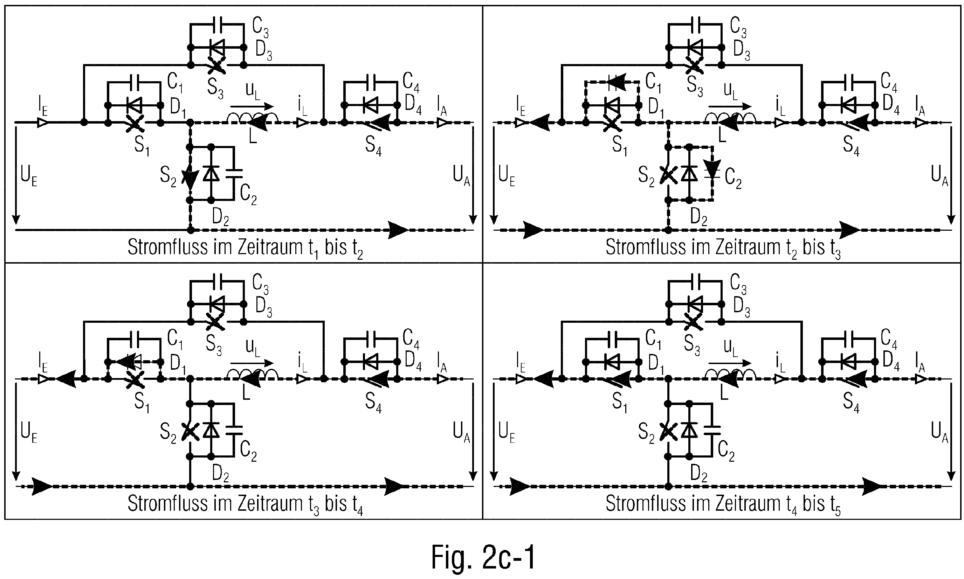

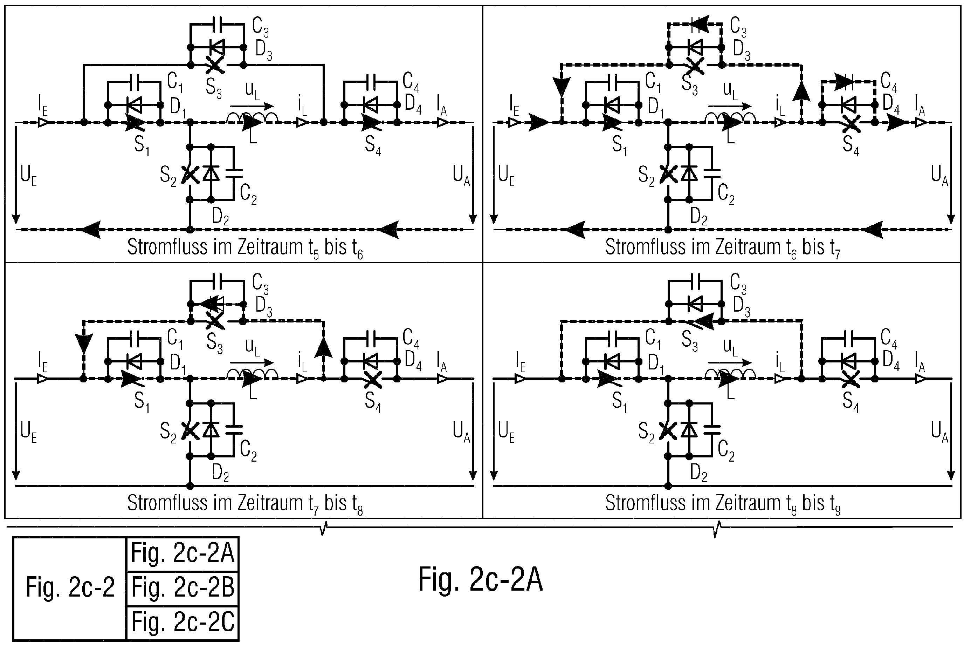

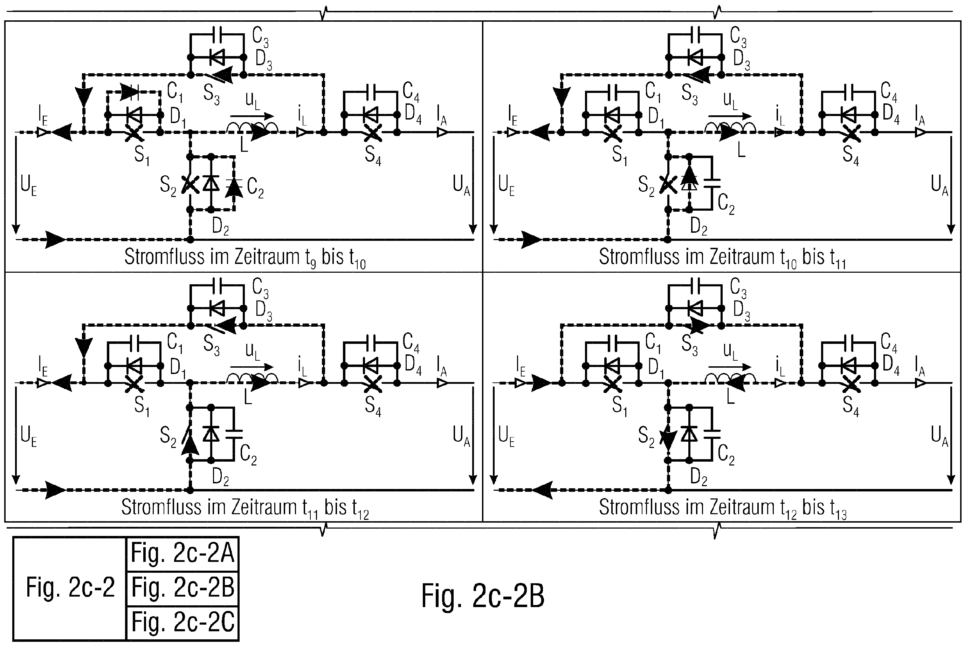

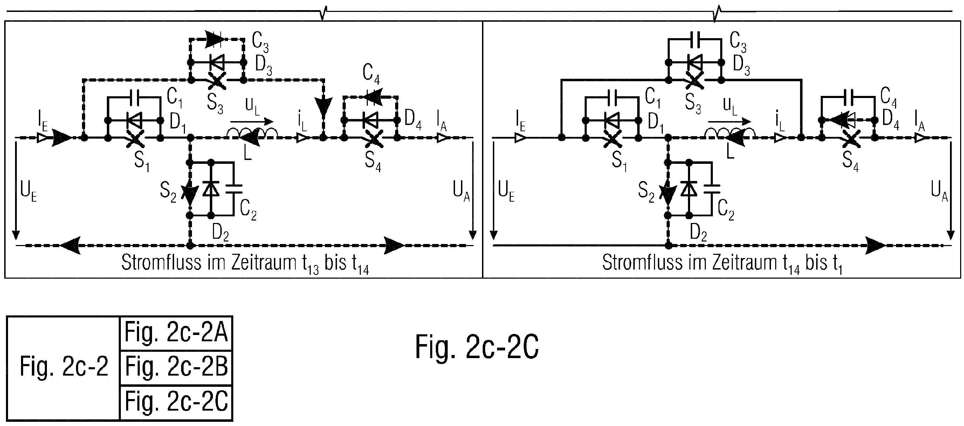

Dieses Ansteuerkonzept wird auch als weiche Variante von Alpha 1 bezeichnet. Bevor nun im Detail auf die Schaltvorgänge und die resultierenden Stromflusszugänge anhand der Beispiele aus Fig. 2b und Fig. 2c eingegangen wird, werden die charakteristischen Merkmalen zusammengefasst:

- $S_1$ und $S_2$ werden durch die komplementären Signale PWM1H und PWM1L angesteuert. $S_4$ und $S_3$ werden durch die komplementären Signale PWM2H und PWM2L angesteuert. Die Perioden (Frequenzen) der Signale sind identisch.
- Es existiert eine Zeitverzögerung (oder Phasenverschiebung) zwischen PWM1 und PWM2. Die Reihenfolge der Schaltvorgänge der Schalter lautet: $S_4$ eingeschaltet - $S_2$ ausgeschaltet - $S_1$ eingeschaltet - $S_4$ ausgeschaltet - $S_3$ eingeschaltet - $S_1$ ausgeschaltet - $S_2$ eingeschaltet - $S_3$ ausgeschaltet. Beim Sonderfall $t_{diff} = 0$ lautet die Reihenfolge: $S_1$ und $S_4$ gleichzeitig eingeschaltet - $S_1$ und $S_4$ gleichzeitig ausgeschaltet - $S_2$ und $S_3$ gleichzeitig eingeschaltet - $S_2$ und $S_3$ gleichzeitig ausgeschaltet.
- Der Strom $i_L$ dreht sich zweimal innerhalb einer Schaltperiode um. Der Strom $i_L$ ist zu den Zeitpunkten $t_2$ und $t_{13}$ negativ und zu den Zeitpunkten $t_6$ und $t_9$ positiv. Somit können die Schalter immer ZVS-entlastet umgeschaltet werden.

Fig. 2b illustriert die weichschaltende Variante von Konzept Alpha 1 innerhalb einer Schaltperiode mittels der Diagramme 2010-2060.

Diagramm 2010 stellt die komplementären Signale PWM1 zur Ansteuerung der Schalter $S_1$ und $S_2$ dar. PWM1H ist für $S_1$. PWM1L ist für $S_2$. Folgende Größen werden definiert:

- $T$: Periode der Signale PWM1H und PWM1L;
- $t_{S1}$: Zeitdauer des Einschaltzustands von $S_1$;
- $t_{S2}$: Zeitdauer des Einschaltzustands von $S_2$;
- $t_{tot1}$ und $t_{tot2}$: vorgesehene Totzeiten zwischen PWM1H und PWM1L. Sie sind viel kleiner als $T$.

In Diagramm 2020 werden dann die komplementären Signale PWM2 zur Ansteuerung der Schalter $S_3$ und $S_4$ dargestellt. PWM2H ist für $S_4$. PWM2L ist für $S_3$. Folgende Größen werden definiert:

- $T$: Periode der Signale PWM2H und PWM2L.
- $t_{S4}$: Zeitdauer des Einschaltzustands von $S_4$.
- $t_{S3}$: Zeitdauer des Einschaltzustands von $S_3$.
- $t_{tot4}$ und $t_{tot3}$: vorgesehene Totzeiten zwischen PWM2H und PWM2L. Sie sind viel kleiner als $T$.

Ferner symbolisiert $t_{diff}$ die Einschaltverzögerung zwischen $S_1$ und $S_4$. $t_{diff}$ ist größer oder gleich null.

Diagramme 2030 und 2040 zeigt die Drain-Source-Spannungen (hier ist angenommen, dass MOSFETs als Schalter eingesetzt werden) der Schalter $S_1$ bis $S_4$ bei Schaltvorgängen.

Diagramme 2050 und 2060 bilden die Spannung $u_L$ und der Strom $i_L$ der Speicherdrossel bei den einzelnen Schaltvorgängen ab. Der Hintergrund dafür, wieso hier $U_A$ negativ ist, wird unten im Zusammenhang mit dem Übersetzungsverhältnis erläutert.

Wie in Fig. 2b gezeigt, gibt es vierzehn Schaltzeiträume innerhalb einer Schaltperiode. In Fig.2c werden die Zustände des Stromflusses der weichschaltenden Variante in den einzelnen Schaltzeiträumen dargestellt.

von $t_1$ bis $t_2$: die Schalter $S_2$ und $S_4$ sind eingeschaltet. Der Strom $i_L$ fließt in die negative Richtung (siehe 2060). Aus dem Grund, dass die Spannung $u_L$ auf der Speicherdrossel positiv ist (siehe 2050), baut sich der Strom $i_L$ ab.

von $t_2$ bis $t_3$: zum Zeitpunkt $t_2$ wird $S_2$ ausgeschaltet. Aufgrund der nicht abgebauten Drain-Source-Spannung $U_{DS1}$ (siehe 2030) ist die Diode $D_1$ immer noch gesperrt. Dies führt dazu, dass der Strom $i_L$ nur auf die Kondensatoren $C_1$ und $C_2$ der Schalter kommutieren kann. Dadurch werden $C_1$ entladen und $C_2$ aufgeladen.

von $t_3$ bis $t_4$: zum Zeitpunkt $t_3$, an dem die Spannung $u_{DS1}$ auf die Durchlassspannung (ungefähr null, siehe 2030) von $D_1$ abgebaut ist, fließt der Strom $i_L$ durch $D_1$.

von $t_4$ bis $t_5$: zum Zeitpunkt $t_4$ wird $S_1$ eingeschaltet. Da $S_1$ vor dem Einschalten schon spannungsentlastet (ZVS=Zero-Voltage-Swichting) ist, kommutiert der Strom weich von der Diode auf den Kanal. Die Spannung $u_L$ der Speicherdrossel ist gleich die Differenz zwischen der Ein- und Ausgangsspannungen (siehe 2050). Der Strom $i_L$ baut sich weiter ab.

von $t_5$ bis $t_6$: zum Zeitpunkt $t_5$ dreht sich der Strom $i_L$ um.

von $t_6$ bis $t_7$: Zum Zeitpunkt $t_6$ wird $S_4$ ausgeschaltet. Aufgrund der nicht abgebauten Drain-Source-Spannung $U_{DS3}$ (siehe 2040) ist die Diode $D_3$ immer noch gesperrt. Dies führt dazu, dass der Strom $i_L$ nur auf die Kondensatoren $C_3$ und $C_4$ der Schalter kommutieren kann. Dadurch werden $C_3$ entladen und $C_4$ aufgeladen.

von $t_7$ bis $t_8$: zum Zeitpunkt $t_7$, an dem die Spannung $u_{DS3}$ auf die Durchlassspannung (ungefähr null, siehe 2040)) von $D_3$ abgebaut ist, fließt der Strom $i_L$ durch $D_3$.

von $t_8$ bis $t_9$: zum Zeitpunkt $t_8$ wird $S_3$ eingeschaltet. Da $S_3$ vor dem Einschalten schon spannungsentlastet (ZVS) ist, kommutiert der Strom weich von der Diode auf den Kanal. Die Spannung $u_L$ der Speicherdrossel ist null (siehe 2050). Der Strom $i_L$ bleibt konstant.

von $t_9$ bis $f_{10}$: Zum Zeitpunkt $t_9$ wird $S_1$ ausgeschaltet. Aufgrund der nicht abgebauten Drain-Source-Spannung $U_{DS2}$ (siehe 2030) ist die Diode $D_2$ immer noch gesperrt. Dies führt dazu, dass der Strom $i_L$ nur auf die Kondensatoren $C_1$ und $C_2$ der Schalter kommutieren kann. Dadurch werden $C_1$ aufgeladen und $C_2$ entladen.

von $t_{10}$ bis $t_{11}$: zum Zeitpunkt $t_{10}$, an dem die Spannung $u_{DS2}$ auf die Durchlassspannung (ungefähr null, siehe 2030) von $D_2$ abgebaut ist, fließt der Strom $i_L$ durch $D_2$.

von $t_{11}$ bis $t_{12}$: zum Zeitpunkt $t_{11}$ wird $S_2$ eingeschaltet. Da $S_2$ vor dem Einschalten schon ZVS-entlastet ist, kommutiert der Strom weich von der Diode auf den Kanal. Die Spannung $u_L$ der Speicherdrossel ist gleich $-U_E$ (siehe 2050). Der Strom $i_L$ verringert sich.

von $t_{12}$ bis $t_{13}$: zum Zeitpunkt $t_{12}$ dreht sich der Strom $i_L$ um.

von $t_{13}$ bis $t_{14}$: Zum Zeitpunkt $f_{13}$ wird $S_3$ ausgeschaltet. Aufgrund der nicht abgebauten Drain-Source-Spannung $U_{DS4}$ (siehe 2040) ist die Diode $D_4$ immer noch gesperrt. Dies führt dazu, dass der Strom $i_L$ nur auf die Kondensatoren $C_3$ und $C_4$ der Schalter kommutieren kann. Dadurch werden $C_3$ aufgeladen und $C_4$ entladen.

von $t_{14}$ bis $t_1$: zum Zeitpunkt $t_{14}$, an dem die Spannung $u_{DS4}$ auf die Durchlassspannung (ungefähr null, siehe 2040) von $D_4$ abgebaut ist, fließt der Strom $i_L$ durch $D_4$.

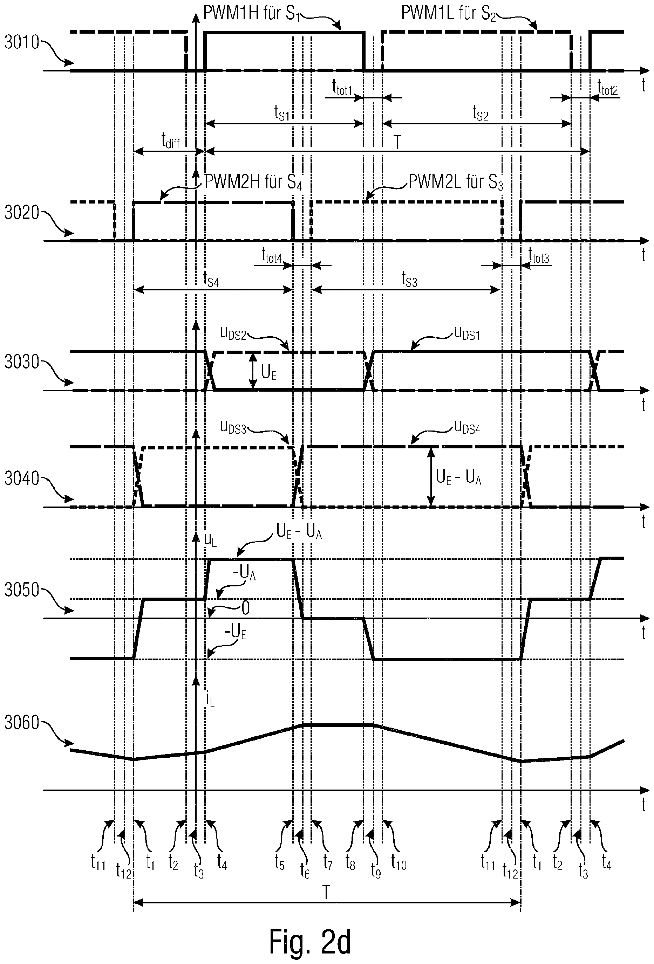

In Fig. 2d wird die hartschaltende Variante von Konzept $\alpha1$ dargestellt. Im Vergleich mit der weichschaltenden Variante liegt der größte Unterschied darin, dass der Strom $i_L$ sich nicht umdreht (siehe 3060). Dies führt dazu, dass die Drain-Source-Spannung $u_{DS4}$ vor dem Einschalten von S4 (siehe 3040 zum Zeitpunkt $t_1$) und die Drain-Source-Spannung $u_{DS1}$ vor dem Einschalten von S1 (siehe 3040 zum Zeitpunkt $t_4$) nicht durch einen negativen $i_L$ abgebaut werden können. Dementsprechend entstehen große Schaltverluste bei diesen Schaltvorgängen.

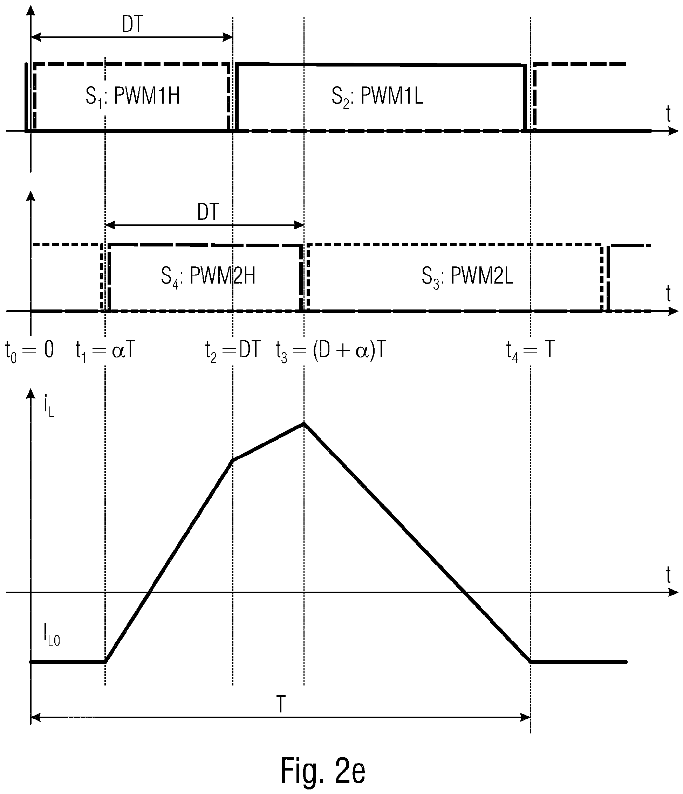

In Fig. 2e wird eine weitere Ansteuersequenz (Alpha 2) im oberen Diagramm illustriert. Hierbei ist die Phasenverschiebung anders gewählt, nämlich so dass $S_2$ direkt nach $S_4$, aber vor $S_3$ aktiviert wird. Der Strom durch die Speicherdrossel ist in dem unteren Diagrammteil dargestellt. Wie zu erkennen ist, besteht hier ebenfalls ein sanfter Anstieg, wobei der maximale Speicherstrom zum Zeitpunkt der Aktivierung von $S_3$ vorherrscht [vgl. $t_3$-$(D+\alpha)T$], wobei hier es hier jedoch nicht zu einer Plateaubildung kommt.

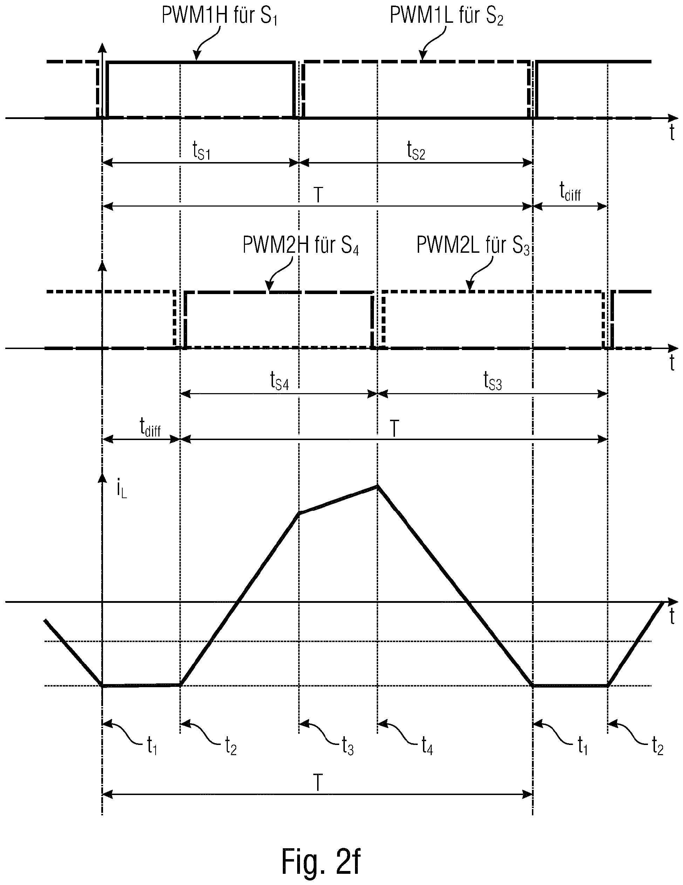

In Fig. 2f werden die Ansteuerungssignale des Ansteuerungskonzepts $\alpha2$ innerhalb einer Schaltperiode unter Bezugnahme auf die Zeiten $t_{s1}$ bis $t_{s4}$ dargestellt. Im Vergleich mit dem Ansteuerungskonzept $\alpha1$ liegt der größte Unterschied in der Reihenfolge der Schaltvorgänge der Schalter. Die Reihenfolge der Schaltvorgänge der Schalter beim Ansteuerungskonzept $\alpha2$ lautet: $S_1$ eingeschaltet - $S_3$ ausgeschaltet - $S_4$ eingeschaltet - $S_1$ ausgeschaltet - $S_2$ eingeschaltet - $S_4$ ausgeschaltet - $S_3$ eingeschaltet - $S_2$ ausgeschaltet. Für den stationären Zustand gilt wiederum:

$$\frac{U_A}{U_E} = \frac{2D-1}{D}$$

Die Herleitung des Spannungsübersetzungsverhältnisses ergibt sich wie folgt:

$$D_1 = \frac{t_{S1}}{T}, D_2 = \frac{t_{S4}}{T}$$

kann man mathematisch herleiten $\frac{U_A}{U_E} = \frac{D_1+D_2-1}{D_2}$ bzw.

Wenn man bei Ansteuerung fest einstellt:

$$D_1 = D_2 = D\ (t_{S1} = t_{S4})$$

dann lässt sich herleiten

$$\frac{U_A}{U_E} = \frac{2 \cdot D-1}{D}\ .$$

Ferner können die Schalter beim Ansteuerungskonzept $\alpha2$ auch ZVS-entlastet geschaltet werden, wenn folgende Bedingungen eingehalten werden:

$$\max(i_L(t_1), i_L(t_2)) \leq -I_{ent,min}$$

$$\min(i_L(t_3), i_L(t_4)) \geq I_{ent,min}$$

für das Ausführungsbeispiel aus Fig. 2f bzw.

$$min_x\ l_{L,eff}{}^2(x), x = \{x_1 = \alpha, x_2 = f\}$$

mit Nebenbedingungen

- $$0 \le x_1 < \min(D, 1-D)$$

- $$max\big(i_L(t_0), i_L(t_1)\big) \le -l_{ent,min}$$

- $$\min i_L(t_2) \ge l_{ent,min}$$

(für das Ausführungsbeispiel aus Fig. 2e) erfüllt werden, $l_{ent,min}$ ist der minimal erforderlichen Betrag des Speicherdrosselstroms, durch den die zu den Schaltern parallel geschalteten Kapazitäten innerhalb der Totzeit des Schaltvorgangs umgeladen werden können.

Die Stromflusszustände des Ansteuerungskonzepts $\alpha2$ werden aufgrund der hohen Ähnlichkeit wie beim Ansteuerungskonzept $\alpha1$ nicht mehr mit großem Aufwand dargestellt.

Schließlich kann man beim Ansteuerungskonzept $\alpha2$ durch die Modulation der Schaltperiode und der Zeitverzögerung zwischen PWM1 und PWM2 sowohl den ZVS-entlasteten Betrieb der Schalter garantieren als auch den Effektivwert des Speicherdrosselstroms möglichst niedrig halten.

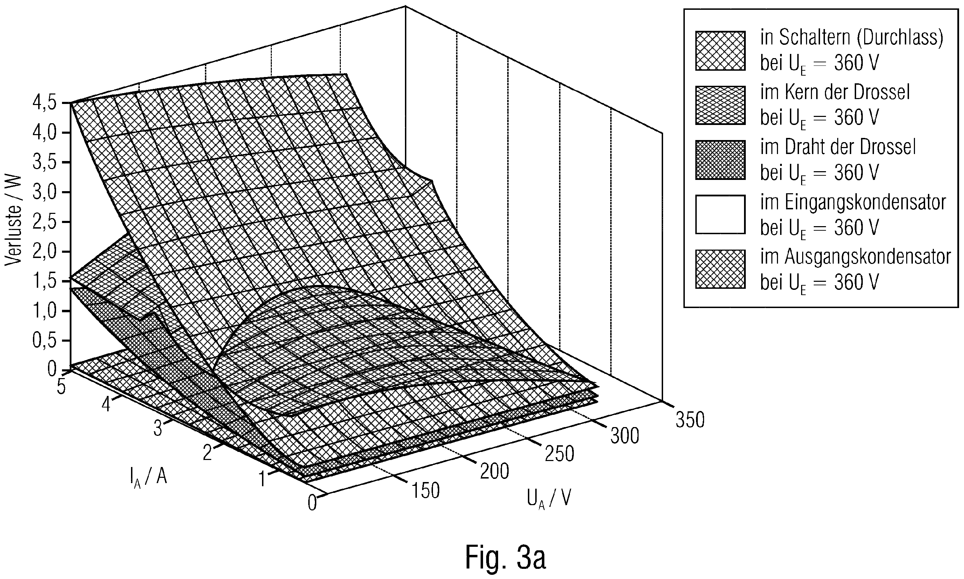

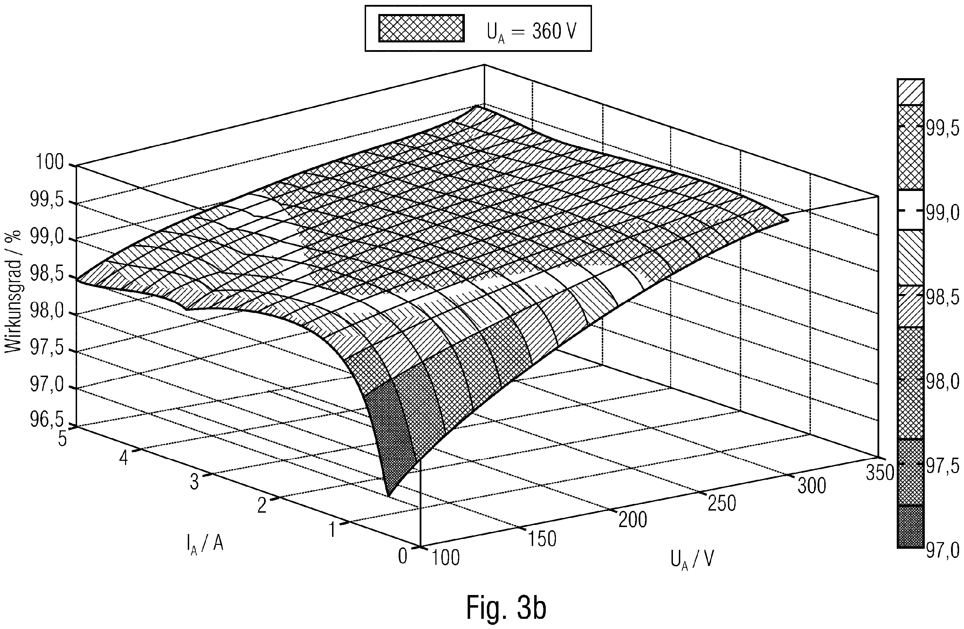

Ausgehend von diesem Optimierungsansatz wurden für das Ansteuersignal zwei Simulationsergebnisse generiert, wie sie in Fig. 3a bis 3d dargestellt sind. Hierbei wird von einer Eingangsspannung von 360 V ausgegangen.

Fig. 3a zeigt die Verteilung der Verluste bei der Ausgangsspannung im Bereich zwischen 100 V und 300 V für einen Ausgangsstrom im Bereich von 0,5 A bis 5 A. Hierbei sind die Verluste, die nach Entstehung in den Schaltern, im Kern der Drossel, Draht der Drossel, im Eingangskondensator und im Ausgangskondensator differenziert dargestellt.

Ausgehend hiervon ist in Fig. 3a der Wirkungsgrad bei $U_A$ im Bereich von 100 V bis 320 V und $I_A$ im Bereich von 0,5 A bis 5 A aufgezeigt.

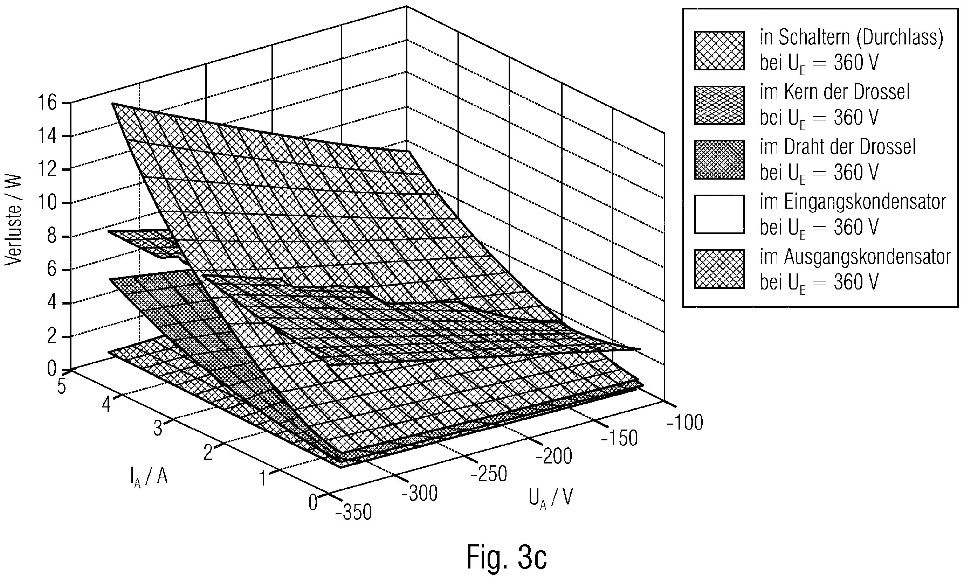

Fig. 3c zeigt die Verteilung der Verluste in einem weiteren Spannungsbereich, nämlich im Bereich von -320 V bis -100 V bei einem Ausgangsstrom im Bereich von 0,5 A bis 5 A, jeweils wieder aufgeschlüsselt für die einzelnen Bauteile.

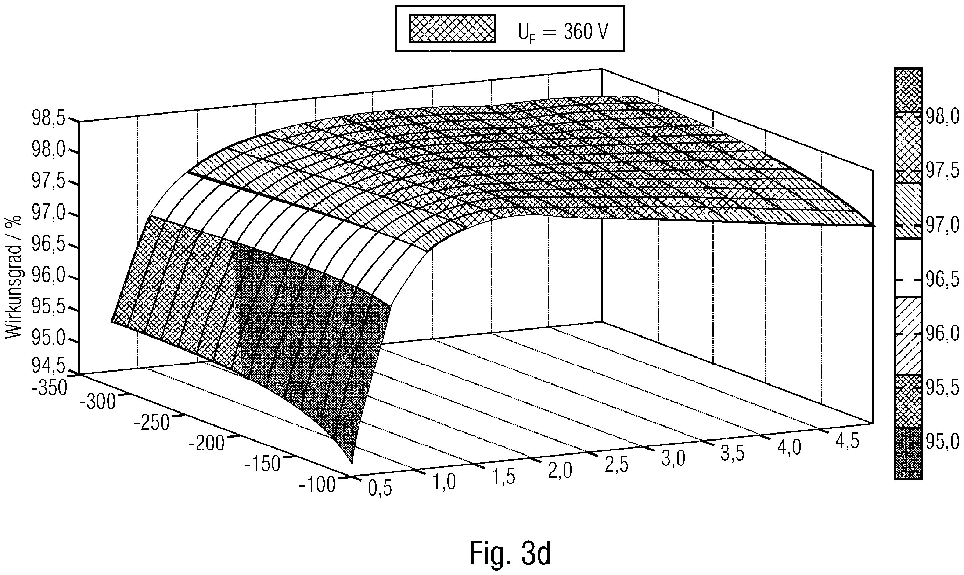

Hieraus ergibt sich dann der in Fig. 3d dargestellte Wirkungsgrad für die Bereiche $U_A$ -320 V bis - 0 V und $I_A$ 0,5 A bis 5 A.

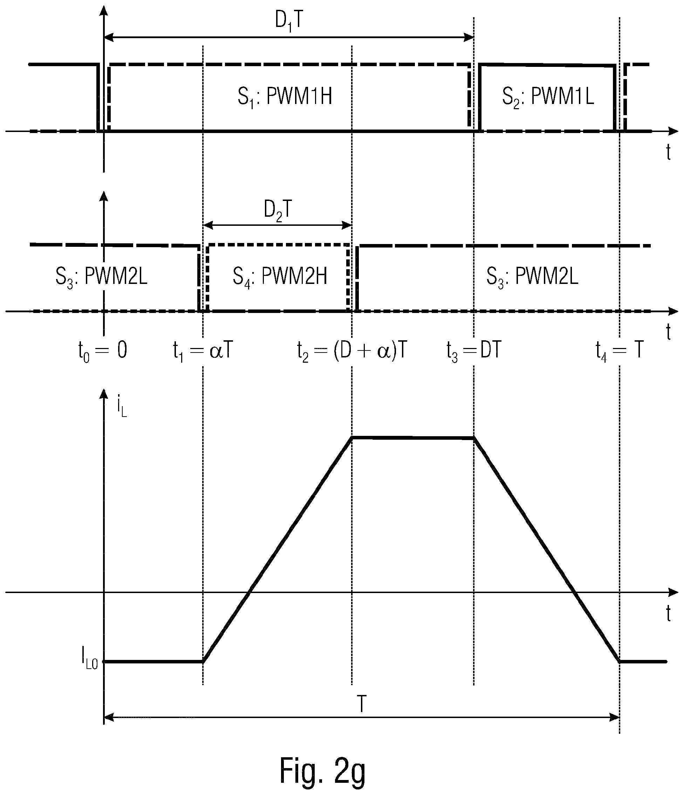

In Fig. 2g ist eine weitere alternative Ansteuerung dargestellt, nämlich das Ansteuersignal 3 bzw. Alpha 3, wobei im Vergleich zu den Ansteuerungen aus Fig. 2a und 2d insbesondere die Tastrate verändert ist.

Hierbei erfolgt dann die Ansteuerung so, dass PWM1H vor PWM2H und unmittelbar vor PWM2L aktiviert wird, bevor dann PWM1L aktiviert ist. Hierbei ist dann der maximale Drosselstrom ab dem Zeitpunkt der Aktivierung von PWM2L bis zur Aktivierung von PWM1L. Für dieses Ansteuersignal 3 gilt dann das Übersetzungsverhältnis: $\frac{U_A}{U_E} = \frac{I_E}{I_A} = \frac{D_1 + D_2 - 1}{D_2}$.

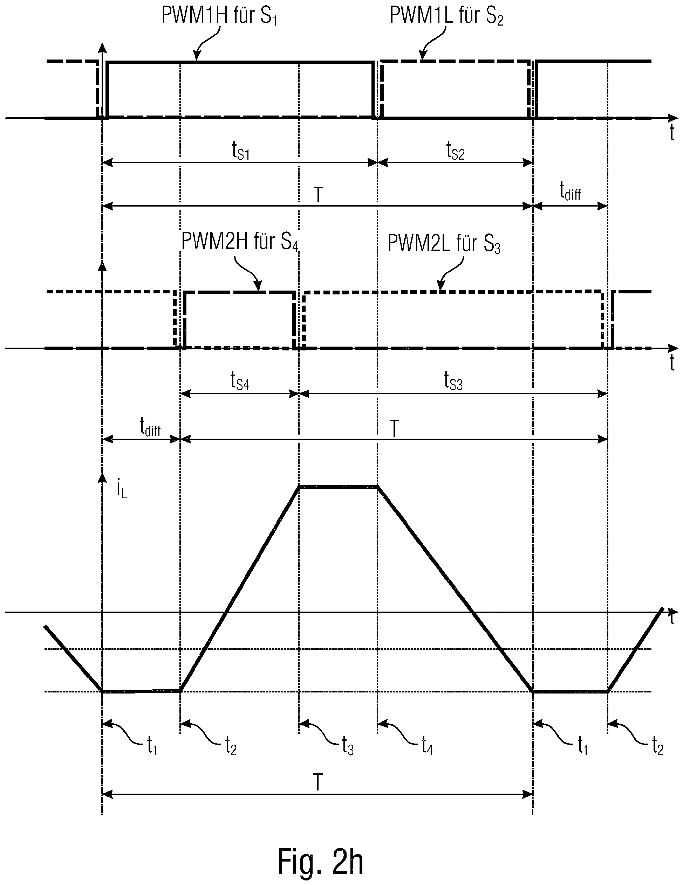

Fig. 2h illustriert dieses Ansteuerungskonzept in einer erweiterten Darstellung innerhalb einer Schaltperiode unter Angabe der Ansteuerzeiten $t_{s1}$ bis $t_{s4}$. In Fig. 2h werden die Ansteuerungssignale des Ansteuerungskonzepts $\alpha3$ dargestellt. Im Vergleich mit dem Ansteuerungskonzept $\alpha1$ liegt der Unterschied in der Reihenfolge der Schaltvorgänge der Schalter. Die Reihenfolge der Schaltvorgänge der Schalter beim Ansteuerungskonzept $\alpha3$ lautet: $S_1$ eingeschaltet - $S_3$ ausgeschaltet - $S_4$ eingeschaltet - $S_4$ ausgeschaltet - $S_3$ eingeschaltet - $S_1$ ausgeschaltet - $S_2$ eingeschaltet - $S_2$ ausgeschaltet.

Hierzu gibt es noch zwei Sonderfälle des Ansteuerungskonzepts $\alpha3$:

- Sonderfall 1: $t_{diff} = 0$, bei diesem Fall ist die Reihenfolge der Schaltvorgänge der Schalter: $S_1$ und $S_4$ gleichzeitig eingeschaltet - $S_4$ ausgeschaltet - $S_3$ eingeschaltet - $S_1$ ausgeschaltet - $S_2$ eingeschaltet - $S_2$ und $S_3$ gleichzeitig ausgeschaltet.
- Sonderfall 2: $t_{diff} = t_{S1} - t_{S4}$, bei diesem Fall ist die Reihenfolge der Schaltvorgänge der Schalter: $S_1$ eingeschaltet - $S_3$ ausgeschaltet - $S_4$ eingeschaltet - $S_1$ und $S_4$ gleichzeitig ausgeschaltet - $S_2$ und $S_3$ gleichzeitig eingeschaltet - $S_2$ ausgeschaltet

Beim Ansteuerungskonzept $\alpha3$ ist die Einschaltdauer von $S_1$ ($t_{S1}$) größer als die Einschaltdauer von $S_4$ ($t_{S4}$). Man kann ebenfalls herleiten:

$$\frac{U_A}{U_E} = \frac{D_1 + D_2 - 1}{D_2} \text{ bei } D_1 = \frac{t_{S1}}{T}, D_2 = \frac{t_{S4}}{T}$$

Auch hieraus wird wiederum ersichtlich, dass das Übersetzungsverhältnis unabhängig von der Phasenverschiebung ist, so dass hier eine weitere Optimierung des Betriebs durch Modulation der Phasenverschiebung ermöglicht wird. Hierbei kann das beispielsweise folgender Optimierungsansatz für das Ansteuersignal 3 aus dem Ausführungsbeispiel aus Fig. 2e durchgeführt werden:

$$min_x \, l_{L,eff}{}^2(x), x = \{x_1 = \alpha, x_2 = f, x_3 = D_1, x_4 = D_2\}$$

mit Nebenbedingungen

- $$\frac{U_A}{U_E} = \frac{x_3 + x_4 - 1}{x_4}$$

- $$0 \leq x_1 \leq D_1 - D_2$$

- $$i_L(t_1) \leq -l_{ent,min}$$

- $$i_L(t_2) \geq l_{ent,min}.$$

Diese Optimierung führt zum ZVS-entlasteten(weichen) Ansteuerungskonzept α3 für die Nomenklatur des Ausführungsbeispiels aus Fig. 2g mit folgenden Bedingungen:

$$\max(i_L(t_1), i_L(t_2)) \leq -I_{ent,min}$$

$$\min(i_L(t_3), i_L(t_4)) \geq I_{ent,min}$$

erfüllt werden. $I_{ent,min}$ ist der minimal erforderlichen Betrag des Speicherdrosselstroms, durch den die zu den Schaltern parallel geschalteten Kapazitäten innerhalb der Totzeit des Schaltvorgangs umgeladen werden können.
Die Stromflusszustände des Ansteuerungskonzepts α3 werden hier aufgrund der hohen Ähnlichkeit wie beim Ansteuerungskonzept α1 nicht mit großem Aufwand dargestellt.
Schließlich kann man beim Ansteuerungskonzept α3 durch die Modulation der Schaltperiode und der Zeitverzögerung zwischen PWM1 und PWM2 sowohl den ZVS-entlasteten Betrieb der Schalter garantieren als auch den Effektivwert des Speicherdrosselstroms möglichst niedrig halten.

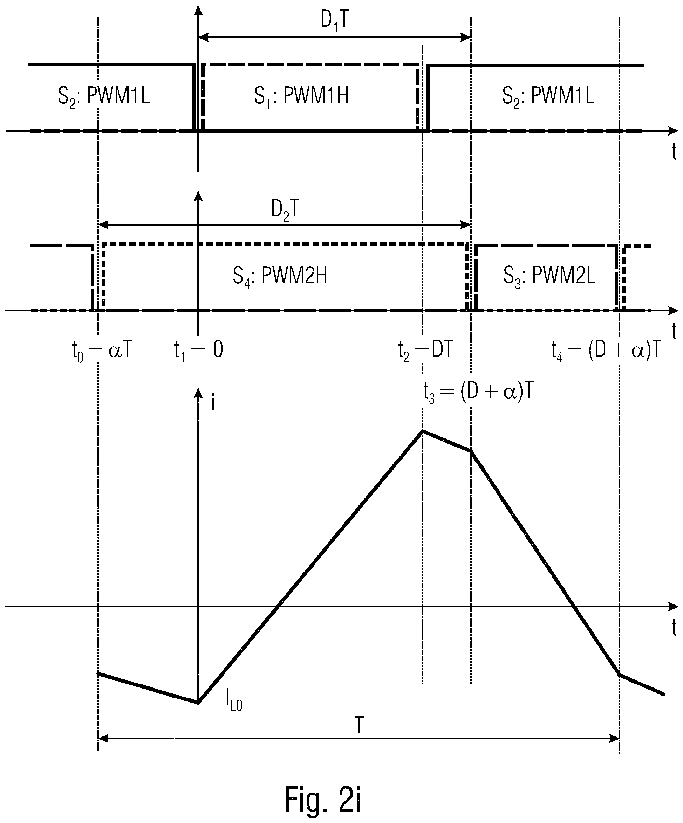

In Fig. 2i ist diesmal die Ansteuerung (Alpha 4) so gewählt, dass PWM2H vor PWM1H, vor PWM1L wiederum vor PWM2L aktiviert wird. Dadurch ergibt sich wiederum ein nur kurzzeitiger maximaler Drosselstrom zu dem Zeitpunkt der Aktivierung von PWM1L (vgl. Schalter $S_2$). Bezüglich des Übersetzungsverhältnisses gilt wiederum die Formel:

$$\frac{U_A}{U_E} = \frac{I_E}{I_A} = \frac{D_1 + D_2 - 1}{D_2}$$

so dass auch hier eine Modulation der Phasenverschiebung möglich ist. Hierbei basiert der Optimierungsansatz des Ansteuersignals 4 auf folgende Randbedingungen:

$$min_x \, l_{L,eff}{}^2(x), x = \{x_1 = \alpha, x_2 = f, x_3 = D_1, x_4 = D_2\}$$

mit Nebenbedingungen

- $$\frac{U_A}{U_E} = \frac{x_3 + x_4 - 1}{x_4}$$

- $$D_1 - D_2 \leq x_1 \leq 0$$

- $$max\big(i_L(t_0), i_L(t_1)\big) \leq -l_{ent,min}$$

- $$min\big(i_L(t_2), i_L(t_3)\big) \geq l_{ent,min}.$$

Entsprechend weiteren Ausführungsbeispielen können, beispielsweise ausgehend von den Ansteuersignalen 1 und 3 (vgl. Fig. 2a und 2f) die Tastverhältnisse von PWM1 und PWM2 unterschiedlich gewählt werden. Dies lässt sich beispielsweise auch von den Formeln herleiten.

$$\frac{U_A}{U_E} = \frac{I_E}{I_A} = \frac{D_1 + D_2 - 1}{D_2}$$

Die durch diese Modifikation entstandenen Ansteuerungssignale gehören auch zu Ansteuerungsmöglichkeiten für den vorliegenden Konverter. Selbst verständlich kann der vorliegende Konverter durch eine Mischung der oben beschriebenen Ansteuerungssigna $I_A$ angesteuert werden, um die Effizienz weiter zu verbessern.

Bei der Realisierung der Konzepte ist natürlich nicht für jeden Arbeitspunkt eine nichtlineare Funktion dynamisch zu lösen. Die optimalen Phasenverschiebungen und Schaltfrequenzen für die jeweiligen Arbeitspunkte können vorher mittels Software (z.B. Matlab) berechnet und dann durch Messungen validiert werden. Danach können die Werte der Phasenverschiebungen und Schaltfrequenzen in Abhängigkeit von den Arbeitspunkten im Mikrocontroller gespeichert werden.

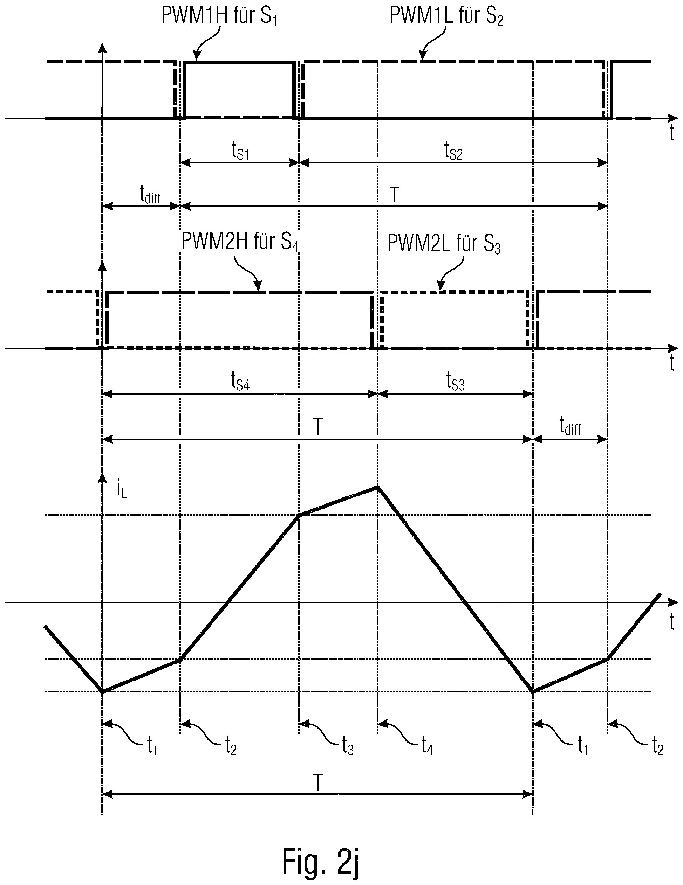

In Fig.2j werden die Ansteuerungssignale des Ansteuerungskonzepts a4 nochmal unter Bezugnahme auf die Zeiten $t_{s1}$ bis $t_{s2}$ dargestellt. Im Vergleich mit dem Ansteuerungskonzept $\alpha1$ liegt der Unterschied ebenfalls in der Reihenfolge der Schaltvorgänge der Schalter. Die Reihenfolge der Schaltvorgänge der Schalter beim Ansteuerungskonzept a4 lautet: $S_4$ eingeschaltet - $S_2$ ausgeschaltet - $S_1$ eingeschaltet - $S_1$ ausgeschaltet - $S_2$ eingeschaltet - $S_4$ ausgeschaltet - $S_3$ eingeschaltet - $S_3$ ausgeschaltet.

Hierzu gibt es noch zwei Sonderfälle des Ansteuerungskonzepts a4:

- Sonderfall 1: $t_{diff} = 0$, bei diesem Fall ist die Reihenfolge der Schaltvorgänge der Schalter: $S_1$ und $S_4$ gleichzeitig eingeschaltet - $S_1$ ausgeschaltet - $S_2$ eingeschaltet - $S_4$ ausgeschaltet - $S_3$ eingeschaltet - $S_2$ und $S_3$ gleichzeitig ausgeschaltet.

- Sonderfall 2: $t_{diff} = t_{S4} - t_{S1}$, bei diesem Fall ist die Reihenfolge der Schaltvorgänge der Schalter: $S_4$ eingeschaltet - $S_2$ ausgeschaltet - $S_1$ eingeschaltet - $S_1$ und $S_4$ gleichzeitig ausgeschaltet - $S_2$ und $S_3$ gleichzeitig eingeschaltet - $S_3$ ausgeschaltet.

Beim Ansteuerungskonzept a4 ist die Einschaltdauer von $S_1$ ($t_{S1}$) kleiner als die Einschaltdauer Einschaltdauer von $S_4$ ($t_{S4}$), Man kann ebenfalls herleiten:

$$\frac{U_A}{U_E} = \frac{D_1 + D_2 - 1}{D_2} \text{ bei } D_1 = \frac{t_{S1}}{T}, D_2 = \frac{t_{S4}}{T}$$

Ferner können die Schalter beim Ansteuerungskonzept a4 auch immer ZVS-entlastet (weich) geschaltet werden, wenn die folgenden Bedingungen:

$$max(i_L(t_1), i_L(t_2)) \leq -l_{ent,min}$$

$$\min(i_L(t_3), i_L(t_4)) \geq I_{ent,min}$$

erfüllt werden. $I_{ent,min}$ ist der minimal erforderlichen Betrag des Speicherdrosselstroms, durch den die zu den Schaltern parallel geschalteten Kapazitäten innerhalb der Totzeit des Schaltvorgangs umgeladen werden können.

Die Stromflusszustände des Ansteuerungskonzepts a4 werden hier aufgrund der hohen Ähnlichkeit wie beim Ansteuerungskonzept $\alpha 1$ nicht mit großem Aufwand dargestellt.

Schließlich kann man beim Ansteuerungskonzept a4 durch die Modulation der Schaltperiode und der Zeitverzögerung zwischen PWM1 und PWM2 sowohl den ZVS-entlasteten Betrieb der Schalter garantieren als auch den Effektivwert des Speicherdrosselstroms möglichst niedrig halten.

Entsprechend weiteren Ausführungsbeispielen kann der vorliegende Konverter durch die Kombinationen der oben vorgestellten Konzepte Alpha 1 bis Alpha 4 angesteuert werden.

Entsprechend wiederum weiteren nicht beanspruchten Beispielen kann der vorliegende Konverter auch diskret angesteuert werden (Alpha 5):

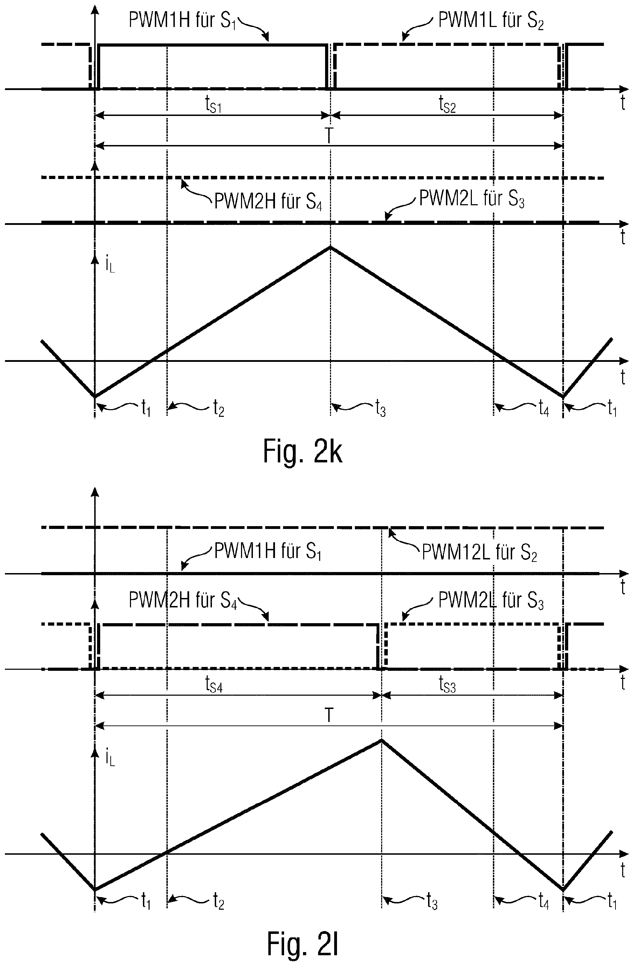

Wenn $S_3$ dauerhaft aus- und $S_4$ dauerhaft eingeschaltet werden und zugleich $S_1$ und $S_2$ komplementär angesteuert werden, funktioniert der vorliegende Konverter wie ein Tiefsetzsteller (siehe Fig. 2k oberes und mittleres Diagramm). Mit Hilfe einem innerhalb einer Schaltperiode zweimal umgedrehten Speicherdrosselstrom können die Schalter $S_1$ und $S_2$ immer weichgeschaltet (siehe Fig. 2k unteres Diagramm Zeitpunkte $t_2$ und $t_4$). Durch Modulation der Schaltperiode der PWM-Signale lassen sich die Verluste minimieren.

Wenn $S_1$ dauerhaft aus- und $S_2$ dauerhaft eingeschaltet werden und zugleich $S_3$ und $S_4$ komplementär angesteuert werden, funktioniert der vorliegende Konverter wie ein bidirektionale Inverswandler (inverting Buck-Boost Converter) (siehe Fig. 2l oberes und mittleres Diagramm). Mit Hilfe einem innerhalb einer Schaltperiode zweimal umgedrehten Speicherdrosselstrom können die Schalter $S_3$ und $S_4$ ebenfalls immer weichgeschaltet (siehe Fig. 2l unteres Diagramm, Zeitpunkte $t_2$ und $t_4$). Durch Modulation der Schaltperiode lassen sich die Verluste minimieren.

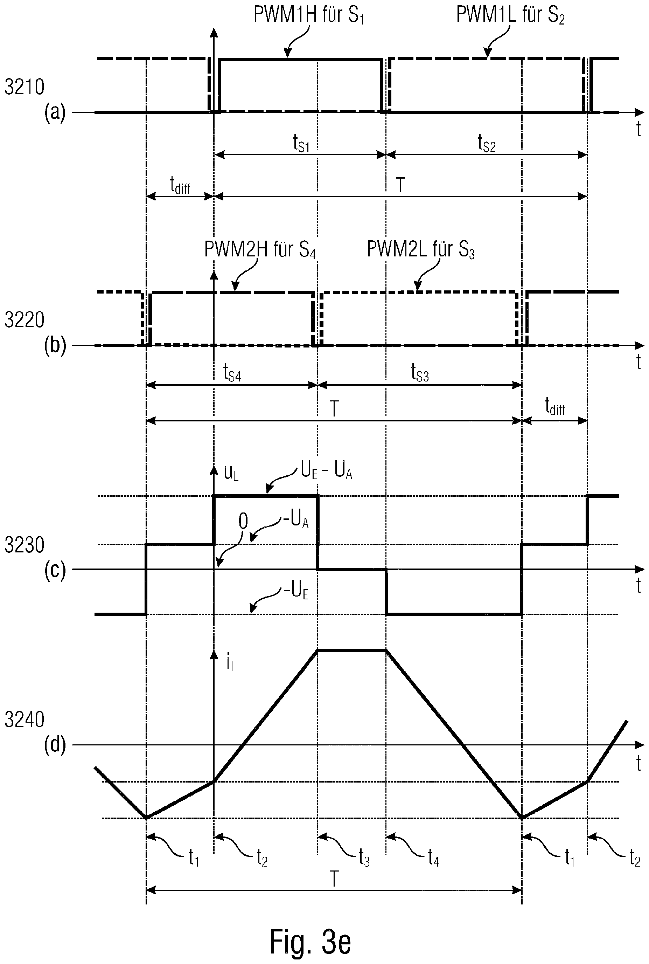

Nachfolgend wird unter Bezugnahme auf Fig. 3e, die Ansteuerungssignale ohne Berücksichtigung der Totzeiten illustriert, erläutert, warum vorliegenden Konverter den Energiefluss flexibel steuern können, je nach Ansteuerung auch einen ZVS-entlasteten Betrieb garantieren und woher genau die Effizienzvorteile resultieren.

Der Energiefluss beim vorliegenden Konverter wird wie folgt gesteuert. Wie bereits erläutert, sind die Totzeiten zwischen den komplementären PWM-Signalen im Vergleich mit der Schaltperiode sehr klein. Folglich werden hier die Totzeiten zur Herleitung des Übersetzungsverhältnisses vernachlässigt. In Fig.3e werden die Ansteuerungssignale PWM1 und PWM2, die Spannung $u_L$ und der Strom $i_L$ ohne Berücksichtigung der Totzeiten nochmal dargestellt.

Bei herkömmlichen Tiefsetzstellern ist z.B. die Ausgangsspannung gleich dem Produkt der Eingangsspannung und des Tastverhältnisses (duty ratio). Beim vorliegenden Konverter unter Verwendung von Konzept $\alpha 1$ verhält sich das hingegen wie folgt.

In der Speicherdrossel gilt allgemein erhältlich:

$$u_L = L \cdot \frac{di_L}{dt} \Rightarrow i_L(t) = i_L(t_1) + \frac{1}{L} \cdot \int_{t_1}^{t} u_L dt$$

Da sich der Stromverlauf von $i_L$ im stationären Zustand immer wiederholt, ergibt es sich:

$$i_L(T + t_1) = i_L(t_1)$$

Durch Einsetzen ist herzuleiten:

$$\int_{t_1}^{t_1+T} u_L \, dt = 0$$

Aus Fig. 3e kann die Spannung auf der Speicherdrossel $u_L$ entnommen werden:

$$t_1 \rightarrow t_2 : u_L = -U_A,$$

$$t_2 \rightarrow t_3 : u_L = U_E - U_A,$$

$$t_3 \rightarrow t_4 : u_L = 0,$$

$$t_4 \rightarrow t_1 : u_L = -U_E$$

Durch Einsetzen wird erhalten:

$$\int_{t_1}^{t_2} u_L dt + \int_{t_2}^{t_3} u_L dt + \int_{t_3}^{t_4} u_L dt + \int_{t_4}^{t_1} u_L dt = 0$$

$$\Downarrow$$

$$(-U_A) \cdot t_{diff} + (U_E - U_A) \cdot (t_{S4} - t_{diff}) + 0 \cdot (t_{S1} + t_{diff} - t_{S4}) + (-U_E) \cdot (T - t_{S1} - t_{diff})$$
$$= 0$$

$$\Downarrow$$

$$\frac{U_A}{U_E} = \frac{t_{S1} + t_{S4} - T}{t_{S4}}$$

Mit den Definitionen für die Tastverhältnisse (duty ratio) für PWM1 und PWM2

$$D_1 = \frac{t_{S1}}{T}, D_2 = \frac{t_{S4}}{T}$$

kann man aus herleiten

$$\frac{U_A}{U_E} = \frac{D_1 + D_2 - 1}{D_2}$$

Wenn man bei Ansteuerung fest einstellt:

$$D_1 = D_2 = D \ (t_{S1} = t_{S4})$$

dann lässt sich herleiten

$$\frac{U_A}{U_E} = \frac{2 \cdot D - 1}{D}$$

Aus $\frac{U_A}{U_E} = \frac{D_1 + D_2 - 1}{D_2}$ und $\frac{U_A}{U_E} = \frac{2 \cdot D - 1}{D}$ ist zu entnehmen, dass das Übersetzungsverhältnis unabhängig von der Zeitverzögerung $t_{\text{diff}}$ (oder üblicherweise auch als Phasenverschiebung bezeichnet) zwischen PWM1 und PWM2 ist. Im Ergebnis ist der Herleitungsvorgang des Übersetzungsverhältnisses ist ähnlich wie die Herleitung des Übersetzungsverhältnisses eines Tiefsetzstellers oder eines Hochsetzstellers.

In Fig. 1c ist das Spannungsübersetzungsverhältnis für das hier diskutierte Alpha 1 Konzept abgebildet. Die Ausgangsspannung UA kann in Abhängigkeit des Tastverhältnisses D kontinuierlich von minus unendlich bis maximal UE variieren. Dies bedeutet, dass der vorliegende Konverter durch Modulation des Tastverhältnisses D sowohl als DC/DC-Wandler, als auch wie DC/AC-Wechselrichter oder AC/DC-Konverter betrieben werden kann und daher sehr universell einsetzbar ist.

Wie oben erläutert kann bei der weichschaltenden Variante immer ZVS-entlastet umgeschaltet werden, z.B. dann wenn die folgenden Bedingungen erfüllt sind:

$$\max(i_L(t_1), i_L(t_2)) \leq -I_{ent,min} \quad \min(i_L(t_3), i_L(t_4)) \geq I_{ent,min}$$

$I_{ent,min}$ ist der minimal erforderlichen Betrag des Speicherdrosselstroms, durch den die zu den Schaltern parallel geschalteten Kapazitäten innerhalb der Totzeit des Schaltvorgangs umgeladen werden können.

Mit anderen Worten: Beim Ausschalten von $S_2$ und $S_3$ muss der Speicherddrosselstrom $i_L$ negativ sein. Aber allein durch einen negativen $i_L$ ist nicht zu garantieren, dass die Schalter weichgeschaltet werden. Des Weiteren muss der Betrag des Stroms $i_L$ größer als einen Wert $I_{ent,min}$, damit die zu den Schaltern parallel geschalteten Kapazitäten innerhalb der Totzeit vollständig umgeladen werden können.

Beim Ausschalten von $S_1$ und $S_4$ muss der Speicherddrosselstrom $i_L$ positiv sein. Aber allein durch einen positiv $i_L$ ist nicht zu garantieren, dass die Schalter weichgeschaltet werden. Des Weiteren muss der Stroms $i_L$ größer als einen Wert $I_{ent,min}$ sein, damit die zu den Schaltern parallel geschalteten Kapazitäten innerhalb der Totzeit vollständig umgeladen werden können.

Bei der weichschaltenden Variante können die Schalter zwar immer ZVS-entlastet umgeschaltet werden, wobei der Stromrippel von $i_L$ ist dementsprechend größer als die hartschaltende Variante. Durch Modulation der Schaltperiode (oder Schaltfrequenz) und der Zeitverzögerung (oder Phasenverschiebung) zwischen PWM1 und PWM2 ergibt sich aber dennoch ein Effizienzvorteil, wie nachfolgend erläutert wird.

Bei der weichschaltenden Variante können die Schalter zwar immer ZVS-entlastet umgeschaltet werden. Aber der Stromrippel von $i_L$ ist dementsprechend größer als die hartschaltende Variante (siehe 2060 und 3060). Dies führt zu größeren Durchlassverlusten in den Schaltern und der Speicherdrossel im Vergleich mit der hartschaltenden Variante. Folglich ist es sehr wichtig, den Stromrippel von $i_L$ möglichst klein zu halten. Der Stromrippel von $i_L$ soll daher die folgenden Eigenschaften besitzen:

Beim Ausschalten von $S_2$ und $S_3$ muss der Speicherddrosselstrom $i_L$ negativ sein. Aber allein durch einen negativen Speicherdrosselstrom $i_L$ kann nicht garantiert werden, dass die Schalter weichgeschaltet werden. Zusätzlich muss der Betrag des Stroms $i_L$ größer als einen Wert $I_{ent,min}$, damit die zu den Schaltern parallel geschalteten Kapazitäten innerhalb der Totzeit vollständig umgeladen werden können.

Beim Ausschalten von $S_1$ und $S_4$ muss der Speicherddrosselstrom $i_L$ positiv sein. Aber allein durch einen positiven Speicherdrosselstrom $i_L$ kann nicht garantiert werden, dass die Schalter weichgeschaltet werden. Zusätzlich muss der Stroms $i_L$ größer als einen Wert $I_{ent,min}$ sein, damit die zu den Schaltern parallel geschalteten Kapazitäten innerhalb der Totzeit vollständig umgeladen werden können. Der Effektivwert des Stromverlaufes von $i_L$ soll möglichst klein sein.

Mit anderen Worten heißt das, dass die Schalter können durch die Vergrößerung des Stromrippels von $i_L$ immer weichgeschaltet werden. Somit werden die Schalterverluste minimiert. Zugleich soll der Stromrippel von $i_L$ nicht zu groß sein. Der Stromrippel von $i_L$ soll zugleich möglichst klein bleiben, damit der Effektivwert von $i_L$ möglichst am niedrigsten ist. Auf diese Weise kann der maximale Wirkungsgrad des Konverters erzielt werden. Mit anderen Worten: die Durchlassverluste in den Schaltern und der Speicherdrossel werden durch die Vergrößerung des Stromrippels von $i_L$ vermehrt. Aber wenn man diese Vergrößerung des Stromrippels von $i_L$ möglichst klein hält und zugleich die Schalter weichschaltet, können die vermehrten Durchlassverluste in den Schaltern und der Speicherdrossel durch die Minimierung der Schalterverluste kompensiert werden. Insgesamt werden die Leistungsverluste verkleinert oder viel verkleinert werden. Zusammenfassend treten zwei Punkte Effekte auf: die Schalter werden weichgeschaltet, wobei gleichzeitig der Effektivwert des Speicherdrosselstroms möglichst klein gehalten wird.

Um diese zwei Punkte zugleich zu erzielen, erfolgt Modulation der Schaltperiode (Schaltfrequenz) und der Zeitverzögerung (Phasenverschiebung) zwischen PWM1 und PWM2.

Zur Vereinfachung der Erklärung wird erstens angenommen, dass die Einschaltzeit von $S_1$ und $S_4$ gleich sind, nämlich $D_1 = D_2 = D$.

Aus einer mathematischen Modellierung des Speicherdrosselstroms $i_L$ kann hergeleitet werden, dass der Effektivwert von $i_L$ eine Funktion in Abhängigkeit von dem Tastverhältnis D, der Schaltperiode T (Schaltfrequenz) und der Zeitverzögerung $t_{diff}$ (Phasenverschiebung) zwischen PWM1 und PWM2 ist.

Bei einem stationären Arbeitspunkt (d.h. $U_E$, $I_E$, $U_A$, und $I_A$ sind alle konstant) soll das Spannungsübersetzungsverhältnis $U_A/U_E$ konstant bleiben. Dementsprechend muss das Tastverhältnis $D$ festgehalten werden (siehe

$$\frac{U_A}{U_E} = \frac{2 \cdot D - 1}{D}$$

). D.h. für eine bestimmte Kombination der Eingangsspannung $U_E$ und der Ausgangsspannung $U_A$ gibt es nur ein mögliches Tastverhältnis $D$. Wenn man das Tastverhältnis D variiert, dann ändert sich ebenfalls die Ausgangsspannung. Was man variieren kann, ist die Schaltperiode $T$ (Schaltfrequenz) und die Zeitverzögerung $t_{diff}$ (Phasenverschiebung) zwischen PWM1 und PWM2. Durch Variierung der Schaltperiode $T$ (Schaltfrequenz) und der Zeitverzögerung $t_{diff}$ (Phasenverschiebung) zwischen PWM1 und PWM2 ist der Effektivwert $I_{L,eff}$ zu minimieren.

Anders gesagt, für ein bestimmtes Spannungsübersetzungsverhältnis gibt es unendlich Kombinationen der Schaltperiode $T$ (Schaltfrequenz) und der Zeitverzögerung $t_{diff}$ (Phasenverschiebung) zwischen PWM1 und PWM2. Aber nur bei einer Kombination oder einigen Kombinationen der Schaltperiode $T$ (Schaltfrequenz) und der Zeitverzögerung $t_{diff}$ (Phasenverschiebung) zwischen PWM1 und PWM2 ist der Effektivwert $I_{L,eff}$ am niedrigsten. Unser Ziel ist und zwar diese Kombination oder solche Kombinationen zu finden. Hierbei müssen selbstverständlich die Bedingungen fürs Weichschalten der Schalter (siehe oben) erfüllt werden. Das Problem kann als ein mathematische Optimierungsproblem zusammengefasst:

$$min_x\, I_{L,eff}(x)\,,\, x = \{x_1 = t_{diff}, x_2 = T\}$$

*mit Nebenbedingungen*

- $$max(-D \cdot x_2, -(1 - D) \cdot x_2) < x_1 \leq 0$$

- $$max(i_L(t_1), i_L(t_2)) \leq -I_{ent,min}$$

- $$min(i_L(t_3), i_L(t_4)) \geq I_{ent,min}$$

*Mit Worten: bei einem stationären Arbeitspunkt (UE, $I_E$, $U_A$, $I_A$ sind alle konstant) ist der Effektivwert $I_{L,eff}$ des Speicherdrosselstroms eine Funktion der Zeitverzögerung $t_{diff}$ (definiert als $x_1$) zwischen PWM1 und PWM2 und der Schaltperiode T (definiert als x2). Durch die Optimierung der Effektivwert $I_{L,eff}$ ist die optimale Kombination von $t_{diff}$ und T zu finden. Dabei sind drei Nebenbedingungen jedenfalls zu berücksichtigen:*

*Nebenbedingung 1:* $max(-D \cdot x_2, -(1-D) \cdot x_2) < x_1 \leq 0$. *Diese Bedingung ist die Voraussetzung für die Reihenfolge der Schaltvorgänge beim Konzept A. Wenn diese Bedingung verletzt wird, dann ändert sich die Reihenfolge der Schaltvorgänge. Die mathematische Funktion $I_{L,eff}(x)$ wird sich auch ändern.*

*Nebenbedingung 2 und 3: wie im Abschnitt 2.4 erklärt, sind sie die Bedingungen für den ZVS-entlasteten Betrieb der Schalter*

*Das Optimierungsproblem kann man z.B. mittels Matlab schnell lösen. Auf diese Weise kann man für jeden stationären Arbeitspunkt ($U_E$, $I_E$, $U_A$, $I_A$) die optimale Schaltperiode und die optimale Zeitverzögerung bestimmen. Bei der Realisierung des Ansteuerungskonzepts ist natürlich nicht notwendig für jeden Arbeitspunkt ein Optimierungsproblem echtzeitlich zu lösen. Die optimalen Schaltperioden und Zeitverzögerungen für die jeweiligen Arbeitspunkte können vorher mittels Software (z.B. Matlab) berechnet und dann in Mikrocontroller in Abhängigkeit von Arbeitspunkten gespeichert (wie* Lookup-Tabellen) *werden. Bei einer echtzeitlichen Ansteuerung können die optimalen Schaltperioden und Zeitverzögerungen immer in Abhängigkeit der von Strom- und Spannungssensoren bestimmten Arbeitspunkte direkt aus den Speichern des Mikrocontrollers abgelesen werden.*

Beim allgemeinen Fall $D_1$ muss nicht unbedingt gleich $D_2$ sein. Dann gibt es mehrere mögliche $D_1$ und $D_2$ bei einem stationären Arbeitspunkt ($U_E$, $I_E$, $U_A$, $I_A$). Das Optimierungsproblem kann wie folgt zusammen gefasst:

$$min_x\, I_{L,eff}(x)\,,\, x = \{x_1 = t_{diff}, x_2 = T, x_3 = D_1, x_4 = D_2\}$$

*mit Nebenbedingungen*

- 

$$\frac{U_A}{U_E} = \frac{x_3}{1-x_4}$$

- 

$$max(-x_4 \cdot x_2, -(1-x_3) \cdot x_2) < x_1 \leq min(0, (x_3-x_4) \cdot x_2)$$

- 

$$max(i_L(t_1), i_L(t_2)) \leq -I_{ent,min}$$

- 

$$min(i_L(t_3), i_L(t_4)) \geq I_{ent,min}$$

Nachfolgend wird Bezug nehmend auf Fig. 4a und 4b Erweiterungen der in Fig. 1a erläuterten Topologie erläutert, die es ermöglichen, den vorliegenden Konverter für dreiphasige Anwendungen vorzusehen.

Fig. 4a zeigt eine dreiphasige Stromrichterschaltung 400, die im Wesentlichen aus drei zusammengeschalteten Stromrichterschaltungen 100', wie sie Bezug nehmend auf Fig. 1f erläutert wurden, besteht. Die drei Stromrichterschaltungen 100 sind parallel geschaltet, so dass auf Eingangsseite (vgl. Bezugszeichen 110) die ersten Potenzialabgriffe 112 miteinander gekoppelt sind, so dass sie den ersten Potenzialabschluss 412 des Spannungseingangs 410 der dreiphasigen Stromrichterschaltung 400 formen. Analog hierzu sind die zweiten Potenzialabgriffe 114 miteinander gekoppelt und formen den zweiten Potenzialabgriff 414 des Eingangs 410 für die Stromrichterschaltung 400. Auf Ausgangsseite sind jeweils die ersten Potenzialanschlüsse 122 miteinander gekoppelt und formen so den Nullleiter 422 für den dreiphasigen Ausgang 420. Jeder der drei zweiten Potenzialabgriffe 124 der Ausgänge 120 bildet eine Phase des Ausgangs 420. Die drei Phasen sind mit den Bezugszeichen 424a, 424b und 424c versehen.

An dieser Stelle sei angemerkt, dass der Ausgang 420 optional eine Drosselanordnung 430, mit je einer Drossel je Phase 424a, 424b und 424c aufweisen kann.

Hinsichtlich der Funktionalität entspricht dieser dreiphasige Spannungswandler 400 im Wesentlichen der obigen Funktionalität, so dass ausgehend von einer Eingangsspannung $U_z$ (vgl. Eingang 410) eine dreiphasige Wechselspannung an dem Spannungsausgang 420 bereitgestellt werden kann. Hierfür werden die drei Stromrichterschaltungen 100' so gestaltet, dass jeder eine Gleichspannungs-Wechselspannungswandlung vornimmt, wobei die drei Stromrichterschaltungen jeweils um 120° versetzt zueinander betrieben werden, um am Spannungsausgang 420 bzw. an den drei Phasen 424a bis 424c das entsprechende Signal zur Verfügung zu stellen.

Fig. 4b zeigt eine weitere Topologie einer weiteren dreiphasigen Stromrichterschaltung 450, die eine Stromrichterschaltung 100' sowie zwei zusätzliche Pfade 451 für die zusätzlichen Pfade umfasst.

Die zwei Pfade 451 umfassen jeweils auf Eingangsseite den ersten Potenzialabgriff 412, der direkt mit dem ausgangsseitigen Potenzialabgriff 422 verbunden ist. Diese zwei Potenzialabgriffe 422 der zwei Pfade 451 formen zusammen mit dem ersten Potenzialabgriff 122 der Stromrichterschaltung 100' wiederum den Nullleiter 422.

Zusätzlich ist jeder der zwei Pfade 451 eingangsseitig mit einem zweiten Potenzialabgriff 114 mit dem Eingang 410 beziehungsweise um genau zu sein mit dem zweiten Potenzialabgriff 414 des Eingangs verbunden. Jeder Pfad weist die Drossel 140, den dritten Schalter 133 sowie den vierten Schalter 134 auf. In diesem Ausführungsbeispiel ist der dritte Schalter zwischen dem zweiten Potenzialabgriff 114 und der Seite der Drossel 140 verbunden, auf welcher auch der vierte Schalter 134 angeordnet ist, über welchen dann der jeweilige Ausgang 124 für den jeweiligen Pfad 415 gebildet wird. Auf der gegenüberliegenden Seite der Drossel 140 sind die zwei Pfade 451 miteinander gekoppelt und mit der Seite der Drossel 140 der Stromrichterschaltung 100' verbunden, über welche die Drossel 140 der Stromrichterschaltung 100' mit dem zweiten Potenzialabgriff 414 (über den Schalter 131) verbunden ist.

In anderen Worten ausgedrückt heißt das, dass die Pfade 451 im Wesentlichen der Topologie der Stromrichterschaltung 100' entsprechen, wobei allerdings die Schalter 131 und 132 nicht vorgesehen sind, so dass die Verbindung zwischen dem Neutralpunkt 422 der Last und der Masse der Versorgungsspannung bei beiden Varianten weggelassen wird. Hierfür ist dann eine geeignete Ansteuerung der Bauelemente vorzusehen.

Die Ausgänge der zwei Pfade 424 bilden zusammen mit dem Ausgang 124 der Stromrichterschaltung 100' die drei Phasen 424a, 424b und 424c.

Wie auch bei dem Ausführungsbeispiel aus Fig. 4a umfasst der Ausgang 420 der Stromrichterschaltung 450 die Drosselanordnung 430 für die drei Phasen 424a bis 424c.

Bezüglich den Stromrichterschaltungen 400 und 450 sei angemerkt, dass diese jeweils aufseiten der Eingänge 110 und der Ausgänge 120 auch die entsprechenden Eingangs- und Ausgangskondensatoren 126 bzw. 116 aufweisen können. Ferner sei auch angemerkt, dass auch wenn von der Stromrichterschaltung 100' mit den MOSFETS ausgegangen wurde, auch andere Leistungsschalter zum Einsatz kommen können.

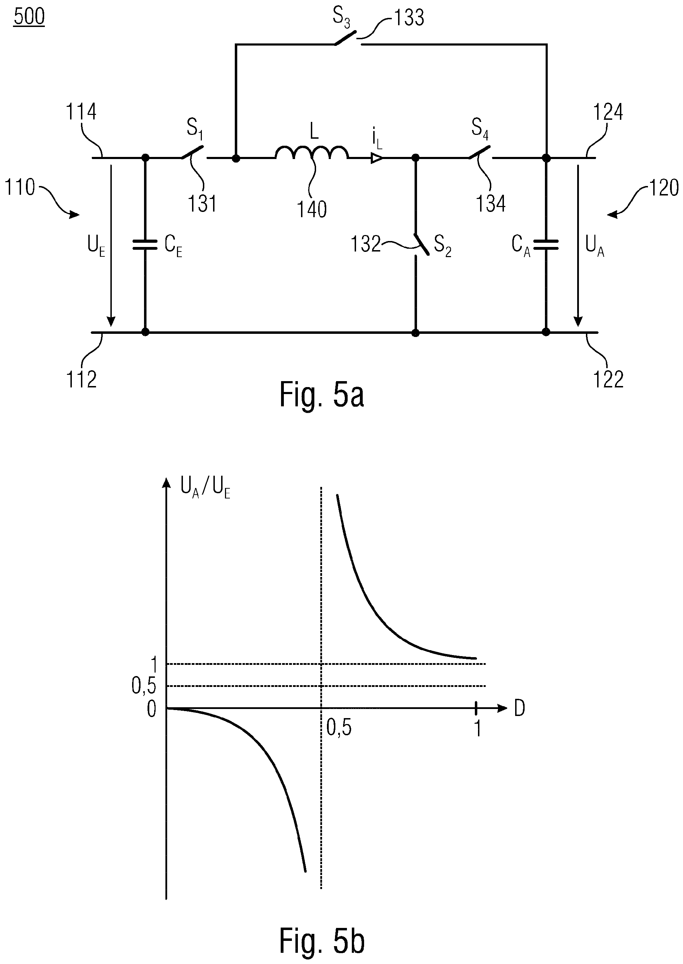

Bezug nehmend auf Fig. 5a bis 9a werden nun fünf Varianten als Alternative zu der Stromrichterschaltung 100 bzw. 100' erläutert, die aber alle auf derselben Kernidee basieren, nämlich dass die Speicherdrossel (vgl. Bezugszeichen 140) durch einen Leistungsschalter (vgl. Bezugszeichen 133) "gebypasst" werden kann, so dass im Resultat einer der zweiten Potenzialabgriffe (vgl. Bezugszeichen 114 oder 124) in schaltbarer Weise mit beiden Seite der Speicherdrossel 140 verbindbar ist.

Fig. 5a zeigt einen Konverter 500 mit einem Schaltungseingang 110 und einem Schaltungsausgang 120. Die zwei ersten Potenzialabgriffe 112 und 122 sind wiederum direkt verbunden, wobei zwischen den zweiten Potenzialabgriffen 114 und 124 die Speicherdrossel 140 angeordnet ist, nämlich in der Art, dass der Leistungsschalter 131 auf einer ersten Seite der Speicherdrossel 140 angeordnet, währen der vierte Leistungsschalter 134 auf einer zweiten Seite der Speicherdrossel 140 zwischen der Speicherdrossel 140 und dem zweiten Potenzialabgriff 124 vorgesehen ist. Der Leistungsschalter 133 ist zwischen der ersten Seite der Speicherdrossel 140 und ebenfalls dem Potenzialabgriff 124 vorsehen. Auf der zweiten Seite der Speicherdrossel 140 ist der zweite Leistungsschalter 132 angeordnet.

Für diesen vorliegenden Konverter 500 kann beispielsweise folgende Ansteuerung vorgesehen werden: der Leistungsschalter $S_1$ (131) und $S_4$ (134) werden immer komplementär zu den Leistungsschaltern $S_3$ (133) und $S_2$ (132) geschaltet. Die Einschaltzeitdauer von S1 und S4 beträgt DT. Dann lässt sich im stationären Zustand das Übersetzungsverhältnis wie folgt herleiten:

$$\frac{U_A}{U_E} = \frac{D}{2D-1}$$

Dieses Übersetzungsverhältnis ist graphisch in Fig. 5b dargestellt.

Der hier dargestellte Konverter 500 kann entweder als Hochsetzsteller oder als Inverswandler betrieben werden.

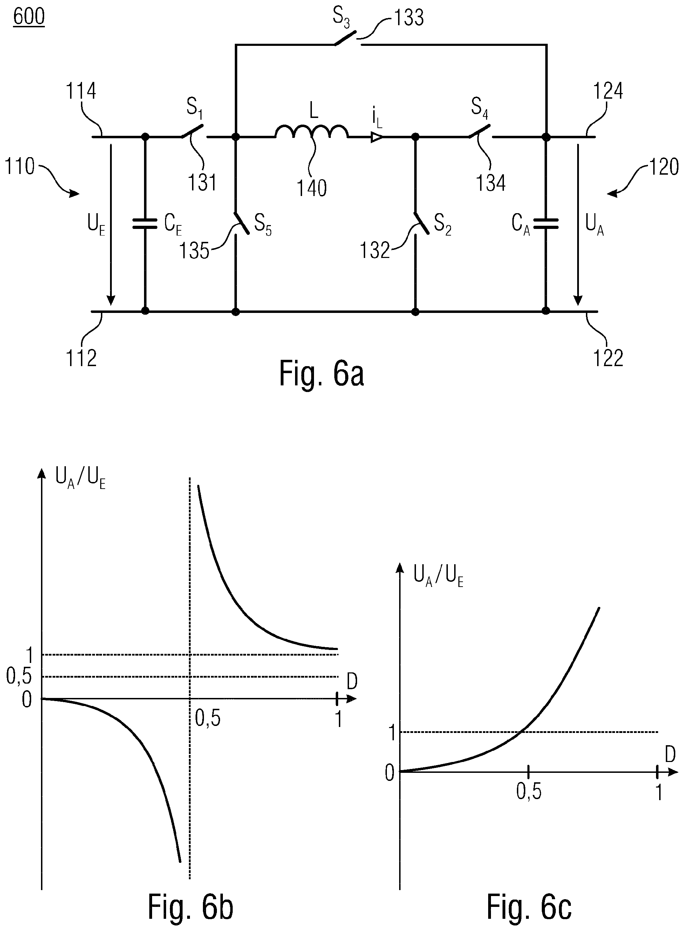

Fig. 6a zeigt eine weitere Variante des vorliegenden Konverters 600. Dieser entspricht dem vorliegenden Konverter 500, wobei allerdings auf der ersten Seite der Speicherdrossel 140 ein weiterer Leistungsschalter, hier $S_5$ bzw. mit dem Bezugszeichen 135 versehen derart vorgesehen ist, dass er die Speicherdrossel 140 mit dem ersten Potenzialabgriff 112 bzw. 114 verbindet. Dieser vorliegende Konverter kann beispielsweise mittels folgenden zwei Ansteuerungsvarianten angesteuert werden.

Entsprechen einer ersten Ansteuerungsvariante kann der Leistungsschalter $S_2$ (132) dauerhaft ausgeschaltet sein, so dass dann bei komplementärer Ansteuerung der Leistungsschalter $S_1$ und $S_4$ (131, 134) gegenüber den Leistungsschaltern $S_3$ und $S_5$ (133 und 135) sich ein stationärer Zustand einstellt. Dieser ist wie folgt definiert:

$$\frac{U_A}{U_E} = \frac{D}{2D-1}$$

Ausgehend von dieser Formel ergibt sich ein Übersetzungsverhältnis, das in Fig. 6b dargestellt ist.

Entsprechend einer weiteren Ansteuerung kann der Leistungsschalter $S_3$ dauerhaft ausgeschaltet sein. Bei komplementärer Taktung der Leistungsschalter $S_1$ und $S_2$ gegenüber den Leistungsschaltern S4 und S5 stellt sich folgendes Übersetzungsverhältnis ein:

$$\frac{U_A}{U_E} = \frac{D}{1-D}$$

Hieraus ergibt sich ein Übersetzungsverhältnis, welches in Fig. 6c dargestellt ist.

Diese Variante 700 kann sowohl als DC/DC-Wandler als auch als DC/AC-Wechselrichter betrieben werden. Die Ausgangsspannung $U_A$ können ebenfalls von minus unendlich bis +oovariieren. Deshalb kann man ebenfalls bei dieser Variante die Eingangsspannung reduzieren, um die Leistungshalbleiter mit kleineren Spannungsfestigkeiten einzusetzen und die Kernverluste in der Speicherdrossel zu verringern.

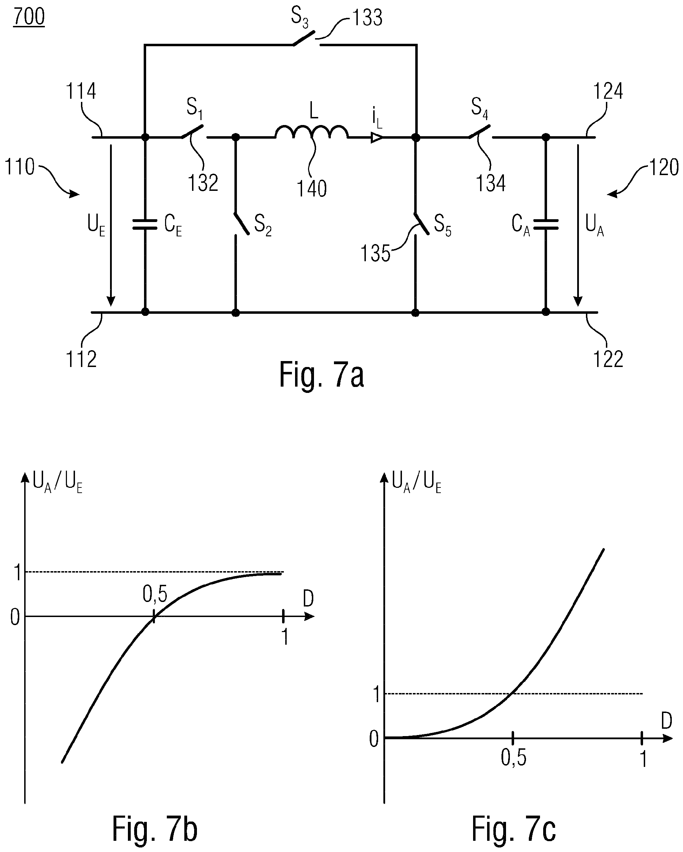

Fig. 7a zeigt eine weitere Variante des vorliegenden Konverters, nämlich den vorliegenden Konverter 700. Dieser entspricht im Wesentlichen den vorliegenden Konverter 600, wobei allerdings die erste und zweite Seite der Speicherdrossel 140 vertauscht sind. Hieraus ergibt sich also, dass bei dem vorliegenden Konverter 700 die erste Seite der Speicherdrossel 140 aufseiten des vierten Leistungsschalters 134 bzw. aufseiten des zweiten Potenzialabgriffes 124 liegt. Diese erste Seite der Speicherdrossel 140 ist in schaltbarer Weise über den Leistungsschalter 133 mit dem zweiten Potenzialabgriff 114 verbindbar.

Zusätzlich ist diese erste Seite der Speicherdrossel 140 mit dem weiteren Leistungsschalter 135 in schaltbarer Weise mit dem ersten Potenzialabgriff 112 bzw. 122 koppelbar.

Die zweite Seite der Speicherdrossel 140 ist in schaltbarer Weise über den Leistungsschalter 131 mit dem zweiten Potenzialabgriff 114 sowie in schaltbarer Weise über den Schalter 132 mit dem ersten Potenzialabgriff 112 bzw. 122 koppelbar.

Für den vorliegenden Konverter 700 gibt es folgende zwei unterschiedliche Ansteuerungsvarianten: $S_5$ ist dauerhaft geschlossen, $S_1$ und $S_4$ werden komplementär zu $S_2$ und $S_3$ getaktet. Hierdurch ergibt sich also der stationäre Zustand:

$$\frac{U_A}{U_E} = \frac{2D-1}{D}$$

Auch dieser stationäre Zustand ist in Fig. 7b graphisch illustriert.

Eine weitere Ansteuerungsvariante ist, dass $S_3$ dauerhaft ausgeschaltet ist, während $S_1$ und $S_5$ komplementär zu $S_2$ und $S_4$ getaktet werden. Daraus ergibt sich

$$\frac{U_A}{U_E} = \frac{D}{1-D}.$$

Dieses Übersetzungsverhältnis ist in Fig. 7c graphisch illustriert. Dieser vorliegende Konverter 700 kann sowohl als DC/DC-Wandler als auch als DC/AC-Wechselrichter betrieben werden. Die Ausgangsspannung $U_A$ kann von minus unendlich bis $+\infty$ variieren. Folglich kann man bei dieser Variante die Eingangsspannung reduzieren. Dadurch können einerseits die Sperrspannungsbelastungen von $S_3$ und $S_4$ verringert werden. Entsprechend kann man für die gleiche Anwendung Leistungshalbleiter mit kleinerer Spannungsfestigkeit ansetzen. Andererseits werden dadurch ebenfalls die Kernverluste in der Speicherdrossel 140 vermindert.

Entsprechend weiteren Ausführungsbeispielen können die drei Varianten des vorliegenden Konverters 500, 600 und 700 auch durch Modulation der Phasenverschiebung der Ansteuerungssignale und Schaltfrequenz hocheffizient betrieben werden.

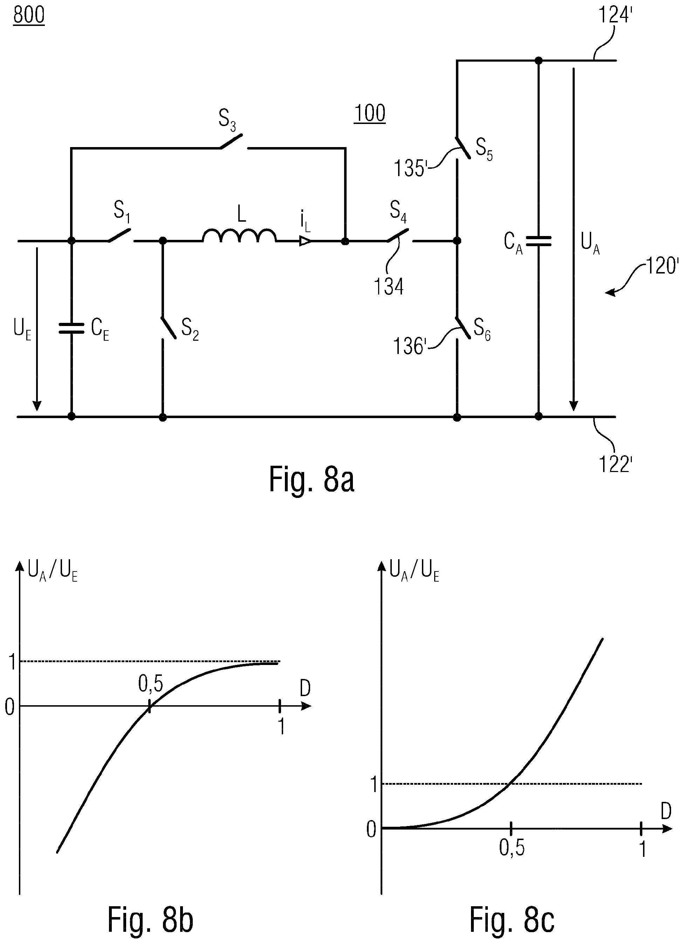

Fig. 8a zeigt einen weiteren vorliegenden Konverter 800, der im Kern dem vorliegenden Konverter 100 entspricht, wobei aufseiten des Spannungsausgangs 120' zusätzliche Leistungsschalter 135' und 136' vorgesehen sind. Diese sind derart angeordnet, dass der Leistungsschalter 134 in schaltbarer Weise über den Leistungsschalter 135' mit dem zweiten Potenzialabgriff 124" verbindbar ist. In gleicher Weise ist der Leistungsschalter 134 über den Leistungsschalter 136' mit dem ersten Potenzialabgriff 122' verbindbar.

An dieser Stelle sei angemerkt, dass der Ausgangskondensator 126 zwischen den zwei Abgriffen 122' und 124' vorgesehen ist.

Für den vorliegenden Konverter 800 gibt es folgende exemplarische Ansteuerungsvarianten: $S_5$ ist dauerhaft eingeschaltet, während $S_6$ dauerhaft ausgeschaltet ist. $S_1$ und $S_4$ werden komplementär zu $S_2$ und $S_3$ getaktet. Im stationären Zustand stellt sich dadurch folgendes Übersetzungsverhältnis ein:

$$\frac{U_A}{U_E} = \frac{2D-1}{D}$$

Dieses Übersetzungsverhältnis ist beispielsweise in Fig. 8b graphisch dargestellt.

Eine weitere Ansteuerung besteht darin, dass $S_3$ dauerhaft ausgeschaltet ist und $S_4$ dauerhaft eingeschaltet ist. $S_1$ und $S_6$ werden komplementär zu $S_2$ und $S_5$ getaktet. Dann gilt:

$$\frac{U_A}{U_E} = \frac{D}{1-D}$$

Das entsprechende Übersetzungsverhältnis ist in der Graphik aus Fig. 8c dargestellt.

Der vorliegende Konverter 800 kann sowohl als DC/DC-Wandler oder auch als DC/AC-Wechselrichter betrieben werden. Die Ausgangsspannung $U_A$ kann von minus unendlich variieren. Folglich kann man bei dieser Variante die Eigenspannungen reduzieren. Dadurch können einerseits die Sperrspannungsbelastungen von $S_3$ und $S_4$ verringert werden. Entsprechend kann man für die gleiche Anwendung Leistungshalbleiter mit kleinerer Spannungsfestigkeit einsetzen. Andererseits werden dadurch ebenfalls die Kernverluste in der Speicherdrossel vermindert.

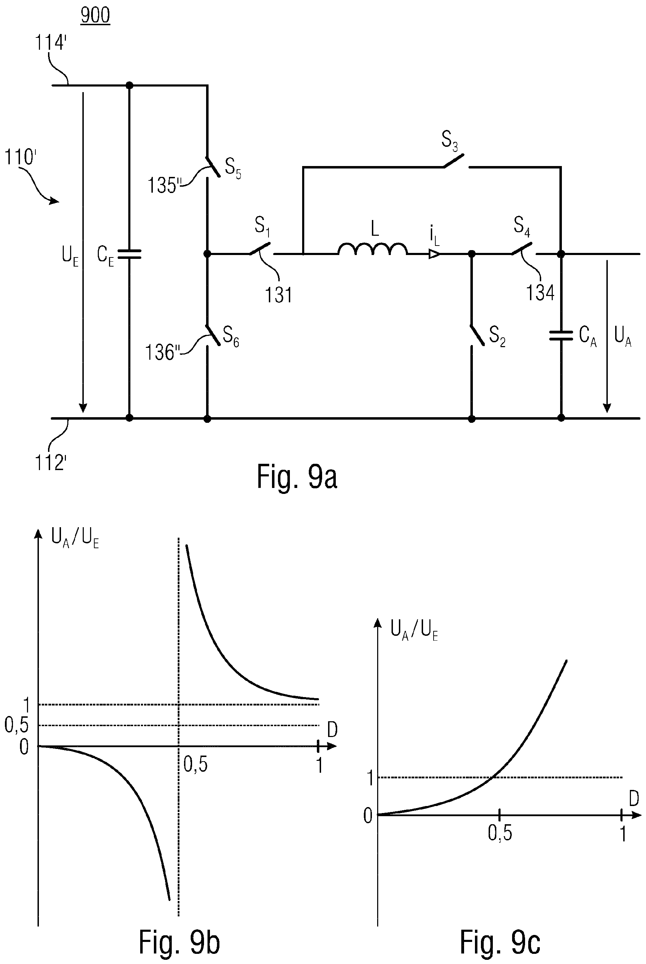

Fig. 9a zeigt einen vorliegenden Konverter 900, der im Kern dem vorliegenden Konverter 500 entspricht. Zusätzlich ist auf Eingangsseite (vgl. Eingang 110') der fünfte und sechste Leistungsschalter 135" und 136" vorgesehen.

Der Leistungsschalter 135" ist derart mit dem Leistungsschalter 131 gekoppelt, dass der Leistungsschalter 131 über den Leistungsschalter 135" mit dem zweiten Potenzialabgriff 114' des Eingangs 110' koppelbar ist. Zwischen dem Leistungsschalter 131 und dem ersten Potenzialabgriff 112' ist der sechste Leistungsschalter 136' vorgesehen.

Für diese Variante des vorliegenden Konverters 900 gibt es folgende zwei Ansteuerungsvarianten: $S_5$ ist dauerhaft eingeschaltet, während $S_6$ dauerhaft ausgeschaltet ist. $S_1$ und $S_4$ werden komplementär zu $S_3$ und $S_2$ getaktet. Im stationären Zustand stellt sich so

$$\frac{U_A}{U_E} = \frac{D}{2D-1}$$

ein. Diese ist auch in Fig. 9b graphisch dargestellt.

Alternativ kann entsprechend einer weiteren Ansteuerung $S_1$ dauerhaft eingeschaltet sein und $S_3$ dauerhaft ausgeschaltet sein. $S_5$ und $S_2$ werden komplementär zu $S_6$ und $S_4$ getaktet, so dass gilt:

$$\frac{U_A}{U_E} = \frac{D}{1-D}$$

Diese Variante ist in Fig. 9b graphisch illustriert.

Der vorliegende Konverter 900 kann sowohl als DC/DC-Wandler oder auch als DC/AC-Wechselrichter betrieben werden. Die Ausgangsspannung $U_A$ kann ebenfalls von minus unendlich bis $+\infty$ variieren. Deshalb kann man ebenfalls bei dieser Variante die Eingangsspannung reduzieren, um Leistungshalbleiter mit kleineren Spannungsfestigkeiten einzusetzen und die Kernverluste in der Speicherdrossel zu verringern.

Wie schon oben bei den anderen Varianten beschrieben, kann auch hier bei dem vorliegenden Konverter 800 und 900 ebenfalls durch Modulation der Phasenverschiebung der Ansteuerungssignale und Schaltfrequenzen die Effizienz weiter gesteigert werden.

Die oben erläuterten Ansteuerungsweisen Alpha 1 bis Alpha 4 ermöglichen den Betrieb als DC/AC-Wechselrichter. Wie bereits erläutert, kann die Ausgangsspannung $U_A$ des vorliegenden Konverters in Abhängigkeit des Tastverhältnisses D kontinuierlich von minus unendlich bis maximal $U_E$ variieren. D.h. wenn man die Eingangsspannung des Konverters konstant auf $U_E$ hält und das Tastverhältnis D in Abhängigkeit der Zeit moduliert, kann man am Ausgang des Konverters eine sinusförmige Spannung, deren Amplitude kleiner oder gleich $U_E$ ist, erzeugen. Hierzu eignet sich prinzipiell jedes erläuterte Ansteuerungskonzept $\alpha1$ bis $\alpha4$.

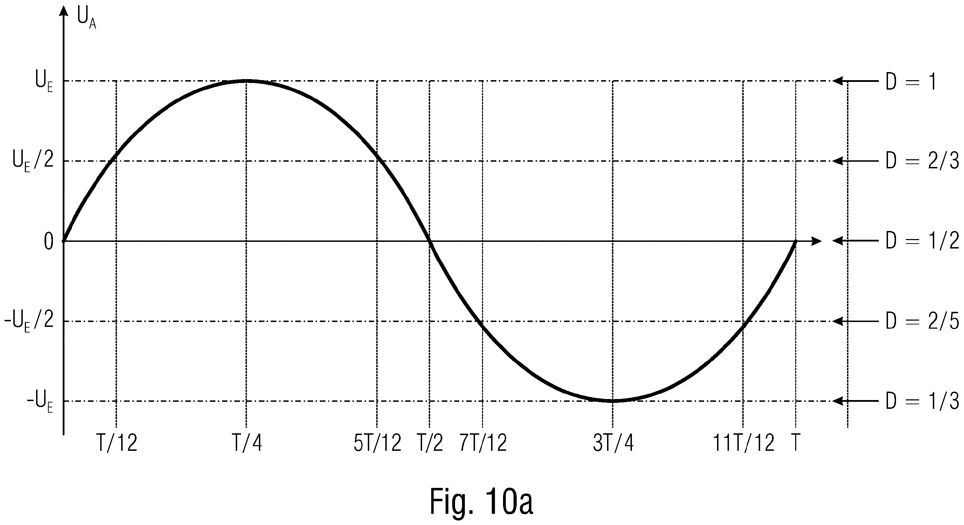

In Fig. 10a wird ein Ausführungsbeispiel der zeitlichen Modulation des Tastverhältnisses unter Verwendung der Ansteuerungskonzepte $\alpha1$ bis $\alpha4$ dargestellt.

Als Alternative kann man entsprechend Ausführungsbeispielen auch das diskrete Ansteuerungskonzept $\alpha5$ mit die andere Ansteuerungskonzepte $\alpha1$ bis $\alpha4$ kombinieren, um auch den in Fig. 10a dargestellten Spannungsverlauf, hier Sinusform, zu erzeugen.

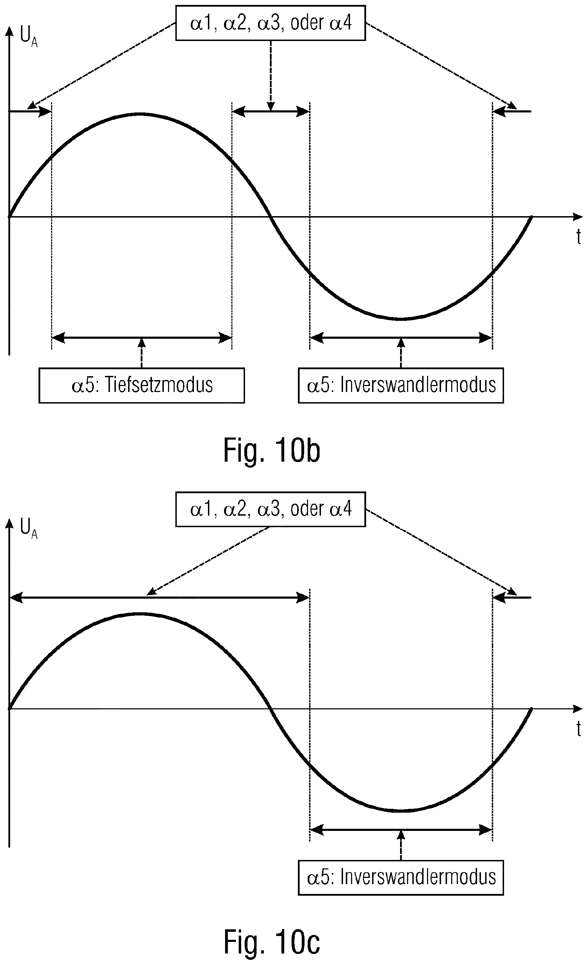

Eine derartige Variante ist in der aus Fig. 10b illustriert: Für die Übergangsphase (in der Nähe des Nulldurchgangs) werden die Ansteuerungskonzepte $\alpha1$, $\alpha2$, $\alpha3$ oder $\alpha4$ eingesetzt. Für die positive Halbperiode der sinusförmigen Ausgangsspannung werden $S_3$ dauerhaft aus- und $S_4$ dauerhaft eingeschaltet und zugleich $S_1$ und $S_2$ werden komplementär angesteuert. Der vorliegende Konverter funktioniert wie ein Tiefsetzsteller. Mit Hilfe einem innerhalb einer Schaltperiode zweimal umgedrehten Speicherdrosselstrom können die Schalter $S_1$ und $S_2$ immer weichgeschaltet. Durch Modulation der Schaltperiode der PWM-Signale lassen sich die Verluste minimieren.

Für die negativen Halbperiode der sinusförmigen Ausgangsspannung werden $S_1$ dauerhaft aus- und $S_2$ dauerhaft eingeschaltet und zugleich $S_3$ und $S_4$ werden komplementär angesteuert. Der vorliegende Konverter funktioniert wie ein bidirektionale Inverswandler (inverting Buck-Boost Converter ). Mit Hilfe einem innerhalb einer Schaltperiode zweimal umgedrehten Speicherdrosselstrom können die Schalter $S_3$ und $S_4$ ebenfalls immer weichgeschaltet. Durch Modulation der Schaltperiode der PWM-Signale lassen sich die Verluste minimieren.

Fig. 10c illustriert eine weitere Variante, bei der in der positiven Halbperiode und am Anfang und Ende der negativen Halbperiode $\alpha1$, $\alpha2$, $\alpha3$ oder $\alpha4$ genutzt wird, während in der negativen Halbperiode $\alpha5$ zum Einsatz kommt

Der vorliegende Konverter ist je nach Ansteuerung ausgebildet, um nicht nur einen DC/DC-Wandler oder DC/AC-Wechselrichter darzustellen, sondern auch einen AC/DC-Konverter.

Auch wenn obige Ausführungsbeispiele immer im Zusammenhang mit einer Vorrichtung bzw. einem vorliegenden Konverter erläutert werden, sei darauf hingewiesen, dass sich weitere Ausführungsbeispiele auf eine Steuerung des vorliegenden Konverters beziehen. Diese Steuerung steuert dann entsprechend die mindestens vier Leistungshalb-

leiter $S_1$ bis $S_4$ oder auch die sechs Leistungshalbleiter oder fünf Leistungshalbleiter an. Diese Steuerung kann in Hardware oder in Software implementiert sein.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1.  Stromrichterschaltung (100, 100', 400, 500, 600, 700, 800, 900) mit folgenden Merkmalen:

    ein Spannungseingang (110, 110') mit einem ersten Potenzialabgriff (112, 112') und einem zweiten Potenzialabgriff (114, 114'),
    wobei zwischen dem ersten Potenzialabgriff (112, 112') und dem zweiten Potenzialabgriff (114, 114') des Spannungseingangs (110, 110') ein Eingangskondensator (116) angeordnet ist;
    ein Spannungsausgang (120) mit einem ersten Potenzialabgriff (122) und einem zweiten Potenzialabgriff (124), wobei der erste Potenzialabgriff (122) des Spannungsausgangs (120) mit dem ersten Potenzialabgriff (112, 112') des Spannungseingangs (110, 110') verbunden ist und wobei zwischen dem ersten Potenzialabgriff (122) und dem zweiten Potenzialabgriff (124) des Spannungsausgangs (120) ein Ausgangskondensator (126) angeordnet ist;
    einer Speicherdrossel (140), die zwischen dem zweiten Potenzialabgriff (114, 114', 124) des Spannungseingangs (110, 110') und dem zweiten Potenzialabgriff (114, 114', 124) des Spannungsausgangs (120) angeordnet ist; und
    mindestens vier Leistungsschalter (131, 132, 133, 134), wobei ein erster der vier Leistungsschalter (131) den zweiten Potenzialabgriff (114, 114') des Spannungseingangs (110, 110') in schaltbarer Weise mit einer ersten Seite der Speicherdrossel (140) koppelt und wobei ein vierter der vier Leistungsschalter (134) den zweiten Potenzialabgriff (124) des Spannungsausgangs (120) in schaltbarer Weise mit der Speicherdrossel (140) koppelt,
    wobei ein dritter der vier Leistungsschalter (133) den zweiten Potenzialabgriff (114, 114',124) des Spannungseingangs (110, 110') oder des Spannungsausgangs (120) in schaltbarer Weise mit einer ersten Seite der Speicherdrossel (140) koppelt und
    wobei ein zweiter der vier Leistungsschalter (132) den ersten Potenzialabgriff (112, 112', 114) des Spannungseingangs (110, 110') und des Spannungsausgangs (120) in schaltbarer Weise mit einer zweiten Seite der Speicherdrossel (140) koppelt;
    wobei die Stromrichterschaltung (100, 100', 400, 500, 600, 700, 800, 900) eine Steuerung aufweist, **dadurch gekennzeichnet dass** die Steuerung ausgebildet ist, den ersten und vierten Leistungsschalter (131, 134) gegenüber dem zweiten und dritten Leistungsschalter (132, 133) komplementär anzusteuern;
    wobei die Steuerung ausgebildet ist, den ersten und zweiten Leistungsschalter (131, 132) durch die komplementären Signale PWM1H und PWM1L, die als PWM1 bezeichnet werden, anzusteuern, während der vierte bis dritte Leistungsschalter (134, 133) durch die Signale PWM2H und PWM2L, die als PWM2 bezeichnet werden, angesteuert werden, nämlich mit dem Tastverhältnisse D1 für PWM1 und mit dem Tastverhältnisse D2 für PWM2 gemäß folgender Gleichung definiert:

$$\frac{U_A}{U_E} = \frac{D_1 + D_2 - 1}{D_2}$$

    wobei $U_A$ die Spannung zwischen dem zweiten und dem ersten Potenzialabgriff (122) des Spannungsausgangs (120) ist und wobei $U_E$ die Spannung zwischen dem zweiten und dem ersten Potenzialabgriff (112, 112') des Spannungseingangs (110, 110') ist;
    wobei die Stromrichterschaltung (100, 100', 400, 500, 600, 700, 800, 900) eine Steuerung aufweist, die ausgebildet ist, um die vier Leistungsschalter (131, 132, 133, 134) so anzusteuern, dass
    ENTWEDER
    der zweite (132) vor den vierten Leistungsschalter (134) geschaltet wird und der vierte (134) vor den ersten Leistungsschalter (131) geschaltet wird und der erste (131) vor den dritten Leistungsschalter (133) geschaltet wird; wobei die Steuerung die Ansteuerung der vier Leistungsschalter (131, 132, 133, 134) in der Art vornimmt, dass folgende Bedingung erfüllt ist:

$$min_x \, l_{L,eff}{}^2(x), x = \{x_1 = \alpha, x_2 = f, D_1 = D_2 = D\}$$

*mit Nebenbedingungen*

- 
$$max\bigl(-D, -(1-D)\bigr) < x_1 \leq 0$$

- 
$$max\bigl(i_L(t_0), i_L(t_1)\bigr) \leq -l_{ent,min}$$

- 
$$min\bigl(i_L(t_2), i_L(t_3)\bigr) \geq -l_{ent,min}.$$

ODER

der erste (131) vor dem vierten Leistungsschalter (134) aktiviert wird, der vierte (134) vor dem zweiten Leistungsschalter (132) aktiviert wird und der zweite (132) vor dem dritten Leistungsschalter (133) aktiviert wird; wobei die Steuerung die Ansteuerung der vier Leistungsschalter (131, 132, 133, 134) derart vornimmt, dass die folgende Bedingung erfüllt ist:

$$min_x \, l_{L,eff}{}^2(x), x = \{x_1 = \alpha, x_2 = f, D_1 = D_2 = D\}$$

mit Nebenbedingungen

- 
$$0 \leq x_1 < \min(D, 1-D)$$

- 
$$max\bigl(i_L(t_0), i_L(t_1)\bigr) \leq -l_{ent,min}$$

- 
$$i_L(t_2) \geq l_{ent,min};$$

ODER

der erste (131) vor dem vierten Leistungsschalter (134) aktiviert ist, der vierte (134) vor dem dritten Leistungsschalter (133) aktiviert ist und der dritte (133) vor dem zweiten Leistungsschalter (132) aktiviert ist; wobei die Steuerung die Ansteuerung der vier Leistungsschalter (131, 132, 133, 134) derart vornimmt, dass die folgenden Bedingungen erfüllt sind:

$$min_x \, l_{L,eff}{}^2(x), x = \{x_1 = \alpha, x_2 = f\}$$

mit Nebenbedingungen

- 
$$0 \leq x_1 \leq D_1 - D_2$$

- 

$$i_L(t_1) \leq -l_{ent,min}$$

- 

$$i_L(t_2) \geq l_{ent,min}$$

ODER

der vierte (134) vor dem ersten Leistungsschalter (131) aktiviert wird, der erste (131) vor dem zweiten Leistungsschalter (132) aktiviert wird und der zweite (132) vor dem dritten Leistungsschalter (133) aktiviert wird; wobei die Steuerung die Ansteuerung der vier Leistungsschalter (131, 132, 133, 134) derart vornimmt, dass folgende Bedingung erfüllt ist: •

$$min_x \, l_{L,eff}^2(x), x = \{x_1 = \alpha, x_2 = f\}$$

mit Nebenbedingungen

- 

$$D_1 - D_2 \leq x_1 \leq 0$$

- 

$$max\big(i_L(t_0), i_L(t_1)\big) \leq -l_{ent,min}$$

- 

$$min\big(i_L(t_2), i_L(t_3)\big) \geq l_{ent,min};$$

wobei $t_0$, $t_1$, $t_2$ Zeitpunkte sind, $i_L$ ein Strom durch die Induktivität, $l_{L,eff}$ ein Effektivwert des Speicherdrosselstroms, $l_{ent,min}$ ein minimal erforderliche Betrag des Speicherdrosselstroms, f eine Schaltfrequenz und $\alpha$ eine Phasenverschiebung zwischen Schaltzeitpunkten darstellt.

2. Stromrichterschaltung (100, 100', 400, 500, 600, 700, 800, 900) gemäß Anspruch 1, wobei der erste Leistungsschalter (131) komplementär gegenüber dem zweiten Leistungsschalter (132) angesteuert wird und wobei der vierte Leistungsschalter (134) komplementär gegenüber dem dritten Leistungsschalter (133) angesteuert wird.

3. Stromrichterschaltung (100, 100', 400, 500, 600, 700, 800, 900) gemäß Anspruch 2, wobei ein Schaltpunkt für die Schaltung zwischen dem vierten und dritten Leistungsschalter (134, 133) phasenverschoben um $\alpha$ gegenüber einem Schaltpunkt zwischen dem ersten und zweiten Leistungsschalter (132) ist.

4. Stromrichterschaltung (100, 100', 400, 500, 600, 700, 800, 900) gemäß Anspruch 1, wobei die Dauer der Aktivierung des ersten und vierten Leistungsschalter (131, 134) gleich ist und wobei die Dauer der Aktivierung des zweiten und dritten Leistungsschalters (132, 133) gleich ist.

5. Stromrichterschaltung (100, 100', 400, 500, 600, 700, 800, 900) gemäß Anspruch 1, wobei die Dauer der Aktivierung des ersten (131) und dritten Leistungsschalters (133) gleich ist und die Dauer der Aktivierung des zweiten (132) und vierten Leistungsschalters (134) gleich ist.

6. Stromrichterschaltung (100, 100', 400, 500, 600, 700, 800, 900) gemäß einem der Ansprüche 1 bis 5, wobei die Steuerung ausgebildet ist, das Tastverhältnis zu modulieren und durch Modulation des Tastverhältnisses zwischen einem ersten und einem zweiten Modus hin und her zu wechseln, wobei die Stromrichterschaltung (100, 100', 400, 500, 600, 700, 800, 900) in dem ersten Modus ausgebildet ist, ausgehend von einer Gleichspannung zwischen dem ersten und zweiten Potenzialabgriff (114, 114') am Spannungseingang (110, 110') eine Gleichspannung zwischen dem ersten und zweiten Potenzialabgriff (124) am Spannungsausgang (120) bereitzustellen und wobei die Stromrichterschaltung (100, 100', 400, 500, 600, 700, 800, 900) in dem zweiten Modus ausgebildet ist ausgehend von einer Gleichspannung zwischen dem ersten und zweiten Potenzialabgriff (114, 114') am Spannungseingang (110, 110') eine Wechselspannung zwischen dem ersten und zweiten Potenzialabgriff (124) am Spannungsausgang (120) bereitzustellen.

7. Stromrichterschaltung (100, 100', 400, 500, 600, 700, 800, 900) gemäß Anspruch 1, wobei die Stromrichterschaltung (100, 100', 400, 500, 600, 700, 800, 900) einen weiteren Leistungsschalter (135) aufweist, der den ersten Potenzialabgriff (112, 112', 122) des Spannungseingangs (110, 110') und des Spannungsausgangs (120) in schaltbarer Weise mit der ersten Seite der Speicherdrossel (140) koppelt.

8. Stromrichterschaltung (100, 100', 400, 500, 600, 700, 800, 900) gemäß einem der vorherigen Ansprüche, wobei die Stromrichterschaltung (100, 100', 400, 500, 600, 700, 800, 900) einen fünften und sechsten Leistungsschalter (135", 136") aufweist, die derart mit dem vierten Leistungsschalter (134) gekoppelt sind, dass der vierte Leistungsschalter (134) in schaltbarer Weise über den fünften Leistungsschalter (135", 136") mit dem zweiten Potenzialabgriff (124) des Spannungsausgangs (120) gekoppelt ist und über den sechsten Leistungsschalter (135", 136") in schaltbarer Weise mit dem ersten Potenzialabgriff (122) des Spannungsausgangs (120) gekoppelt ist.

9. Stromrichterschaltung (100, 100', 400, 500, 600, 700, 800, 900) gemäß Anspruch 8, wobei die Stromrichterschaltung (100, 100', 400, 500, 600, 700, 800, 900) eine Steuerung aufweist, die ausgebildet ist, den ersten und vierten Leistungsschalter (131, 134) komplementär zu dem zweiten und dritten Leistungsschalter (132, 133) anzusteuern, während der fünfte Leistungsschalter (135") geschlossen und der sechste Leistungsschalter (136") offen ist, so dass ein Übersetzungsverhältnis von - oobis 1 einstellbar ist.

10. Stromrichterschaltung (100, 100', 400, 500, 600, 700, 800, 900) gemäß einem der Ansprüche 1 bis 9, wobei die Stromrichterschaltung (100, 100', 400, 500, 600, 700, 800, 900) einen fünften und sechsten Leistungsschalter (136") aufweist, die derart mit dem ersten Leistungsschalter (131) gekoppelt sind, dass der erste Leistungsschalter (131) über den fünften Leistungsschalter (135") mit dem zweiten Potenzialabgriff (114, 114') des Spannungseingangs (110, 110') koppelbar ist und der erste Leistungsschalter (131) über den sechsten Leistungsschalter (136" ) mit dem ersten Potenzialabgriff (112, 112') des Spannungseingangs (110, 110') koppelbar ist.

11. Stromrichterschaltung (100, 100', 400, 500, 600, 700, 800, 900) gemäß Anspruch 10, wobei die Stromrichterschaltung (100, 100', 400, 500, 600, 700, 800, 900) eine Steuerung aufweist, die ausgebildet ist, um die vier Leistungsschalter (131, 132, 133, 134) so anzusteuern, dass der erste und vierte Leistungsschalter (131, 134) komplementär zu dem dritten (133) und zweiten (132) geschaltet wird, während der fünfte Leistungsschalter (135" ) geschlossen und der sechste Leistungsschalter (136") offen ist, so dass das Übersetzungsverhältnis von - ∞ bis 1 einstellbar ist.

12. Dreiphasige Stromrichterschaltung (100, 100', 400, 500, 600, 700, 800, 900) mit drei Stromrichterschaltungen (100, 100', 400, 500, 600, 700, 800, 900) gemäß einem der vorherigen Ansprüche, die derart parallel geschaltet ist, dass alle ersten Potenzialabgriffe (122) der Spannungseingänge zusammengeschaltet sind und alle ersten Potenzialabgriffe (122) der Spannungsausgänge zusammengeschaltet sind, wobei die ersten Potenzialabgriffe (122) der Spannungsausgänge einen Nullleiter (422) bilden,
wobei alle zweiten Potenzialabgriffe (114, 114', 124) der Spannungseingänge zusammengeschaltet sind und wobei jeder zweite Potenzialabgriff (114, 114',124) der Spannungsausgänge je eine Phase (424a, 424b, 424c) bildet.

13. Dreiphasige Stromrichterschaltung (100, 100', 400, 500, 600, 700, 800, 900) mit einer Stromrichterschaltung (100, 100', 400, 500, 600, 700, 800, 900) gemäß einem der Ansprüche 1 bis 11, die um zwei weitere Pfade (451) erweitert ist, wobei jeder Pfad (451) einen Spannungsausgang (120) mit einem zweiten Potenzialabgriff (124) und einen Ausgangskondensator (126) aufweist und wobei jeder Pfad (451) eine Speicherdrossel (140) aufweist, die mit einer ersten Seite mit den anderen Speicherdrosseln (140) gekoppelt ist und mit einer zweiten Seite über einen jeweiligen dritten Leistungsschalter (133) mit dem zweiten Potenzialabgriff (114, 114') des Spannungseingangs (110, 110') gekoppelt ist,
wobei jeder Pfad (451) einen vierten Leistungsschalter (134) zwischen der Speicherdrossel (140) und dem zweiten Potenzialabgriff (124) des Spannungsausgangs (120) aufweist, wobei jeder der drei zweiten Potenzialabgriffe (124) der drei Spannungsausgänge eine Phase (424a, 424b, 424c) bildet.

**14.** Verfahren zur Steuerung einer Stromrichterschaltung (100, 100', 400, 500, 600, 700, 800, 900) nach einem der Ansprüche 1 bis 13, wobei die vier Leistungsschalter (131, 132, 133, 134) unabhängig voneinander derart angesteuert werden, dass zumindest zwei Leistungsschalter komplementär geschaltet sind; und dass der erste und zweite Leistungsschalter (131, 132) durch die komplementären Signale PWM1H und PWM1L, die als PWM1 bezeichnet werden, angesteuert wird, während der vierte bis dritte Leistungsschalter (134, 133) durch die Signale PWM2H und PWM2L, die als PWM2 bezeichnet werden, angesteuert werden, nämlich mit dem Tastverhältnisse D1 für PWM1 und mit dem Tastverhältnisse D2 für PWM2 gemäß folgender Gleichung definiert:

$$\frac{U_A}{U_E} = \frac{D_1 + D_2 - 1}{D_2}$$

wobei $U_A$ die Spannung zwischen dem zweiten und dem ersten Potenzialabgriff (122) des Spannungsausgangs (120) ist und wobei $U_E$ die Spannung zwischen dem zweiten und dem ersten Potenzialabgriff (112, 112') des Spannungseingangs (110, 110') ist;
wobei die Ansteuerung der vier Leistungsschalter (131, 132, 133, 134) so erfolgt, dass
ENTWEDER
der zweite (132) vor den vierten Leistungsschalter (134) geschaltet wird und der vierte (134) vor den ersten Leistungsschalter (131) geschaltet wird und der erste (131) vor den dritten Leistungsschalter (133) geschaltet wird; wobei die Steuerung die Ansteuerung der vier Leistungsschalter (131, 132, 133, 134) in der Art vornimmt, dass folgende Bedingung erfüllt ist:

$$min_x \, l_{L,eff}{}^2(x), x = \{x_1 = \alpha, x_2 = f, D_1 = D_2 = D\}$$

*mit Nebenbedingungen*

- 
$$max\big(-D, -(1-D)\big) < x_1 \leq 0$$

- 
$$max\big(i_L(t_0), i_L(t_1)\big) \leq -l_{ent,min}$$

- 
$$min\big(i_L(t_2), i_L(t_3)\big) \geq -l_{ent,min}.$$

ODER der erste (131) vor dem vierten Leistungsschalter (134) aktiviert wird, der vierte (134) vor dem zweiten Leistungsschalter (132) aktiviert wird und der zweite (132) vor dem dritten Leistungsschalter (133) aktiviert wird; wobei die die Steuerung die Ansteuerung der vier Leistungsschalter (131, 132, 133, 134) derart vornimmt, dass die folgende Bedingung erfüllt ist:

$$min_x \, l_{L,eff}{}^2(x), x = \{x_1 = \alpha, x_2 = f, D_1 = D_2 = D\}$$

mit Nebenbedingungen

- 
$$0 \leq x_1 < min(D, 1-D)$$

-

$$max\big(i_L(t_0), i_L(t_1)\big) \leq -l_{ent,min}$$

- 

$$i_L(t_2) \geq l_{ent,min};$$

ODER

der erste (131) vor dem vierten Leistungsschalter (134) aktiviert ist, der vierte (134) vor dem dritten Leistungsschalter (133) aktiviert ist und der dritte (133) vor dem zweiten Leistungsschalter (132) aktiviert ist; wobei die Steuerung die Ansteuerung der vier Leistungsschalter (131, 132, 133, 134) derart vornimmt, dass die folgenden Bedingungen erfüllt sind:

$$min_x\, l_{L,eff}{}^2(x), x = \{x_1 = \alpha, x_2 = f\}$$

mit Nebenbedingungen

- 

$$0 \leq x_1 \leq D_1 - D_2$$

- 

$$i_L(t_1) \leq -l_{ent,min}$$

- 

$$i_L(t_2) \geq l_{ent,min}$$

ODER

der vierte (134) vor dem ersten Leistungsschalter (131) aktiviert wird, der erste (131) vor dem zweiten Leistungsschalter (132) aktiviert wird und der zweite (132) vor dem dritten Leistungsschalter (133) aktiviert wird; wobei die Steuerung die Ansteuerung der vier Leistungsschalter (131, 132, 133, 134) derart vornimmt, dass folgende Bedingung erfüllt ist:

- $min_x\, l_{L,eff}{}^2(x), x = \{x_1 = \alpha, x_2 = f\}$

mit Nebenbedingungen

- 

$$D_1 - D_2 \leq x_1 \leq 0$$

- 

$$max\big(i_L(t_0), i_L(t_1)\big) \leq -l_{ent,min}$$

-

$$min\big(i_L(t_2), i_L(t_3)\big) \geq l_{ent,min};$$

wobei $t_0$, $t_1$, $t_2$ Schaltzeitpunkte sind, $i_L$ ein Strom durch die Induktivität, $I_{L,eff}$ ein Effektivwert des Speicherdrosselstroms, $l_{ent,min}$ ein minimal erforderliche Betrag des Speicherdrosselstroms, feine Schaltfrequenz, und $\alpha$ eine Phasenverschiebung zwischen Schaltzeitpunkten darstellt.

**15.** Computerprogramm, umfassend Befehle, die bewirken, dass die Vorrichtung des Anspruchs 1 die Verfahrensschritte nach Anspruch 14 ausführt.

**Claims**

**1.** Current converter circuit (100, 100', 400, 500, 600, 700, 800, 900) comprising:

a voltage input (110, 110') comprising a first potential tap (112, 112') and a second potential tap (114, 114'), wherein an input capacitor (116) is arranged between the first potential tap (112, 112') and the second potential tap (114, 114') of the voltage input (110, 110');
a voltage output (120) comprising a first potential tap (122) and a second potential tap (124), the first potential tap (122) of the voltage output (120) being connected to the first potential tap (112, 112') of the voltage input (110, 110'), and an output capacitor (126) being arranged between the first potential tap (122) and the second potential tap (124) of the voltage output (120);
a storage choke (140) arranged between the second potential tap (114, 114', 124) of the voltage input (110, 110') and the second potential tap (114, 114', 124) of the voltage output (120); and
at least four power switches (131, 132, 133, 134), wherein a first one of the four power switches (131) couples the second potential tap (114, 114') of the voltage input (110, 110') to a first side of the storage choke (140) in a switchable manner,
and wherein a fourth one of the four power switches (134) couples the second potential tap (124) of the voltage output (120) to the storage choke (140) in a switchable manner,
wherein a third one of the four power switches (133) couples the second potential tap (114, 114', 124) of the voltage input (110, 110') or of the voltage output (120) to a first side of the storage choke (140) in a switchable manner, and wherein a second one of the four power switches (132) couples the first potential tap (112, 112', 114) of the voltage input (110, 110') and of the voltage output (120) to the second side of the storage choke (140) in a switchable manner;
the current converter circuit (100, 100', 400, 500, 600, 700, 800, 900) comprising a controller, **characterized in that** the controller is configured to control the first and
fourth power switches (131, 134) in a manner complementary to that of the second and third power switches (132, 133);
wherein the controller is configured to control the first and second power switches (131, 132) by means of the complementary signals PWM1H and PWM1L, which are referred to as PWM1, while the fourth to third power switches (134, 133) are controlled by the signals PWM2H and PWM2L, which are referred to as PWM2,
namely with the duty cycle D1 for PWM1 and with the duty cycle D2 for PWM2, defined in accordance with the following equation:

$$\frac{U_A}{U_E} = \frac{D_1 + D_2 - 1}{D_2}$$

wherein $U_A$ is the voltage between the second and first potential taps (122) of the voltage output (120), and wherein $U_E$ is the voltage between the second and first potential taps (112, 112') of the voltage input (110, 110');
the current converter circuit (100, 100', 400, 500, 600, 700, 800, 900) comprising a controller configured to control the four power switches (131, 132, 133, 134) such that
EITHER
the second power switch (132) is switched before the fourth one (134), and the fourth power switch (134) is switched before the first one (131), and the first power switch (131) is switched before the third one (133);
wherein the controller performs controlling of the four power switches (131, 132, 133, 134) in a manner such that the following condition is met:

$$min_x\ l_{L,eff}^2(x), x = \{x_1 = \alpha, x_2 = f, D_1 = D_2 = D\}$$

*with auxiliary conditions*

• 

$$max(-D, -(1-D)) < x_1 \le 0$$

• 

$$max(i_L(t_0), i_L(t_1)) \le -l_{ent,min}$$

• 

$$min(i_L(t_2), i_L(t_3)) \ge -l_{ent,min}.$$

OR the first power switch (131) is activated prior to the fourth one (134), the fourth power switch (134) is activated prior to the second one (132), and the second power switch (132) is activated prior to the third one (133); wherein the controller performs controlling of the four power switches (131, 132, 133, 134) in a manner such that the following condition is met:

$$min_x\ l_{L,eff}^2(x), x = \{x_1 = \alpha, x_2 = f, D_1 = D_2 = D\}$$

with auxiliary conditions

• 

$$0 \le x_1 < min\ (D, 1-D)$$

• 

$$max(i_L(t_0), i_L(t_1)) \le -l_{ent,min}$$

• 

$$i_L(t_2) \ge l_{ent,min};$$

OR
the first power switch (131) is activated prior to the fourth one (134), the fourth power switch (134) is activated prior to the third one (133), and the third power switch (133) is activated prior to the second one (132); wherein the controller performs controlling of the four power switches (131, 132, 133, 134) in a manner such that the following conditions are met:

$$min_x\ l_{L,eff}^2(x), x = \{x_1 = \alpha, x_2 = f\}$$

with auxiliary conditions

•

$$0 \leq x_1 \leq D_1 - D_2$$

- 

$$i_L(t_1) \leq -l_{ent,min}$$

- 

$$i_L(t_2) \geq l_{ent,min}$$

OR

the fourth power switch (134) is activated prior the first one (131), the first power switch (131) is activated prior to the second one (132), and the second power switch (132) is activated prior to the third one (133); wherein the controller performs controlling of the four power switches (131, 132, 133, 134) in a manner such that the following condition is met:

- $$min_x \ l_{L,eff}{}^2(x), x = \{x_1 = \alpha, x_2 = f\}$$

with auxiliary conditions

- 

$$D_1 - D_2 \leq x_1 \leq 0$$

- 

- 

$$max\big(i_L(t_0), i_L(t_1)\big) \leq -l_{ent,min}$$

$$min\big(i_L(t_2), i_L(t_3)\big) \geq l_{ent,min}.$$

wherein $t_0$, $t_1$, $t_2$ are points in time, $i_L$ is a current through inductance, $l_{L,eff}$ is an effective value of the storage choke current, $l_{ent,min}$ is a minimally required amount of the storage choke current, f is a switching frequency, and $\alpha$ is a phase shift between switching times.

2. Current converter circuit (100, 100', 400, 500, 600, 700, 800, 900) as claimed in claim 1, wherein the first power switch (131) is controlled in a manner complementary to that of the second power switch (132), and wherein the fourth power switch (134) is controlled in a manner complementary to that of the third power switch (133).

3. Current converter circuit (100, 100', 400, 500, 600, 700, 800, 900) as claimed in claim 2, wherein a switching point for switching between the fourth and third power switches (134, 133) is shifted in phase by $\alpha$ in relation to a switching point between the first and second power switches (132).

4. Current converter circuit (100, 100', 400, 500, 600, 700, 800, 900) as claimed in claim 1, wherein the durations of activation of the first and fourth power switches (131, 134) are identical, and wherein the durations of activation of the second and third power switches (132, 133) are identical.

5. Current converter circuit (100, 100', 400, 500, 600, 700, 800, 900) as claimed in claim 1, wherein the durations of activation of the first (131) and third power switches (133) are identical, and the durations of activation of the second (132) and fourth power switches (134) are identical.

6. Current converter circuit (100, 100', 400, 500, 600, 700, 800, 900) as claimed in any of claims 1 to 5, wherein the controller is configured to modulate the duty cycle and to switch back and forth between a first mode and a second mode due to the modulation of the duty cycle, the current converter circuit (100, 100', 400, 500, 600, 700, 800, 900) being configured, in the first mode, to provide, starting from a direct voltage between the first and second potential taps (114, 114') at the voltage input (110, 110'), a direct voltage between the first and second potential taps (124) at the voltage output (120), and the current converter circuit (100, 100', 400, 500, 600, 700, 800, 900) being configured, in the second mode, to provide, starting from a direct voltage between the first and second potential taps (114, 114') at the voltage input (110, 110'), an alternating voltage between the first and second potential taps (124) at the voltage output (120).

7. Current converter circuit (100, 100', 400, 500, 600, 700, 800, 900) as claimed in claim 1,
the current converter circuit (100, 100', 400, 500, 600, 700, 800, 900) comprising a further power switch (135) coupling the first potential tap (112, 112', 122) of the voltage input (110, 110') and of the voltage output (120) to the first side of the storage choke (140) in a switchable manner.

8. Current converter circuit (100, 100', 400, 500, 600, 700, 800, 900) as claimed in any of the previous claims, the current converter circuit (100, 100', 400, 500, 600, 700, 800, 900) comprising fifth and sixth power switches (135", 136"), which are coupled to the fourth power switch (134) such that the fourth power switch (134) is coupled to the second potential tap (124) of the voltage output (120) via the fifth power switch (135", 136") in a switchable manner and is coupled to the first potential tap (122) of the voltage output (120) via the sixth power switch (135", 136") in a switchable manner.

9. Current converter circuit (100, 100', 400, 500, 600, 700, 800, 900) as claimed in claim 8, the current converter circuit (100, 100', 400, 500, 600, 700, 800, 900) comprising a controller configured to control the first and fourth power switches (131, 134) in a manner complementary to that of the second and third power switches (132, 133), while the fifth power switch (135") is closed and the sixth power switch (136") is open, so that a transformation ratio of - ∞ to 1 may be set.

10. Current converter circuit (100, 100', 400, 500, 600, 700, 800, 900) as claimed in any of claims 1 to 9, the current converter circuit (100, 100', 400, 500, 600, 700, 800, 900) comprising fifth and sixth power switches (136") which are coupled to the first power switch (131) such that the first power switch (131) may be coupled to the second potential tap (114, 114') of the voltage input (110, 110') via the fifth power switch (135"), and that the first power switch (131) may be coupled to the first potential tap (112, 112') of the voltage input (110, 110') via the sixth power switch (136").

11. Current converter circuit (100, 100', 400, 500, 600, 700, 800, 900) as claimed in claim 10, the current converter circuit (100, 100', 400, 500, 600, 700, 800, 900) comprising a controller configured to control the four power switches (131, 132, 133, 134) such that the first and fourth power switches (131, 134) are switched in a manner complementary to that of the third (133) and second (132) power switches, while the fifth power switch (135") is closed and the sixth power switch (136") is open, so that a transformation ratio of - ∞ to 1 may be set.

12. Three-phase current converter circuit (100, 100', 400, 500, 600, 700, 800, 900) comprising three current converter circuits (100, 100', 400, 500, 600, 700, 800, 900) as claimed in any of the previous claims, which is switched in parallel such that all of the first potential taps (122) of the voltage inputs are interconnected, and all of the first potential taps (122) of the voltage outputs are interconnected, the first potential taps (122) of the voltage outputs forming a neutral conductor (422),
wherein all of the second potential taps (114, 114', 124) of the voltage inputs are interconnected, and wherein each second potential tap (114, 114', 124) of the voltage outputs forms one phase (424a, 424b, 424c) each.

13. Three-phase current converter circuit (100, 100', 400, 500, 600, 700, 800, 900) comprising a current converter circuit (100, 100', 400, 500, 600, 700, 800, 900) as claimed in any of claims 1 to 11, which is extended by two further paths (451), each path (451) comprising a voltage output (120) having a second potential tap (124), and an output capacitor (126), and wherein each path (451) comprises a storage choke (140) coupled to the other storage chokes (140) via a first side, and coupled to the second potential tap (114, 114') of the voltage input (110, 110') via a respective third power switch (133) via a second side,
wherein each path (451) comprises a fourth power switch (134) between the storage choke (140) and the second potential tap (124) of the voltage output (120), wherein each of the three second potential taps (124) of the three voltage outputs forms a phase (424a, 424b, 424c).

**14.** Method of controlling a current converter circuit (100, 100', 400, 500, 600, 700, 800, 900) as claimed in any of claims 1 to 13, wherein the four power switches (131, 132, 133, 134) are controlled independently of one another such that at least two power switches are switched in a complementary manner; and that

the first and second power switches (131, 132) are controlled by means of the complementary signals PWM1H and PWM1L, which are referred to as PWM1, while the fourth to third power switches (134, 133) are controlled by the signals PWM2H and PWM2L, which are referred to as PWM2, namely with the duty cycle D1 for PWM1 and with the duty cycle D2 for PWM2, defined in accordance with the following equation:

$$\frac{U_A}{U_E} = \frac{D_1 + D_2 - 1}{D_2}$$

wherein $U_A$ is the voltage between the second and first potential taps (122) of the voltage output (120), and wherein $U_E$ is the voltage between the second and first potential taps (112, 112') of the voltage input (110, 110'); wherein control of the four power switches (131, 132, 133, 134) is effected such that
EITHER
the second power switch (132) is switched before the fourth one (134), and the fourth power switch (134) is switched before the first one (131), and the first power switch (131) is switched before the third one (133); wherein the controller performs controlling of the four power switches (131, 132, 133, 134) in a manner such that the following condition is met:

$$min_x \, l_{L,eff}{}^2(x), x = \{x_1 = \alpha, x_2 = f, D_1 = D_2 = D\}$$

*with auxiliary conditions*

- 
- 
- 

$$max\big(-D, -(1 - D)\big) < x_1 \leq 0$$

$$max\big(i_L(t_0), i_L(t_1)\big) \leq -l_{ent,min}$$

$$min\big(i_L(t_2), i_L(t_3)\big) \geq -l_{ent,min}.$$

OR the first power switch (131) is activated prior to the fourth one (134), the fourth power switch (134) is activated prior to the second one (132), and the second power switch (132) is activated prior to the third one (133); wherein the controller performs controlling of the four power switches (131, 132, 133, 134) in a manner such that the following condition is met:

$$min_x \, l_{L,eff}{}^2(x), x = \{x_1 = \alpha, x_2 = f, D_1 = D_2 = D\}$$

with auxiliary conditions
- 

$$0 \leq x_1 < min \, (D, 1 - D)$$

- 

$$max\big(i_L(t_0), i_L(t_1)\big) \leq -l_{ent,min}$$

- 

$$i_L(t_2) \geq l_{ent,min};$$

OR

the first power switch (131) is activated prior to the fourth one (134), the fourth power switch (134) is activated prior to the third one (133), and the third power switch (133) is activated prior to the second one (132); wherein the controller performs controlling of the four power switches (131, 132, 133, 134) in a manner such that the following conditions are met:

$$min_x \; l_{L,eff}^2(x), x = \{x_1 = \alpha, x_2 = f\}$$

with auxiliary conditions

- 

$$0 \leq x_1 \leq D_1 - D_2$$

- 

$$i_L(t_1) \leq -l_{ent,min}$$

- 

$$i_L(t_2) \geq l_{ent,min}$$

OR

the fourth power switch (134) is activated prior the first one (131), the first power switch (131) is activated prior to the second one (132), and the second power switch (132) is activated prior to the third one (133); wherein the controller performs controlling of the four power switches (131, 132, 133, 134) in a manner such that the following condition is met:

- 

$$min_x \; l_{L,eff}^2(x), x = \{x_1 = \alpha, x_2 = f\}$$

with auxiliary conditions

- 

$$D_1 - D_2 \leq x_1 \leq 0$$

- 

$$max(i_L(t_0), i_L(t_1)) \leq -l_{ent,min}$$

- 

$$min(i_L(t_2), i_L(t_3)) \geq l_{ent,min};$$

wherein $t_0$, $t_1$, $t_2$ are switching times, $i_L$ is a current through inductance, $I_{L,eff}$ is an effective value of the storage choke current, $I_{ent,min}$ is a minimally required amount of the storage choke current, f is a switching frequency, and $\alpha$ is a phase shift between switching times.

**15.** Computer program including commands which cause the device of claim 1 to perform the method steps of claim 14.

**Revendications**

**1.** Circuit de conversion de courant (100, 100', 400, 500, 600, 700, 800, 900), aux caractéristiques suivantes:

une entrée de tension (110, 110') avec une première prise de potentiel (112, 112') et une deuxième prise de potentiel (114, 114'),
dans lequel est disposé, entre la première prise de potentiel (112, 112') et la deuxième prise de potentiel (114, 114') de l'entrée de tension (110, 110'), un condensateur d'entrée (116);
une sortie de tension (120) avec une première prise de potentiel (122) et une deuxième prise de potentiel (124), où la première prise de potentiel (122) de la sortie de tension (120) est connectée à la première prise de potentiel (112, 112') de l'entrée de tension (110, 110') et où est disposé, entre la première prise de potentiel (122) et la deuxième prise de potentiel (124) de la sortie de tension (120), un condensateur de sortie (126);
une bobine d'accumulation (140) qui est disposée entre la deuxième prise de potentiel (114, 114', 124) de l'entrée de tension (110, 110') et la deuxième prise de potentiel (114, 114', 124) de la sortie de tension (120); et
au moins quatre commutateurs de puissance (131, 132, 133, 134), où un premier des quatre commutateurs de puissance (131) couple de manière commutable la deuxième prise de potentiel (114, 114') de l'entrée de tension (110, 110') à un premier côté de la bobine d'accumulation (140) et où un quatrième des quatre commutateurs de puissance (134) couple de manière commutable la deuxième prise de potentiel (124) de la sortie de tension (120) à la bobine d'accumulation (140),
dans lequel un troisième des quatre commutateurs de puissance (133) couple de manière commutable la deuxième prise de potentiel (114, 114', 124) de l'entrée de tension (110, 110' ou de la sortie de tension (120) à un premier côté de la bobine d'accumulation (140) et où un deuxième des quatre commutateurs de puissance (132) couple de manière commutable la première prise de potentiel (112, 112', 114) de l'entrée de tension (110, 110') et de la sortie de tension (120) à un deuxième côté de la bobine d'accumulation (140);
dans lequel le circuit de conversion de courant (100, 100', 400, 500, 600, 700, 800, 900) présente un moyen de commande,
**caractérisé par le fait que** le moyen de commande est conçu pour commander le premier et le quatrième commutateur de puissance (131, 134) de manière complémentaire par rapport au deuxième et au troisième commutateur de puissance (132, 133);
dans lequel le moyen de commande est conçu pour commander le premier et le deuxième commutateur de puissance (131, 132) par les signaux complémentaires PWM1H et PWM1L, qui sont désignés par PWM1, tandis que le quatrième au troisième commutateur de puissance (134, 133) sont commandés par les signaux PWM2H et PWM2L, qui sont désignés par PWM2, notamment avec le rapport cyclique D1 pour PWM1 et avec le rapport cyclique D2 pour PWM2, selon l'équation suivante:

$$\frac{U_A}{U_E} = \frac{D_1 + D_2 - 1}{D_2}$$

où $U_A$ est la tension entre la deuxième et la première prise de potentiel (122) de la sortie de tension (120) et où $U_E$ est la tension entre la deuxième et la première prise de potentiel (112, 112') de l'entrée de tension (110, 110');
dans lequel le circuit de conversion de courant (100, 100', 400, 500, 600, 700, 800, 900) présente un moyen de commande qui est conçu pour commander les quatre commutateurs de puissance (131, 132, 133, 134) de sorte que
SOIT
le deuxième commutateur de puissance (132) soit commuté avant le quatrième (134) et le quatrième commutateur de puissance (134) soit commuté avant le premier (131) et le premier commutateur de puissance (131) soit commuté avant le troisième (133);
dans lequel le moyen de commande procède à la commande des quatre commutateurs de puissance (131, 132, 133, 134) de sorte que soit remplie la condition suivante:

$$min_x \; l_{L,eff}{}^2(x), x = \{x_1 = \alpha, x_2 = f, D_1 = D_2 = D\}$$

*avec des conditions auxiliaires*

- 

$$max\big(-D, -(1-D)\big) < x_1 \leq 0$$

- 

$$max\big(i_L(t_0), i_L(t_1)\big) \leq -l_{ent,min}$$

- 

$$min\big(i_L(t_2), i_L(t_3)\big) \geq -l_{ent,min}.$$

SOIT

le premier commutateur de puissance (131) soit activé avant le quatrième (134), le quatrième commutateur de puissance (134) soit activé avant le deuxième (132) et le deuxième commutateur de puissance (132) soit activé avant le troisième (133);
dans lequel le moyen de commande procède à la commande des quatre commutateurs de puissance (131, 132, 133, 134) de sorte que soit remplie la condition suivante:

$$min_x \quad l_{L,eff}{}^2(x), x = \{x_1 = \alpha, x_2 = f, D_1 = D_2 = D\}$$

avec des conditions auxiliaires

- 

$$0 \leq x_1 < min\,(D, 1-D)$$

- 

$$max\big(i_L(t_0), i_L(t_1)\big) \leq -l_{ent,min}$$

- 

$$i_L(t_2) \geq l_{ent,min};$$

SOIT

le premier commutateur de puissance (131) soit activé avant le quatrième (134), le quatrième commutateur de puissance (134) soit activé avant le troisième (133) et le troisième commutateur de puissance (133) soit activé avant le deuxième (132);
dans lequel le moyen de commande procède à la commande des quatre commutateurs de puissance (131, 132, 133, 134) de sorte que soient remplies les conditions suivantes:

$$min_x \; l_{L,eff}{}^2(x), x = \{x_1 = \alpha, x_2 = f\}$$

avec des conditions auxiliaires

$$0 \leq x_1 \leq D_1 - D_2$$

$$i_L(t_1) \leq -l_{ent,min}$$

$$i_L(t_2) \geq l_{ent,min}$$

SOIT

le quatrième commutateur de puissance (134) soit activé avant le premier (131), le premier commutateur de puissance (131) soit activé avant le deuxième (132) et le deuxième commutateur de puissance (132) soit activé avant le troisième (133);

dans lequel le moyen de commande procède à la commande des quatre commutateurs de puissance (131, 132, 133, 134) de sorte que soit remplie la condition suivante:

$$min_x \, l_{L,eff}{}^2(x), x = \{x_1 = \alpha, x_2 = f\}$$

avec des conditions auxiliaires

$$D_1 - D_2 \leq x_1 \leq 0$$

$$max\big(i_L(t_0), i_L(t_1)\big) \leq -l_{ent,min}$$

$$min\big(i_L(t_2), i_L(t_3)\big) \geq l_{ent,min};$$

où $t_0$, $t_1$, $t_2$ sont des moments, $i_L$ représente un courant à travers l'inductance, $l_{L,eff}$ représente une valeur effective du courant de la bobine d'accumulation, $l_{ent,min}$ représente une quantité minimale requise du courant de la bobine d'accumulation, f représente une fréquence de commutation et $\alpha$ représente un déphasage entre les moments de commutation.

2. Circuit de conversion de courant (100, 100', 400, 500, 600, 700, 800, 900) selon la revendication 1, dans lequel le premier commutateur de puissance (131) est commandé de manière complémentaire par rapport au deuxième commutateur de puissance (132) et dans lequel le quatrième commutateur de puissance (134) est commandé de manière complémentaire par rapport au troisième commutateur de puissance (133).

3. Circuit de conversion de courant (100, 100', 400, 500, 600, 700, 800, 900) selon la revendication 2, dans lequel un point de commutation pour la commutation entre le quatrième et le troisième commutateur de puissance (134, 133) est déphasé de α par rapport à un point de commutation entre le premier et le deuxième commutateur de puissance (132).

4. Circuit de conversion de courant (100, 100', 400, 500, 600, 700, 800, 900) selon la revendication 1, dans lequel la durée de l'activation du premier et du quatrième commutateur de puissance (131, 134) est identique et dans lequel la durée de l'activation du deuxième et du troisième commutateur de puissance (132, 133) est identique.

5. Circuit de conversion de courant (100, 100', 400, 500, 600, 700, 800, 900) selon la revendication 1, dans lequel la durée de l'activation du premier (131) et du troisième commutateur de puissance (133) est identique et la durée de l'activation du deuxième (132) et du quatrième commutateur de puissance (134) est identique.

6. Circuit de conversion de courant (100, 100', 400, 500, 600, 700, 800, 900) selon l'une des revendications 1 à 5, dans lequel le moyen de commande est conçu pour moduler le rapport cyclique et pour changer, par modulation du rapport cyclique, en va-et-vient entre un premier et un deuxième mode, dans lequel le circuit de conversion de courant (100, 100', 400, 500, 600, 700, 800, 900) est conçu pour fournir, dans le premier mode, en partant d'une tension continue entre la première et la deuxième prise de potentiel (114, 114') à l'entrée de tension (110, 110'), une tension continue entre la première et la deuxième prise de potentiel (124) à la sortie de tension (120) et dans lequel le circuit de conversion de courant (100, 100', 400, 500, 600, 700, 800, 900) est conçu pour fournir, dans le deuxième mode, en partant d'une tension continue entre la première et la deuxième prise de potentiel (114, 114') à l'entrée de tension (110, 110'), une tension alternative entre la première et la deuxième prise de potentiel (124) à la sortie de tension (120).

7. Circuit de conversion de courant (100, 100', 400, 500, 600, 700, 800, 900) selon la revendication 1, dans lequel le circuit de conversion de courant (100, 100', 400, 500, 600, 700, 800, 900) présente un autre commutateur de puissance (135) qui couple de manière commutable la première prise de potentiel (112, 112', 122) de l'entrée de tension (110, 110') et de la sortie de tension (120) au premier côté de la bobine d'accumulation (140).

8. Circuit de conversion de courant (100, 100', 400, 500, 600, 700, 800, 900) selon l'une des revendications précédentes, dans lequel le circuit de conversion de courant (100, 100', 400, 500, 600, 700, 800, 900) présente un cinquième et un sixième commutateur de puissance (135", 136") qui sont couplés au quatrième commutateur de puissance (134) de sorte que le quatrième commutateur de puissance (134) soit couplé de manière commutable, par l'intermédiaire du cinquième commutateur de puissance (135", 136"), à la deuxième prise de potentiel (124) de la sortie de tension (120) et soit couplé de manière commutable, par l'intermédiaire du sixième commutateur de puissance (135", 136"), à la première prise de potentiel (122) de la sortie de tension (120).

9. Circuit de conversion de courant (100, 100', 400, 500, 600, 700, 800, 900) selon la revendication 8, dans lequel le circuit de conversion de courant (100, 100', 400, 500, 600, 700, 800, 900) présente un moyen de commande qui est conçu pour commander le premier et le quatrième commutateur de puissance (131, 134) de manière complémentaire au deuxième et au troisième commutateur de puissance (132, 133), tandis que le cinquième commutateur de puissance (135") est fermé et le sixième commutateur de puissance (136") est ouvert, de sorte que puisse être réglé un rapport de transmission de -∞ à 1.

10. Circuit de conversion de courant (100, 100', 400, 500, 600, 700, 800, 900) selon l'une des revendications 1 à 9, dans lequel le circuit de conversion de courant (100, 100', 400, 500, 600, 700, 800, 900) présente un cinquième et un sixième commutateur de puissance (136") qui sont couplés au premier commutateur de puissance (131) de sorte que le premier commutateur de puissance (131) puisse être couplé, par l'intermédiaire du cinquième commutateur de puissance (135"), à la deuxième prise de potentiel (114, 114') de l'entrée de tension (110, 110') et que le premier commutateur de puissance (131) puisse être couplé, par l'intermédiaire du sixième commutateur de puissance (136"), à la première prise de potentiel ( 112, 112') de l'entrée de tension (110, 110').

11. Circuit de conversion de courant (100, 100', 400, 500, 600, 700, 800, 900) selon la revendication 10, dans lequel le circuit de conversion de courant (100, 100', 400, 500, 600, 700, 800, 900) présente un moyen de commande qui est conçu pour commander les quatre commutateurs de puissance (131, 132, 133, 134) de sorte que le premier et le quatrième commutateur de puissance (131, 134) soient commutés de manière complémentaire par rapport au troisième (133) et au deuxième commutateur de puissance (132), tandis que le cinquième commutateur de puissance (135") est fermé et le sixième commutateur de puissance (136") est ouvert, de sorte que le rapport de transmission puisse être réglé de -∞ à 1.

**12.** Circuit de conversion de courant triphasé (100, 100', 400, 500, 600, 700, 800, 900) avec trois circuits de conversion de courant (100, 100', 400, 500, 600, 700, 800, 900) selon une des revendications précédentes, qui est connecté en parallèle de sorte que toutes les premières prises de potentiel (122) des entrées de tension soient connectées entre elles et que toutes les premières prises de potentiel (122) des sorties de tension soient connectées entre elles, dans lequel les premières prises de potentiel (122) des sorties de tension forment conducteur neutre (422), dans lequel toutes les deuxièmes prises de potentiel (114, 114', 124) des entrées de tension sont connectées entre elles et dans lequel chaque deuxième prise de potentiel (114, 114', 124) des sorties de tension forme une phase (424a, 424b, 424c).

**13.** Circuit de conversion de courant triphasé (100, 100', 400, 500, 600, 700, 800, 900) avec un circuit de conversion de courant (100, 100', 400, 500, 600, 700, 800, 900) selon une des revendications 1 à 11, qui est élargi de deux autres trajets (451), dans lequel chaque trajet (451) présente une sortie de tension (120) avec une deuxième prise de potentiel (124) et un condensateur de sortie (126) et dans lequel chaque trajet (451) présente une bobine d'accumulation (140) qui est couplée, par un premier côté, aux autres bobines d'accumulation (140) et, par un deuxième côté, par l'intermédiaire d'un troisième commutateur de puissance respectif (133), à la deuxième prise de potentiel (114, 114') de l'entrée de tension (110, 110'),
dans lequel chaque trajet (451) présente un quatrième commutateur de puissance (134) entre la bobine d'accumulation (140) et la deuxième prise de potentiel (124) de la sortie de tension (120), dans lequel chacune des trois deuxièmes prises de potentiel (124) des trois sorties de tension forme une phase (424a, 424b, 424c).

**14.** Procédé permettant de commander un circuit de conversion de courant (100, 100', 400, 500, 600, 700, 800, 900) selon l'une des revendications 1 à 13, dans lequel les quatre commutateurs de puissance (131, 132, 133, 134) sont commandés de manière indépendante l'un de l'autre de sorte qu'au moins deux commutateurs de puissance soient connectés de manière complémentaire; et

que le premier et le deuxième commutateur de puissance (131, 132) soient commandés par les signaux complémentaires PWM1H et PWM1L, qui sont désignés par PWM1, tandis que le quatrième au troisième commutateur de puissance (134, 133) sont commandés par les signaux PWM2H et PWM2L, qui sont désignés par PWM2, notamment avec le rapport cyclique D1 pour PWM1 et avec le rapport cyclique D2 pour PWM2, selon l'équation suivante:

$$\frac{U_A}{U_E} = \frac{D_1 + D_2 - 1}{D_2}$$

où $U_A$ est la tension entre la deuxième et la première prise de potentiel (122) de la sortie de tension (120) et où $U_E$ est la tension entre la deuxième et la première prise de potentiel (112, 112') de l'entrée de tension (110, 110');
dans lequel la commande des quatre commutateurs de puissance (131, 132, 133, 134) a lieu de sorte que SOIT

le deuxième commutateur de puissance (132) soit commuté avant le quatrième (134) et le quatrième commutateur de puissance (134) soit commuté avant le premier (131) et le premier commutateur de puissance (131) soit commuté avant le troisième (133);
dans lequel le moyen de commande procède à la commande des quatre commutateurs de puissance (131, 132, 133, 134) de sorte que soit remplie la condition suivante:

$$min_x \; l_{L,eff}^{\;2}(x), x = \{x_1 = \alpha, x_2 = f, \boldsymbol{D_1 = D_2 = D}\}$$

*avec des conditions auxiliaires*

- 

$$max\bigl(-D, -(1-D)\bigr) < x_1 \leq 0$$

-

$$max\big(i_L(t_0), i_L(t_1)\big) \leq -l_{ent,min}$$

- 

$$min\big(i_L(t_2), i_L(t_3)\big) \geq -l_{ent,min}.$$

SOIT

le premier commutateur de puissance (131) soit activé avant le quatrième (134), le quatrième commutateur de puissance (134) soit activé avant le deuxième (132) et le deuxième commutateur de puissance (132) soit activé avant le troisième (133);

dans lequel le moyen de commande procède à la commande des quatre commutateurs de puissance (131, 132, 133, 134) de sorte que soit remplie la condition suivante:

$$min_x \quad l_{L,eff}^2(x), x = \{x_1 = \alpha, x_2 = f, D_1 = D_2 = D\}$$

avec des conditions auxiliaires

- 

$$0 \leq x_1 < \min(D, 1 - D)$$

- 

$$max\big(i_L(t_0), i_L(t_1)\big) \leq -l_{ent,min}$$

- 

$$i_L(t_2) \geq l_{ent,min};$$

SOIT

le premier commutateur de puissance (131) soit activé avant le quatrième (134), le quatrième commutateur de puissance (134) soit activé avant le troisième (133) et le troisième commutateur de puissance (133) soit activé avant le deuxième (132);

dans lequel le moyen de commande procède à la commande des quatre commutateurs de puissance (131, 132, 133, 134) de sorte que soient remplies les conditions suivantes:

$$min_x \, l_{L,eff}^2(x), x = \{x_1 = \alpha, x_2 = f\}$$

avec des conditions auxiliaires

- 

$$0 \leq x_1 \leq D_1 - D_2$$

- 

$$i_L(t_1) \leq -l_{ent,min}$$

•

$$i_L(t_2) \geq l_{ent,min}$$

SOIT

le quatrième commutateur de puissance (134) soit activé avant le premier (131), le premier commutateur de puissance (131) soit activé avant le deuxième (132) et le deuxième commutateur de puissance (132) soit activé avant le troisième (133);
dans lequel le moyen de commande procède à la commande des quatre commutateurs de puissance (131, 132, 133, 134) de sorte que soit remplie la condition suivante:

$$\bullet \quad min_x \ l_{L,eff}{}^2(x), x = \{x_1 = \alpha, x_2 = f\}$$

avec des conditions auxiliaires

•

$$D_1 - D_2 \leq x_1 \leq 0$$

•

$$max\big(i_L(t_0), i_L(t_1)\big) \leq -l_{ent,min}$$

•

$$min\big(i_L(t_2), i_L(t_3)\big) \geq l_{ent,min};$$

où $t_0$, $t_1$, $t_2$ sont des moments de commutation, $i_L$ représente un courant à travers l'inductance, $I_{L,eff}$ représente une valeur effective du courant de la bobine d'accumulation, $I_{ent,min}$ représente une quantité minimale requise du courant de la bobine d'accumulation, f représente une fréquence de commutation et $\alpha$ représente un déphasage entre les moments de commutation.

**15.** Programme d'ordinateur comportant des instructions qui amènent le dispositif selon la revendication 1 à réaliser les étapes de procédé selon la revendication 14.

Fig. 1a

Fig. 1b

Fig. 1c

Ausgangsspannung / V

Ausgangsstrom / A

Speicherdrosselstrom / A

t/s

Fig. 1d

Fig. 1e

Fig. 1f

Fig. 1g

Fig. 1h

Fig. 2a

Fig. 2b

Stromfluss im Zeitraum $t_1$ bis $t_2$

Stromfluss im Zeitraum $t_2$ bis $t_3$

Stromfluss im Zeitraum $t_3$ bis $t_4$

Stromfluss im Zeitraum $t_4$ bis $t_5$

Fig. 2c-1

Stromfluss im Zeitraum $t_5$ bis $t_6$

Stromfluss im Zeitraum $t_6$ bis $t_7$

Stromfluss im Zeitraum $t_7$ bis $t_8$

Stromfluss im Zeitraum $t_8$ bis $t_9$

| Fig. 2c-2 | Fig. 2c-2A |
| | Fig. 2c-2B |
| | Fig. 2c-2C |

Fig. 2c-2A

EP 3 563 475 B1

Stromfluss im Zeitraum $t_9$ bis $t_{10}$

Stromfluss im Zeitraum $t_{10}$ bis $t_{11}$

Stromfluss im Zeitraum $t_{11}$ bis $t_{12}$

Stromfluss im Zeitraum $t_{12}$ bis $t_{13}$

| Fig. 2c-2 | Fig. 2c-2A |
| | Fig. 2c-2B |
| | Fig. 2c-2C |

Fig. 2c-2B

EP 3 563 475 B1

Stromfluss im Zeitraum $t_{13}$ bis $t_{14}$

Stromfluss im Zeitraum $t_{14}$ bis $t_1$

| | Fig. 2c-2A |
|---|---|
| Fig. 2c-2 | Fig. 2c-2B |
| | Fig. 2c-2C |

Fig. 2c-2C

Fig. 2d

Fig. 2e

Fig. 2f

Fig. 2g

Fig. 2h

Fig. 2i

PWM1H für $S_1$　　　　PWM1L für $S_2$

$t_{S1}$　　　$t_{S2}$

$t_{diff}$　　　T

PWM2H für $S_4$　　　PWM2L für $S_3$

$t_{S4}$　　　$t_{S3}$

T　　　$t_{diff}$

$i_L$

$t_1$　$t_2$　$t_3$　$t_4$　$t_1$　$t_2$

T

Fig. 2j

PWM1H für $S_1$     PWM1L für $S_2$

$t_{S1}$     $t_{S2}$

T

PWM2H für $S_4$     PWM2L für $S_3$

$i_L$

$t_1$   $t_2$   $t_3$   $t_4$   $t_1$

Fig. 2k

PWM1H für $S_1$     PWM12L für $S_2$

PWM2H für $S_4$     PWM2L für $S_3$

$t_{S4}$     $t_{S3}$

T

$i_L$

$t_1$   $t_2$   $t_3$   $t_4$   $t_1$

Fig. 2l

Fig. 3a

Legend:
- in Schaltern (Durchlass) bei $U_E$ = 360 V
- im Kern der Drossel bei $U_E$ = 360 V
- im Draht der Drossel bei $U_E$ = 360 V
- im Eingangskondensator bei $U_E$ = 360 V
- im Ausgangskondensator bei $U_E$ = 360 V

Axes: Verluste / W; $I_A$ / A; $U_A$ / V

U$_A$ = 360 V

99,5
99,0
98,5
98,0
97,5
97,0

350
300
250
200
150
100
0

U$_A$ / V

1
2
3
4
5

I$_A$ / A

100
99,5
99,0
98,5
98,0
97,5
97,0
96,5

Wirkungsgrad / %

Fig. 3b

Fig. 3c

Fig. 3d

Fig. 3e

Fig. 4a

Fig. 4b

EP 3 563 475 B1

500

S₃ ⌇133

114 S₁ L iₗ S₄ 124

110 U_E C_E 131 140 132 S₂ 134 C_A U_A 120

112 122

## Fig. 5a

U_A/U_E

1
0,5
0
0,5 1 D

## Fig. 5b

Fig. 6a

Fig. 6b

Fig. 6c

EP 3 563 475 B1

Fig. 7a

Fig. 7b

Fig. 7c

800

124'

$S_3$

100

$S_1$    L    $i_L$    $S_4$

135'  $S_5$

$C_A$    $U_A$

120'

$U_E$    $C_E$    $S_2$    134

136'  $S_6$

122'

## Fig. 8a

$U_A/U_E$

1

0,5    D

0

1

## Fig. 8b

$U_A/U_E$

1

0    0,5    1    D

## Fig. 8c

Fig. 9a

Fig. 9b

Fig. 9c

Fig. 10a

EP 3 563 475 B1

α1, α2, α3, oder α4

$U_A$

t

α5: Tiefsetzmodus

α5: Inverswandlermodus

Fig. 10b

α1, α2, α3, oder α4

$U_A$

t

α5: Inverswandlermodus

Fig. 10c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015070952 A1
- US 2012326691 A1
- EP 1381135 A1
- US 2013024613 A1
- US 2005110471 A1
- CN 103326576 A
- JP 2011013057 A